(19) Europäisches Patentamt / European Patent Office / Office européen des brevets

(11) **EP 4 060 284 B1**

(12) **EUROPEAN PATENT SPECIFICATION**

(45) Date of publication and mention of the grant of the patent:
**04.03.2026 Bulletin 2026/10**

(21) Application number: **20887236.6**

(22) Date of filing: **29.09.2020**

(51) International Patent Classification (IPC):
*G01S 17/18* $^{(2020.01)}$    *G01S 7/4865* $^{(2020.01)}$
*G01S 17/894* $^{(2020.01)}$    *G01S 7/487* $^{(2006.01)}$

(52) Cooperative Patent Classification (CPC):
**G01S 17/18; G01S 7/4865; G01S 7/4873; G01S 17/894**

(86) International application number:
**PCT/JP2020/037038**

(87) International publication number:
**WO 2021/095382 (20.05.2021 Gazette 2021/20)**

(54) **SENSING DEVICE AND INFORMATION PROCESSING DEVICE**

SENSORVORRICHTUNG UND INFORMATIONSVERARBEITUNGSVORRICHTUNG

DISPOSITIF DE DÉTECTION ET DISPOSITIF DE TRAITEMENT D'INFORMATIONS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.11.2019 JP 2019206918**

(43) Date of publication of application:
**21.09.2022 Bulletin 2022/38**

(60) Divisional application:
**26154021.5**

(73) Proprietor: **Panasonic Intellectual Property Management Co., Ltd.**
**Osaka-shi, Osaka 540-6207 (JP)**

(72) Inventors:
• **KATO, Yumiko**
  **Osaka-shi, Osaka (JP)**
• **INADA, Yasuhisa**
  **Osaka-shi, Osaka (JP)**
• **SUGIO, Toshiyasu**
  **Osaka-shi, Osaka (JP)**
• **IGUCHI, Noritaka**
  **Osaka-shi, Osaka (JP)**

(74) Representative: **Grünecker Patent- und Rechtsanwälte**
**PartG mbB**
**Leopoldstraße 4**
**80802 München (DE)**

(56) References cited:
JP-A- 2016 017 799      JP-A- 2018 155 709
US-A1- 2018 045 816      US-A1- 2019 012 801
US-A1- 2019 129 034

**Description**

Technical Field

The present disclosure relates to a sensing device and an information processing apparatus.

Background Art

Heretofore, various devices have been proposed that obtain distance data of an object by illuminating the object with light and detecting reflected light from the object. Distance data for a target scene is converted into, for example, data of three-dimensional point clouds (point clouds). The point cloud data is, typically, data in which distribution of points where an object is present in a scene is represented by three-dimensional coordinates.

PTL 1 discloses a system that obtains information of a distance to an object by scanning space with a light beam and detecting reflected light from the object by using an optical sensor. The system generates and outputs information in which measurement times are associated with points in the point cloud data.

PTL 2 discloses an apparatus that measures a distance to a structure present in the surroundings of a vehicle by using a laser scanner and that generates three-dimensional point cloud data on the basis of data of the distance.

PTL 3 discloses a flash lidar system that is incorporated into a vehicle to measure a distance to an object by using a ToF (Time of Flight) technique.

PTL 4 discloses an apparatus that generates distance data by scanning space with a light beam and that receives reflected light from an object by using an image sensor.

PTL 5 relates to range image generation. A light emitting unit emits light toward an object at different light emission intensities. A light receiving unit captures an image of the object by receiving light including reflected light from the object and calculates a light exposure amount for each pixel. A range calculating unit calculates a range to the object by replacing a light exposure amount at a first light emission intensity by a light exposure amount at a second light emission intensity in a predetermined case and generates a range image.

Citation List

Patent Literature

PTL 1: Japanese Unexamined Patent Application Publication No. 2009-294128
PTL 2: Japanese Unexamined Patent Application Publication No. 2018-185228
PTL 3: Japanese Unexamined Patent Application Publication No. 2019-95452
PTL 4: U.S. Patent Application Publication No. 2018/0217258
PTL 5: US 2019/129034 A1

Summary of Invention

Technical Problem

One aspect of the present disclosure provides a novel sensing device that outputs data needed for distance measurement and a novel information processing apparatus that processes data output from the sensing device.

Solution to Problem

The invention is defined by the features of the independent claims.
A sensing device according to claim 1 is provided.
An information processing apparatus according to claim 10 is provided.

Advantageous Effects of Invention

According to one aspect of the present disclosure, the information processing apparatus can generate higher-accuracy distance data, based on the data output from the sensing device.

Additional benefits and advantages of various aspects included in the present disclosure will become apparent from the specification and drawings. The benefits and/or advantages may be individually provided by the various aspects or some features in the aspects disclosed in the specification and drawings, which need not all be provided in order to obtain one or more of such benefits and/or advantages.

Brief Description of Drawings

[Fig. 1] Fig. 1 is a diagram for describing an example of a distance measurement method according to an indirect ToF method.

[Fig. 2] Fig. 2 is a diagram for describing an example of the distance measurement method according to the indirect ToF method.

[Fig. 3] Fig. 3 is a view illustrating an example of three images for respective exposure periods and a distance image generated from data of the images.

[Fig. 4A] Fig. 4A is a block diagram illustrating a physical configuration of a system in a first embodiment, which is not according to the invention but useful for understanding it.

[Fig. 4B] Fig. 4B is a block diagram illustrating a functional configuration of the system in a first embodiment, which is not according to the invention but useful for understanding it.

[Fig. 5] Fig. 5 is a flowchart illustrating operations of a distance measurement apparatus.

[Fig. 6] Fig. 6 is a time chart illustrating an example of operations of projection and exposure performed by the distance measurement apparatus.

[Fig. 7A] Fig. 7A is a first diagram illustrating an example of an output format of data output from the distance measurement apparatus.

[Fig. 7B] Fig. 7B is a second diagram illustrating an example of the output format of the data output from the distance measurement apparatus.

[Fig. 8] Fig. 8 is a flowchart illustrating operations of a control apparatus in the first embodiment.

[Fig. 9] Fig. 9 is a table illustrating an example of correspondence relationships between distances and largest pixel values.

[Fig. 10] Fig. 10 is a view illustrating one example of a light source.

[Fig. 11A] Fig. 11A is a perspective view schematically illustrating an example of a light source utilizing a reflective waveguide.

[Fig. 11B] Fig. 11B is view schematically illustrating an example of the structure of an optical waveguide element.

[Fig. 11C] Fig. 11C is a diagram schematically illustrating an example of a phase shifter.

[Fig. 12] Fig. 12 is a table illustrating one example of data recorded to a recording medium 170.

[Fig. 13] Fig. 13 is a flowchart illustrating operations of the distance measurement apparatus in a first modification of the first embodiment, which is not according to the invention but useful for understanding it.

[Fig. 14A] Fig. 14A is a first diagram illustrating an example of an output format of data output from the distance measurement apparatus in the first modification of the first embodiment.

[Fig. 14B] Fig. 14B is a second diagram illustrating the example of the output format of the data output from the distance measurement apparatus in the first modification of the first embodiment.

[Fig. 15A] Fig. 15A is a first diagram illustrating another example of the output format of the data output from the distance measurement apparatus.

[Fig. 15B] Fig. 15B is a second diagram illustrating the other example of the output format of the data output from the distance measurement apparatus.

[Fig. 16A] Fig. 16A is a first diagram illustrating a further example of the output format of the data output from the distance measurement apparatus.

[Fig. 16B] Fig. 16B is a second diagram illustrating the further example of the output format of the data output from the distance measurement apparatus.

[Fig. 17A] Fig. 17A is a first diagram illustrating a further example of the output format of the data output from the distance measurement apparatus.

[Fig. 17B] Fig. 17B is a second diagram illustrating the further example of the output format of the data output from the distance measurement apparatus.

[Fig. 18] Fig. 18 is a diagram illustrating a functional configuration of a system in a second embodiment, which is according to the invention.

[Fig. 19] Fig. 19 is a flowchart illustrating operations of a processing circuit in the distance measurement apparatus in the second embodiment.

[Fig. 20A] Fig. 20A is a first diagram illustrating an example of the format of distance image data output from the distance measurement apparatus.

[Fig. 20B] Fig. 20B is a second diagram illustrating the example of the format of the distance image data output from the distance measurement apparatus.

[Fig. 21A] Fig. 21A is a first diagram illustrating an example of the format of luminance image data output from the distance measurement apparatus.

[Fig. 21B] Fig. 21B is a second diagram illustrating the example of the format of the luminance image data output from the distance measurement apparatus.

[Fig. 22A] Fig. 22A is a first diagram illustrating another example of the format of the luminance image data output from the distance measurement apparatus.

[Fig. 22B] Fig. 22B is a second diagram illustrating the other example of the format of the luminance image data output from the distance measurement apparatus.

[Fig. 23] Fig. 23 is a flowchart illustrating operations of the control apparatus in the second embodiment.

[Fig. 24] Fig. 24 is a flowchart illustrating operations of the distance measurement apparatus in a first modification of the second embodiment, which is according to the invention.

[Fig. 25] Fig. 25 is a flowchart illustrating operations of the distance measurement apparatus in a second modification of the second embodiment, whose distance measurement apparatus is according to the invention and whose control apparatus is not according to the invention,

[Fig. 26] Fig. 26 is a table schematically illustrating one example of data recorded to a recording medium in a third modification of the second embodiment, which is according to the invention.

[Fig. 27] Fig. 27 is a flowchart illustrating operations of the distance measurement apparatus in the third modification of the second embodiment.

[Fig. 28] Fig. 28 is a table illustrating one example of the data recorded to the recording medium in the third modification of the second embodiment.

[Fig. 29A] Fig. 29A is a diagram illustrating one example of the format of output data in the third modification of the second embodiment.

[Fig. 29B] Fig. 29B is a diagram illustrating one example of the format of the output data in third modification of the second embodiment.

[Fig. 30] Fig. 30 is a flowchart illustrating an example of processing executed by the control apparatus in the third modification of the second embodiment.

[Fig. 31] Fig. 31 is a diagram illustrating one example of the format of instruction signals.

[Fig. 32] Fig. 32 is a flowchart illustrating another example of operations of the distance measurement apparatus.

[Fig. 33A] Fig. 33A is a first diagram illustrating one example of an output format.

[Fig. 33B] Fig. 33B is a second diagram illustrating one example of the output format.

[Fig. 34] Fig. 34 is a flowchart illustrating another example of operations of the control apparatus.

Description of Embodiments

In the present disclosure, all or a part of circuits, units, apparatuses, members, or portions or all or a part of functional blocks in the block diagrams may be implemented by, for example, one or more electronic circuits including a semiconductor device, a semiconductor integrated circuit (IC), or an LSI (large scale integration). The LSI or IC may be integrated into one chip or also may be constituted by combining a plurality of chips. For example, functional blocks other than a storage element may be integrated into one chip. Although the name used here is an LSI or IC, it may also be called a system LSI, a VLSI (very large scale integration), or a ULSI (ultra large scale integration) depending on the degree of integration. A field programmable gate array (FPGA) that can be programmed after manufacturing an LSI or a reconfigurable logic device that allows reconfiguration of the connection relationship inside the LSI or setup of circuit cells inside the LSI can also be used for the same purpose.

In addition, functions or operations of all or a part of circuits, units, apparatuses, members, or portions can be executed by software processing. In this case, the software is recorded on one or more non-transitory recording media, such as a ROM, an optical disk, or a hard disk drive, and when the software is executed by a processing device (a processor), the processing device (the processor) and peripheral devices execute the functions specified by the software. A system or an apparatus may comprise one or more non-transitory recording media on which the software is recorded, a processing device (a processor), and necessary hardware devices, for example, an interface.

<Background>

Before embodiments of the present disclosure are described, a description will be given of an example of a distance measurement method that may be used in the embodiments of the present disclosure.

Some methods are available as a distance measurement method for calculating a distance to an object by using a light source and a light-receiving device. For example, ToF techniques, such as a direct ToF method and an indirect ToF method, are generally used. Of the techniques, the direct ToF method is a method for calculating a distance to an object by directly measuring time from when light is emitted until the light is returned. On the other hand, the indirect ToF method is a method for performing measurement by converting time from when light is emitted until the light is returned into light intensities. These distance measurement methods use a light source that emits a light pulse and a light-receiving device comprising one or more light-receiving elements. An example of a distance measurement method according to the indirect ToF method will be described below as one example of a distance measurement method.

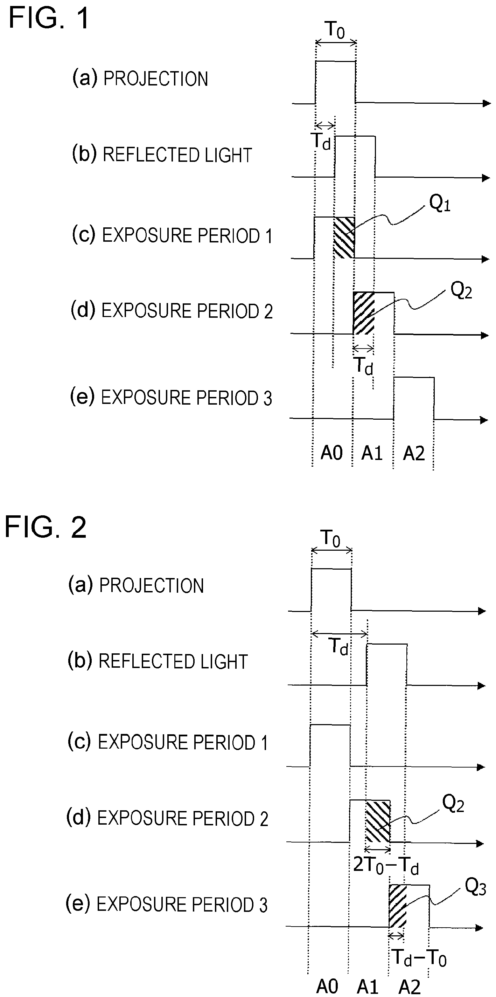

Figs. 1 and 2 are diagrams for describing an example of a distance measurement method according to the indirect ToF method. In Figs. 1 and 2, rectangular portions represent respective periods of projection of a light pulse, reflected light arrival at a light-receiving element, and three rounds of exposure. The horizontal axes represent time. Fig. 1 illustrates an example when a light pulse is reflected from a relatively near object. Fig. 2 illustrates an example when a light pulse is reflected from a relatively distant object. In Figs. 1 and 2, waveform (a) indicates timing at which a light pulse is emitted from a light source, waveform (b) indicates a period in which reflected light of the light pulse arrives at a light-receiving element, waveform (c) indicates a first exposure period, waveform (d) indicates a second exposure period, and waveform (e) indicates a third exposure period. The duration of the light pulse for distance measurement is represented by T0, and a time from when the light pulse is emitted until the light pulse is received, that is, flight time, is represented by Td.

In this example, the first exposure period is started simultaneously with the start of light projection, and the first exposure period ends simultaneously with the end of the light projection. The second exposure period starts simultaneously with the end of the light projection and ends when the same amount of time as the duration T0 of the light pulse, that is, the same amount of time as the first exposure period, passes. The third exposure period starts simultaneously with the end of the second exposure period and ends when the same amount of time as the duration T0 of the light pulse, that is, the same amount of time as the first exposure period, passes.

In the first exposure period, of the reflected light, light that returns early is photoelectrically converted, and resulting charge is accumulated. Q1 represents energy of the light photoelectrically converted during the first exposure period. This energy Q1 is proportional to the amount of charge accumulated during the first exposure period. In the second exposure period, of the reflected light, light that arrives before the amount of time T0 passes is photoelectrically converted after the first exposure period ends, and resulting charge is accumulated. Q2 represents energy of the light photoelectrically converted during the second exposure period. This energy Q2 is proportional to the amount of charge accumulated during the second exposure period. In the third exposure period, of the reflected light that arrives before the amount of time T0 passes is photoelectrically converted after the second exposure period ends, and resulting charge is accumulated. Q3 represents energy of the light photoelectrically converted during the third exposure period. This energy Q3 is proportional to the amount of charge accumulated during the third exposure period.

The length of the first exposure period is equal to the duration T0 of the light pulse, and thus, in the example illustrated in Fig. 1, the duration of the reflected light received in the second exposure period is equal to the flight time Td. In the example illustrated in Fig. 1, since the flight time Td is shorter than the duration T0 of the pulse, all the reflected light returns to the light-receiving element before the ending time of the second exposure period. Accordingly, the reflected light is not detected in the third exposure period. The charge accumulated in the third exposure period indicates noise due to background light. In contrast, in the first exposure period, charge generated through reception of a reflected light pulse, in addition to the background light, is accumulated. In the second exposure period, similarly, charge generated through reception of a reflected light pulse, in addition to the background light, is accumulated.

An output voltage of the light-receiving element owing to the charge accumulated in the first exposure period is represented by V1, an output voltage of the light-receiving element owing to the charge accumulated in the second exposure period is represented by V2, and an output voltage of the light-receiving element owing to the charge accumulated in the third exposure period is represented by V3. As in the example in Fig. 1, when the reflected light is detected in the first exposure period and the second exposure period and is not detected in the third exposure period, V1>V3 holds. In the example illustrated in Fig. 1, since the durations of the three exposure periods are equal to each other, it is assumed that the background noise does not vary in all the exposure periods. In this case, the output voltage V3 in the third exposure period in which the reflected light is not detected can be assumed to be a voltage $V_{BG}$ of the background noise. In the first exposure period and the second exposure period, the charge due to the reflected light and the charge due to the background noise are both accumulated. Thus, a voltage $V_{Q1}$ due to the charge accumulated through reception of the reflected light in the first exposure period can be represented by equation (1) below:

$$V_{Q1} = V1 - V_{BG} \tag{1}$$

Similarly, a voltage $V_{Q2}$ due to the charge accumulated through reception of the reflected light in the second exposure period can be represented by equation (2) below:

$$V_{Q2} = V2\text{-}V_{BG} \qquad (2)$$

Since the duration of the first exposure period and the duration of the second exposure period are equal to each other, the ratio of Q1 to Q2 is equal to the ratio of T0-Td to Td. That is, the ratio of T0-Td to Td is equal to the ratio of $V_{Q1}$ to $V_{Q2}$. Accordingly, Td can be represented by equation (3) below:
[Equation 1]

$$Td = \frac{V_{Q2}}{V_{Q1} + V_{Q2}} \times T0 \qquad (3)$$

Based on equations (1), (2), and (3), Td can be represented by equation (4) below:
[Equation 2]

$$Td = \frac{V2 - V_{BG}}{(V2 - V_{BG}) + (V1 - V_{BG})} \times T0 \qquad (4)$$

Meanwhile, when Td is longer than T0, and the reflected light does not return in the first exposure period and returns in the second exposure period and the third exposure period, as in the example illustrated in Fig. 2, V1<V3 holds. In this case, only charge due to background noise is accumulated in the first exposure period. Meanwhile, charge due to reception of the reflected light pulse and charge due to the background noise are both accumulated in one of or both the second exposure period and the third exposure period. In this case, Td can be represented by equation (5) below:
[Equation 3]

$$Td = \left(1 + \frac{V3 - V_{BG}}{(V3 - V_{BG}) + (V2 - V_{BG})}\right) \times T0 \qquad (5)$$

A distance D can be determined according to an arithmetic operation "D = c×Td/2" (c is a speed of light) by using the flight time Td calculated in equation (4) or (5).

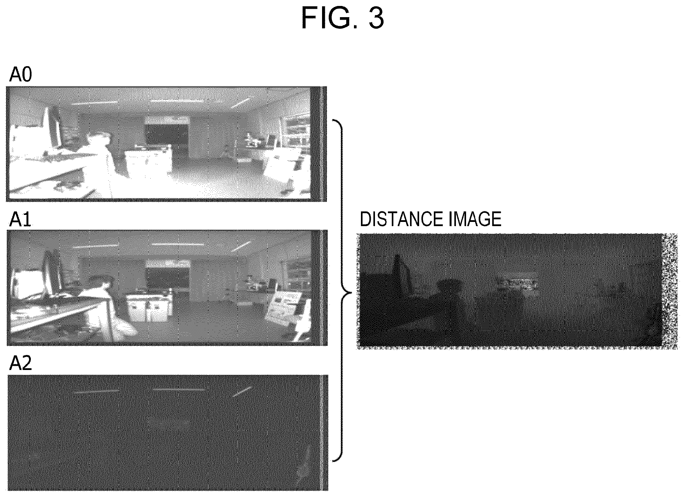

Fig. 3 is a view illustrating an example of three images generated based on signals of the charge accumulated in the respective periods A0, A1, and A2 illustrated in Fig. 1 and a distance image generated from data of the images. A light-receiving device in this example is an image sensor comprising an array of light-receiving elements arrayed two-dimensionally. Two-dimensional images are generated for the respective exposure periods, based on signals of charge accumulated in the light-receiving elements. In the example illustrated in Fig. 3, the reflected light pulse is detected in the first exposure period and the second exposure period, and only noise components due to background light are detected in the third exposure period. Distances for respective pixels are determined using pixel values obtained in each of the first to third exposure periods, in accordance with the above-described arithmetic operation.

When there is noise due to background light other than the reflected light pulse, as described above, the pixel values of the pixels include noise components. In equations (4) and (5) noted above, the charge accumulated in the light-receiving elements owing to noise is assumed to be equal in all the exposure periods. However, in practice, noise in the pixels varies in each exposure period. There are cases in which influences of noise cannot be fully eliminated by merely performing the above-described calculations for the respective pixels.

A distance measurement apparatus generally outputs distance image data, like that illustrated in Fig. 3, or three-dimensional point cloud data as a result of the distance calculation. The distance image data is represented by sets (x, y, d) of position x in a horizontal direction, position y in a vertical direction, and distance d from a reference position and indicates distribution of distances of objects that exist in a scene. The three-dimensional point cloud data is data in which a plurality of points representing distribution of objects in a scene are represented by three-dimensional coordinates. The three-dimensional point cloud data may be generated, for example, through conversion from the distance image data.

In the indirect ToF method, distances are calculated by determining rates of charges accumulated in the light-receiving elements in the respective exposure periods. Thus, in a distance measurement apparatus that outputs the distance image data or the three-dimensional point cloud data, information of reflectances of target objects are lost.

However, there are cases in which the information of reflectances is useful for recognition processing on target objects. For example, such information of the reflectances is, in some cases, useful in a control apparatus that recognizes target objects, based on data transmitted from one or more distance measurement apparatuses, and that controls a vehicle, such as an autonomous car, based on a recognition result. In one example, when a large amount of noise is included in the distance image data or the three-dimensional point cloud data output from the distance measurement apparatus(es), there is a possibility that the accuracy of the recognition can be improved using luminance data in which reflectances at measurement points are reflected.

Based on the above-described consideration, the present inventors have conceived the configurations in the embodiments in the present disclosure described below.

A sensing device according to one embodiment of the present disclosure comprises: a light source; a light-receiving device comprising at least one light-receiving element that performs photoelectric conversion; and a processing circuit that controls the light source and the light-receiving device. The processing circuit causes the light source to emit light to a scene at least once, causes the light-receiving device to receive reflected light in each of a plurality of exposure periods, the reflected light being resulting from the emitted light, generates, based on received-light data from the light-receiving device, luminance data indicating distributions of amounts of reflected light corresponding to the respective exposure periods and used for generating distance data for the scene, and outputs the luminance data and timing data indicating timings of the respective exposure periods.

According to the above-described configuration, the processing circuit generates, based on received-light data from the light-receiving device, luminance data indicating distributions of amounts of reflected light corresponding to the respective exposure periods and used for generating distance data for the scene, and outputs the luminance data and timing data indicating timings of the respective exposure periods. This allows the information processing apparatus that obtains the luminance data and the timing data to generate higher-quality distance image data or three-dimensional point cloud data on the basis of the luminance data and the timing data.

The processing circuit generates the distance data and outputs the distance data and the luminance data through switching therebetween. According to the configuration described above, the mode in which the distance data is output and the mode in which the luminance data and the timing data are output can be switched therebetween, as appropriate. Thus, for example, it is possible to perform flexible control, such as outputting luminance data having a large amount of data, only when necessary.

In accordance with a request from an external apparatus, the processing circuit may output the distance data and the luminance data through switching therebetween. The external apparatus may be, for example, an information processing apparatus that generates distance data or point cloud data integrated based on data output from a plurality of sensing devices.

In accordance with a state of the received-light data, the processing circuit may output the distance data and the luminance data through switching therebetween. The state of the received-light data may include various states, for example, the amount of noise included in the received-light data, the magnitude of respective values included in the received-light data, or the like.

The processing circuit may calculate an amount of noise in the received-light data with respect to at least one of the exposure periods, may output the luminance data when the amount of noise exceeds a threshold, and may output the distance data when the amount of noise does not exceed the threshold. Thus, when the amount of noise in the received-light data is large, and the reliability of the distance data generated by the processing circuit is estimated to be low, the luminance data, instead of the distance data, can be output. The luminance data may be sent to an external information processing apparatus having higher throughput than the processing circuit and be processed by the information processing apparatus. The information processing apparatus can generate higher-quality distance data or point cloud data, based on the luminance data obtained from the sensing device.

The processing circuit may calculate a reflectance, by using the received-light data with respect to at least one of the exposure periods, may output the distance data when the reflectance exceeds a threshold, and may output the luminance data when the reflectance does not exceed a threshold. This makes it possible to perform control such that when the reflectance is high, and highly reliable distance data can be generated, the distance data is output, and otherwise the luminance data is output.

The processing circuit may repeat frame operations. Each of the frame operations may include: causing the light source to emit the light to the scene: causing the light-receiving device to generate the received-light data for each of the exposure periods; and outputting at least one selected from the group consisting of the distance data and a pair of the luminance data and the timing data. With such a configuration, the distance data or the pair of the luminance data and the timing data can be, for example, repeatedly output at short time intervals.

The processing circuit may determine, for each frame operation, which of the distance data and the pair of the luminance data and the timing data is to be output. This makes it possible to output, for each frame operation, an appropriate one of or both the distance data and the pair of the luminance data and the timing data.

When the luminance data or the distance data is to be output, the processing circuit may add an identifier indicating which data of the luminance data and the distance data is included and may output the luminance data or the distance data. This allows another apparatus that performs processing based on the luminance data or the distance data to easily determine which of the luminance data and the distance data is included in data that is obtained.

The processing circuit may output the distance data and the luminance data through switching therebetween for each of a plurality of regions included in the scene. This makes it possible to perform control such that, with respect to only a partial region in a scene, the luminance data is output with respect to the region when the reliability of the distance data is low.

When the processing circuit switches between the output of the distance data and the output of the pair of the luminance data and the timing data, the processing circuit may output data of fixed values that are common to the frame operations.

An information processing apparatus according to another embodiment of the present disclosure comprises a memory and a processing circuit. The processing circuit obtains, from a sensing device, luminance data indicating distributions of amounts of reflected light from a scene, the reflected light being received in respective exposure periods, and timing data indicating timings of the respective exposure periods, records the luminance data and the timing data to the memory, performs image processing on the luminance data, and generates first distance data, based on the luminance data after the image processing and the timing data.

According to the above-described configuration, the processing circuit performs image processing on the luminance data and generates the first distance data, based on the luminance data after the image processing and the timing data. The image processing may include, for example, processing for reducing the amount of noise in the luminance data.

The processing circuit transmits, to the sensing device, a signal for requesting switching between output of second distance data and output of the luminance data, the second distance data being generated in the sensing device, based on the luminance data and the timing data.

The processing circuit may further obtain, from the sensing device, identification data indicating which of the second distance data and the luminance data is output, and may switch processing on data output from the sensing device, based on the identification data.

The processing circuit may identify a self-position of the sensing device, and may transmit, to the sensing device, a signal for requesting output of the luminance data, when the self-position of the sensing device satisfies a predetermined condition.

The processing circuit may determine an amount of noise in the luminance data and may transmit, to the sensing device, a signal for requesting output of the luminance data, when the amount of noise is larger than a reference value.

A computer program according to another embodiment of the present disclosure causes a computer to execute operations below:

· causing a light source to emit light to a scene at least once;
· causing the light-receiving device to receive reflected light in each of a plurality of exposure periods, the reflected light being resulting from the emitted light;
· generating, based on received-light data from the light-receiving device, luminance data that indicates distributions of amounts of reflected light corresponding to the respective exposure periods and that are used for generating distance data for the scene;
· outputting the luminance data and timing data indicating timings of the respective exposure periods;
· generating the distance data, and
· outputting the distance data and the luminance data through switching therebetween.

A computer program according to another embodiment of the present disclosure causes a computer to execute operations below:

· obtaining, from a sensing device, luminance data indicating distributions of amounts of reflected light from a scene, the reflected light being received in respective exposure periods, and timing data indicating timings of the respective exposure periods;
· recording the luminance data and the timing data to a memory;
· performing image processing on the luminance data;
· generating first distance data, based on the luminance data after the image processing and the timing data; and
· transmitting, to the sensing device, a signal for requesting switching between output of second distance data and output of the luminance data, the second distance data being generated in the sensing device, based on the luminance data and the timing data.

<First Embodiment, which is not according to the invention>

A description will be given of a system according to an exemplary first embodiment of the present disclosure, which is not according to the invention.

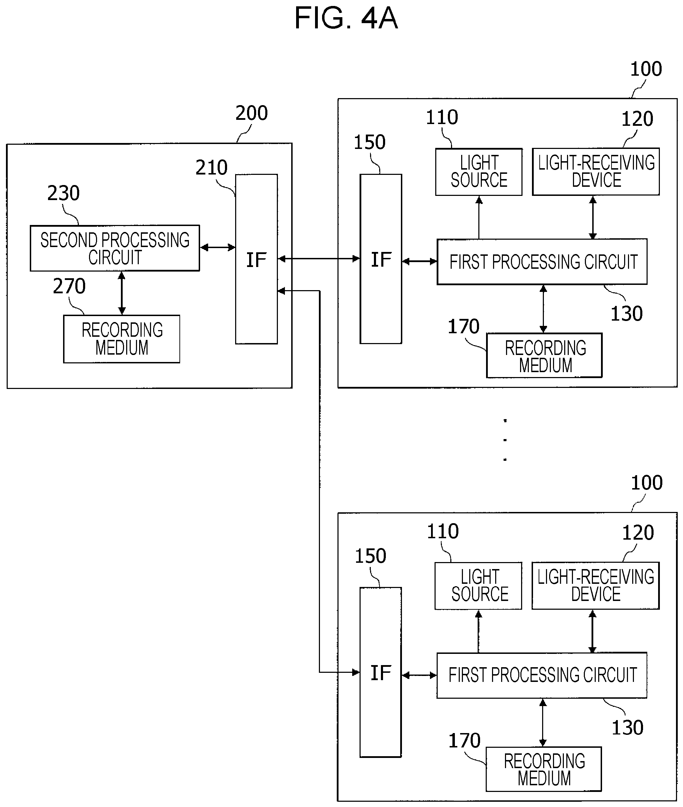

Fig. 4A is a block diagram showing a physical configuration of the system according to the present embodiment. This system comprises a control apparatus 200 and a plurality of distance measurement apparatuses 100. The control apparatus 200 is, for example, an information processing apparatus that controls, for example, operations of a vehicle, such as an autonomous car. Each distance measurement apparatus 100 may be a sensing device mounted on the vehicle. Each distance measurement apparatus 100 is connected to the control apparatus 200 in a wired or wireless manner. Although the system in the present embodiment comprises the plurality of distance measurement apparatuses 100, the number of distance measurement apparatuses 100 may be one.

Each distance measurement apparatus 100 comprises a light source 110, a light-receiving device 120, a first processing circuit 130, a recording medium 170, and an input/output interface (IF) 150. The control apparatus 200 comprises a second processing circuit 230, a recording medium 270, and an input/output interface 210.

The light source 110 emits light to a scene. The light-receiving device 120 includes a sensor that detects light emitted from the light source 110 and reflected by an object. The first processing circuit 130 controls the light source 110 and the light-receiving device 120 to execute operations based on the indirect ToF method described above. However, in the present embodiment, the distance measurement apparatus 100 does not perform distance calculation itself and outputs, for each exposure period, luminance data of measurement points which serves as a source for distance calculation. As described above, an apparatus that does not perform distance calculation and that generates data needed for distance calculation is herein referred to as a "distance measurement apparatus". Each distance measurement apparatus 100 outputs, in addition to luminance data of pixels for each exposure period, time data for identifying starting time and ending time of the exposure period as timing data. These luminance data and time data are sent to the control apparatus 200. By utilizing the luminance data for the respective exposure periods and the timing data, the control apparatus 200 calculates distances of the measurement points by using the above-described arithmetic operation. Based on the calculated distances, the control apparatus 200 can generate a distance image or data of a three-dimensional point cloud. In addition, based on the distance image or the data of the three-dimensional point cloud, the control apparatus 200 can recognize a specific target object in a scene and can control, for example, operations of an actuator, such as an engine, steering, a brake, or an accelerator, in the vehicle, based on a recognition result.

With respect to the respective exposure periods, the distance measurement apparatus 100 outputs luminance data of continuous measurement points in a target region extending one-dimensionally or two-dimensionally. The light-receiving device 120 may include an image sensor that can acquire a two-dimensional image. In this case, the distance measurement apparatus 100 outputs luminance data of two-dimensionally continuous measurement points corresponding to the pixels in the image sensor. Meanwhile, when the distance measurement apparatus 100 is a sensing device that detects reflected light while one-dimensionally changing the emission direction of light, the distance measurement apparatus 100 outputs luminance data of one-dimensionally continuous measurement points. The distance measurement apparatus 100 in the present embodiment generates, for each exposure period, luminance data of continuous measurement points in a target region extending one-dimensionally or two-dimensionally and outputs the luminance data together with timing data indicating timings of the exposure periods.

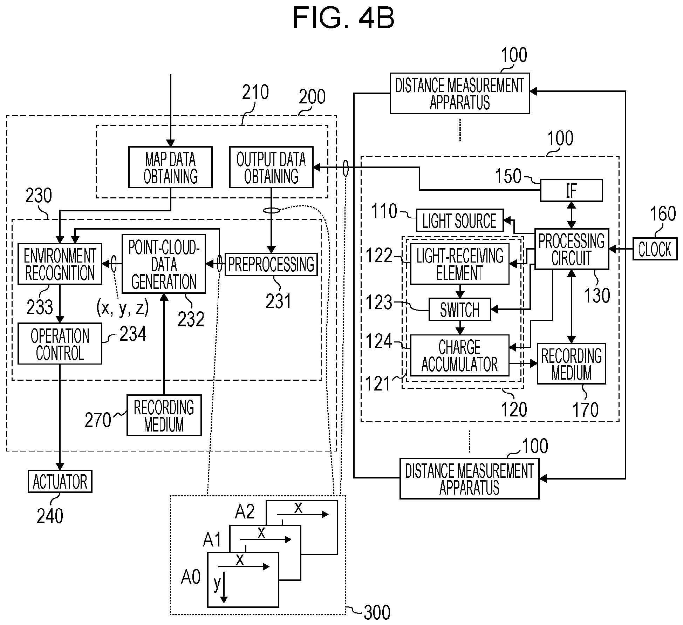

Next, a more specific configuration example of the present embodiment will be described with reference to Fig. 4B. Fig. 4B is a block diagram illustrating a more detailed functional configuration of one distance measurement apparatus 100 and the control apparatus 200. Fig. 4B illustrates a specific configuration of only one distance measurement apparatus 100 of the plurality of distance measurement apparatuses 100. The other distance measurement apparatus(es) 100 may also comprise the same configuration. The configuration may differ depending on the distance measurement apparatus 100. For example, some of the distance measurement apparatuses 100 may be configured so as to output general distance data.

[Configuration of Distance Measurement Apparatus]

The distance measurement apparatus 100 illustrated in Fig. 4B comprises the light source 110, the light-receiving device 120, the processing circuit 130, and the input/output interface 150. In the example in Fig. 4B, a clock 160 that outputs time data is provided external to the distance measurement apparatus 100. The clock 160 outputs the time data to the plurality of distance measurement apparatuses 100. The clock 160 may be provided inside the distance measurement apparatus 100.

The light source 110 in the present embodiment is means for outputting flash light for scattering laser light to a wide range. The light source 110 includes, for example, a laser light source and a diffusing plate and causes the diffusing plate to scatter laser light to thereby emit light that spreads to a wide range.

The light-receiving device 120 includes an image sensor 121 and optical components (not illustrated). The optical components include, for example, one or more lenses, and light from a range with a certain angle of view is projected to a light-receiving plane of the image sensor 121. The optical components may include another optical element, such as a prism or a mirror. The optical components may be designed so that light that scatters from one point of an object in a scene converges to one point on the light-receiving plane of the image sensor 121.

The image sensor 121 is a sensor in which a plurality of light-receiving elements 122 are two-dimensionally arrayed along the light-receiving plane. The image sensor 121 comprises the plurality of light-receiving elements 122, a plurality of charge accumulators 124, and a plurality of switches 123. A plurality of (e.g., three) charge accumulators 124 are provided corresponding to the plurality of light-receiving elements 122, respectively. The switches 123 are provided for the respective light-receiving elements 122 and switch connections between the light-receiving elements 122 and the plurality of charge accumulators 124 corresponding to the light-receiving elements 122. Each light-receiving element 122 generates, for each exposure period, charge corresponding to the amount of received light, the charge being resulting from photoelectric conversion. Each charge accumulator 124 accumulates charge generated by the light-receiving element 122 during the corresponding exposure period. The number of charge accumulators 124 corresponding to each light-receiving element 122 is the same as or larger than the number of exposure periods needed for a distance measurement operation based on the indirect ToF. In accordance with an instruction from the processing circuit 130 and in response to the switching of the exposure period, the switches 123 switch the connections between the light-receiving elements 122 and the charge accumulators 124. In the description below, a collection of one light-receiving element 122, the charge accumulator(s) 124 corresponding to the light-receiving element 122, and the switch 123 corresponding to the light-receiving element 122 may be referred to as a "pixel".

The image sensor 121 may be, for example, a CCD (Charge-Coupled Device) sensor, a CMOS (Complementary Metal Oxide Semiconductor) sensor, or an infrared array sensor. The image sensor 121 may have detection sensitivity to not only a visible wavelength range but also a wavelength range of, for example, ultraviolet, near-infrared, mid-infrared, far-infrared, or the like. The image sensor 121 may be a sensor utilizing an SPAD (Single Photon Avalanche Diode).

The image sensor 121 may comprise, for example, an electronic shutter system that performs exposure of all the pixels at a time, that is, a global shutter mechanism. The electronic shutter may be a rolling shutter system that performs exposure for each row or an area shutter system that performs exposure on only a partial area corresponding to a range illuminated with a light beam. When the electronic shutter is a global shutter system, it is possible to obtain two-dimensional information at a time by controlling the shutter in synchronization with flash light. Meanwhile, when a system in which the exposure timing is changed sequentially for every two or more pixels, as in the rolling shutter system, pixels whose exposure timings do not match cannot receive light, and thus the amount of information that can be obtained decreases. This problem, however, can be solved by performing processing for correcting, for each pixel, mismatch of the shutter timing. When the light source 110 is a beam scanner that emits a low-divergence light beam, as in a modification described below, the rolling shutter system may be more suitable than the global shutter system.

The light-receiving device 120 receives light reflected from an object in a scene. With respect to all the pixels in the image sensor 121, the light-receiving device 120 outputs, for each frame, data indicating charge accumulated for the respective exposure periods, the data being obtained based on the indirect ToF described above. In the present embodiment, in an operation for one frame, the projection and the exposure are iterated a number of times common to the exposure periods so that charge sufficient for the distance calculation is accumulated in each of the exposure periods. Then, at a stage at which the accumulation of charge in all exposure periods is completed, the light-receiving device 120 outputs data corresponding to all the pixels in all the exposure periods. The light-receiving device 120 outputs the data, for example, at a rate of 30 frames in one second. The data output from the light-receiving device 120 is recorded to the recording medium 170, such as a memory.

The recording medium 170 may include, for example, a memory, such as a ROM or a RAM. Various types of data generated by the processing circuit 130 are recorded to the recording medium 170. A computer program to be executed by the processing circuit 130 may further be stored in the recording medium 170.

The processing circuit 130 determines the timing of flash light projection performed by the light source 110 and the exposure timing in the light-receiving device 120 and outputs an exposure control signal and a projection control signal in accordance with the timings. The processing circuit 130 also converts the charge accumulated in the charge accumulators 124 in the pixels in the light-receiving device 120 for each exposure period into pixel values for each exposure period and outputs the pixel values as array data of the pixel values, that is, image data representing the luminances of the respective pixels. The image data for the respective exposure periods is sent to the control apparatus 200 via the interface 150.

The processing circuit 130 is, for example, an electronic circuit including a processor, such as a CPU. The processing circuit 130 executes processing in the present embodiment, for example, by executing a program stored in the recording medium 170. The recording medium 170 may be included in the processing circuit 130.

An example of the image data for the respective exposure periods, the image data being sent from the interface 150 to the control apparatus 200, is schematically illustrated in a dotted frame 300 in Fig. 4B. In this example, exposure is performed in three exposure periods A0, A1, and A2 illustrated in Figs. 1 and 2. Output data from the distance measurement apparatus 100 in this example includes a number of pieces of image data which is equal to the number of exposure periods per frame. In the present embodiment, the output data includes, in addition to the above-described image data, time data for identifying each exposure period and data indicating the duration of a light pulse emitted from the light source 110, the pieces of data being needed for the control apparatus 200 to perform the distance calculation. Details of a format of the output data are described later.

The clock 160 is a circuit that outputs detailed time information needed to control the light source 110. The clock 160 measures, for example, time with nanosecond or microsecond accuracy and outputs data thereof. The clock 160 may be realized by, for example, an integrated circuit, such as a real-time clock. The clock 160 may be synchronous with a time server. The synchronization may utilize, for example, a protocol, such as an NTP (Network Time Protocol) or PTP (Precision Time Protocol). Alternatively, time synchronization based on time of the control apparatus 200 may be performed using GPS information. A method for the time synchronization is not limited to that described above and is arbitrary. The time synchronization allows the distance measurement apparatus 100 to obtain accurate time data.

[Configuration of Control Apparatus]

Next, a description will be given of a configuration of the control apparatus 200 in the present embodiment. As illustrated in Fig. 4B, the control apparatus 200 comprises the input/output interface 210, the processing circuit 230, and the recording medium 270. The control apparatus 200 controls operations of an actuator 240 in the vehicle. The actuator 240 is, for example, an apparatus, such as an engine, a steering, a brake, or an accelerator, that performs operations associated with automated driving.

The interface 210 obtains the output data from the plurality of distance measurement apparatuses 100. The interface 210 also obtains map data delivered from an external server, not illustrated. The map data may be, for example, data of a landmark map. The interface 210 may be configured so as to obtain other data that the processing circuit 230 utilizes for processing. The other data may be data of, for example, a color image, a gradient, a speed, or acceleration obtained by the distance measurement apparatus 100 or another sensor.

The processing circuit 230 includes a preprocessing unit 231, a point-cloud-data generating unit 232, an environment recognizing unit 233, and an operation control unit 234. The processing circuit 230 is, for example, an electronic circuit including a processor, such as a CPU or a GPU. For example, the processor in the processing circuit 230 executes a program stored in the recording medium 270 to thereby realize functions of the preprocessing unit 231, the point-cloud-data generating unit 232, the environment recognizing unit 233, and the operation control unit 234 in the processing circuit 230. In this case, the processor functions as the preprocessing unit 231, the point-cloud-data generating unit 232, the environment recognizing unit 233, and the operation control unit 234. These functional units may be realized by dedicated hardware. The recording medium 270 may be included in the processing circuit 230.

Before performing the distance calculation, the preprocessing unit 231 performs image processing, such as noise reduction processing, on the output data obtained from each distance measurement apparatus 100 via the interface 210. This image processing is referred to as "preprocessing" in the description below. The noise reduction processing is performed on the image data for each exposure period. Details of the noise reduction processing are described later. The preprocessing may include, for example, processing, such as edge extraction or smoothing, other than the noise reduction processing.

By using the images for the respective exposure periods, the images being processed by the preprocessing unit 231, and the time data of the respective exposure periods in each distance measurement apparatus 100, the point-cloud-data generating unit 232 performs the above-described distance calculation on pixels at the same coordinates in the images. The point-cloud-data generating unit 232 calculates distances for the respective pixels in the image sensor 121 in each distance measurement apparatus 100, that is, for respective positions on xy coordinates, to generate distance image data. After generating the distance image data for each distance measurement apparatus 100, the point-cloud-data generating unit 232 converts the distances for the respective pixels in the distance image of each distance measurement apparatus 100 into points on three-dimensional coordinates referenced by the control apparatus 200, based on data of the position and the direction of each distance measurement apparatus 100.

The processing circuit 230 extracts objects, such as an automobile, a person, a bicycle, and so on from point cloud data on unified coordinates, the point cloud data being generated by the point-cloud-data generating unit 232. The processing circuit 230 further recognizes the state of the surroundings thereof by performing matching between the point cloud data on the unified coordinates and the map data.

The operation control unit 234 determines an operation of the actuator 240, based on the positions of the objects in three-dimensional space, the objects being identified by the environment recognizing unit 233, and transmits a control signal to the actuator 240.

The actuator 240 executes an operation according to the control signal transmitted from the operation control unit 234. For example, an operation, such as starting moving, accelerating, decelerating, stopping, or turning the vehicle, is executed.

[Operation of Distance Measurement Apparatus]

Next, a description will be given of operations each distance measurement apparatus 100.

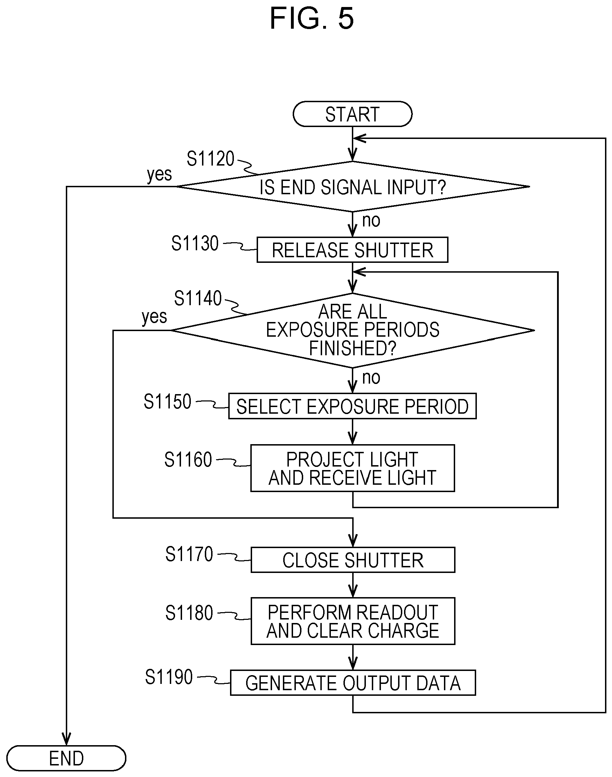

Fig. 5 is a flowchart illustrating operations of each distance measurement apparatus 100. The processing circuit 130 in the distance measurement apparatus 100 in the present embodiment executes operations in steps S1120 to S1190 illustrated in Fig. 5. The operations in the steps will be described below.

(Step S1120)

First, the processing circuit 130 determines the presence/absence of input of an operation end signal from an external apparatus, not illustrated. In the presence of the operation end signal in step S1120, the processing circuit 130 ends the operation. In the absence of the operation end signal in step S1120, the process proceeds to step S1130.

(Step S1130)

The processing circuit 130 outputs a control signal to the light-receiving device 120, and in accordance with the control signal output from the processing circuit 130, the light-receiving device 120 releases the electronic shutter. In response, a light detection operation for one frame is started.

(Step S1140)

The processing circuit 130 determines whether or not all of predetermined exposure periods needed to generate distance data for one frame are finished. In the present embodiment, a predetermined number of rounds of projection and exposure are repeated in each exposure period. As a result, charge is accumulated in the pixels in all the exposure periods. When the charge accumulation in all the exposure periods is finished in step S1140, the process proceeds to step S1170. When the charge accumulation in all the exposure periods is not finished in step S1140, the process proceeds to step S1150.

(Step S1150)

The processing circuit 130 selects, of the predetermined exposure periods, one exposure period in which the projection and the exposure have not been executed and the charge accumulation has not been performed, and outputs a switching signal to the switch 123. In response, the light-receiving elements 122 in the pixels and the charge accumulators 124 in which charge in the selected exposure period is to be accumulated are connected to each other. Details of the timing of the switching are described later.

(Step S1160)

By referring to the time data from the clock 160, the processing circuit 130 generates a signal for controlling the projection timing of the light source 110 and the exposure timing of the light-receiving device 120 in accordance with predetermined exposure starting time and exposure ending time with respect to the selected exposure period. The light source 110 emits pulsed flash light having a predetermined duration, in accordance with a control signal output from the processing circuit 130. The light-receiving device 120 performs exposure in accordance with the predetermined starting time and ending time of each exposure period, based on the projection starting time of the light source 110, and accumulates charge, generated by photoelectric conversion during the exposure period, in the charge accumulators 124 selected in step S1150. Details of the timings of the projection and the exposure are described later.

Steps S1140 to S1160 are repeated to thereby complete the light receiving operation for one frame.

(Step S1170)

Upon determining in step S1140 that the light projection and the light reception are completed in all the exposure periods, the processing circuit 130 closes the shutter in the light-receiving device 120.

(Step S1180)

The processing circuit 130 reads out the charge in the respective exposure periods, the charge being accumulated in the charge accumulators 124 in the pixels through the series of operations in steps S1130 to S1160, converts the charge into pixel values, and records the pixels values to the recording medium 170. The processing circuit 130 further clears the charge in the charge accumulators 124.

(Step S1190)

The processing circuit 130 converts the charge for the exposure periods, the charge being read out in step S1180, into pixel values and generates luminance image data for the respective exposure periods. In addition, the processing circuit 130 adds timing data for identifying each exposure period to each predetermined number of frames or to a front-end of each frame, in addition to the luminance image data for the respective exposure periods. The timing data may include, for example, information of the starting time and the ending time of each exposure period. The processing circuit 130 outputs output data including the luminance image data for the respective exposure periods and the timing data for identifying each exposure period to the interface 150. A specific example of the output data is described later. After the outputting, the process returns to step S1120.

The processing circuit 130 repeats the operations in steps S1120 to S1190. A unit of this repetition may be referred to as a "frame operation". As a result of repeating a plurality of frame operations, data needed for the distance calculation is output for each frame. The output data is sent to the control apparatus 200.

In the present embodiment, in step S1190, the output data including the timing data for each exposure period, in addition to the luminance image data for the respective exposure periods, is generated. The output data may include data of a light projection time, that is, the duration of a pulse of a light beam.

[Example of Operation of Projection and Light Reception]

Of the operations of the distance measurement apparatus 100 in the present embodiment, a specific example of operations of the projection and the exposure will be described.

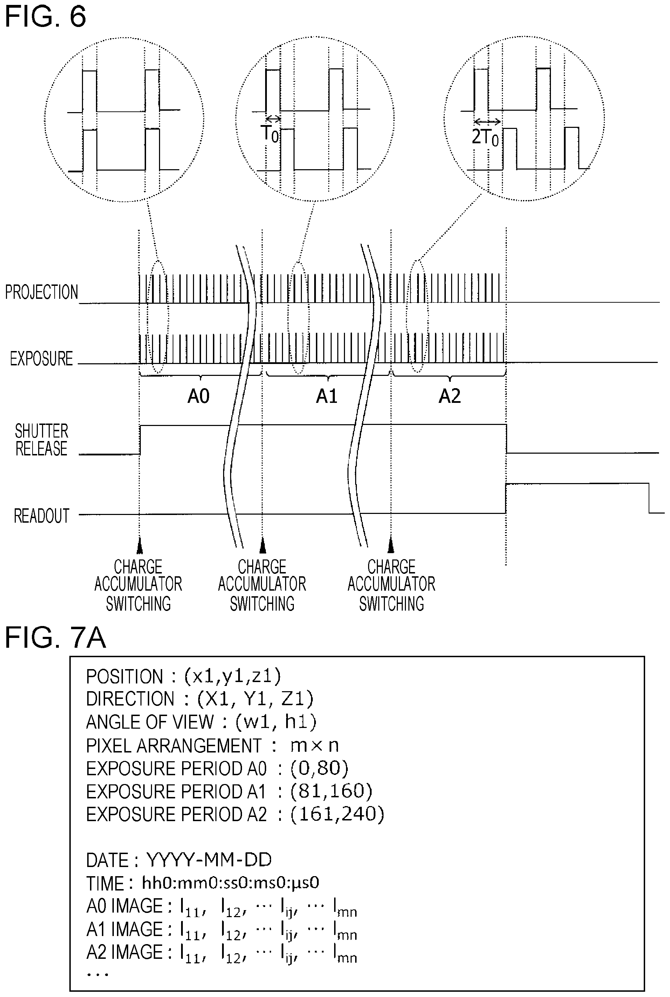

Fig. 6 is a time chart illustrating an example of operations of the projection and the exposure performed by the distance measurement apparatus 100. Fig. 6 illustrates, on a time axis, an example of operations in the projection and the exposure for one frame. The projection timing of the light source 110, the exposure timing of the light-receiving device 120, the shutter release period of the light-receiving device 120, and the readout timing of the charge accumulators 124 are illustrated sequentially from the top stage. The shutter in the light-receiving device 120 is released when the projection and the exposure for one frame are started in step S1130 and is not closed until the exposure operation is completed. Upon the release of the shutter, an operation for one frame is started. In step S1150, one of the plurality of exposure periods is selected, and in each pixel, the charge accumulator 124 corresponding to the exposure period and the light-receiving element 122 are connected by the switch 123.

In the present embodiment, flash-light pulsed projection by the light source 110 is repeatedly performed in each of the exposure periods A0, A1, and A2. The pulse duration T0 may be, for example, about 90 nanoseconds (nsec). In a period of time from the starting time of each exposure period to the ending time thereof, the starting point of the time being the projection starting time, the charge accumulators 124 corresponding to the exposure period and the light-receiving elements 122 are connected by the switches 123. An example of the timings of two rounds of continuous projection and exposure in each exposure period is illustrated in each dotted frame at an upper part in Fig. 6.

In the exposure period A0, the timing of the start and the end of the exposure is the same as the timing of the start and the end of the projection. For example, the exposure starting time is 0 nsec, and the exposure ending time is 90 nsec, that is, is the same as the duration of the pulse that is projected. The switches are connected simultaneously with the light projection and are disconnected with the end of the light projection. The light projection performed by the light source 110, the light reception performed by the light-receiving elements 122, and the accumulation of charge in the charge accumulators 124 are repeated a predetermined number of times. Even when the amount of energy of the reflected light is small with a single round of light projection, it is possible to perform measurement with the charge accumulation through a plurality of light receptions.

When a predetermined number of rounds of projection and exposure are completed in the exposure period A0, the next exposure period A1 is selected. In the newly selected exposure period A1, the charge accumulators 124 corresponding to the exposure period and the light-receiving elements 122 are connected by the switches 123. Even when the exposure period changes, the timing of the flash-light projection performed by the light source 110 does not change. Meanwhile, in the newly selected exposure period A1, the exposure is started when the pulse duration T0 (e.g., 90 nsec) passes after the projection starting time, and the exposure is finished when T0 passes after the exposure is started, as illustrated in an enlarged view in Fig. 6. That is, the exposure is started simultaneously with the end of the projection, and the switches 123 connect the charge accumulators 124 corresponding to the exposure period and the light-receiving elements 122 so that the exposure is performed with the duration T0 that is the same as the pulse length of the projection. The charge accumulators 124 hold the charge accumulated through the iterated exposure, as in the exposure period A0.

When a predetermined number of rounds of the projection and exposure are completed in the exposure period A1, projection and exposure are further performed in the exposure period A2. In the exposure period A2, the exposure is started when 2T0 (e.g., 180 nsec) passes after the projection starting time, and the exposure is finished when T0 passes after the exposure is started, as in an enlarged view in Fig. 6. That is, after the projection is finished, the exposure is further started when the projection duration T0 passes. The exposure duration in the exposure period A2 is also T0, as in the exposure periods A0 and A1. In the exposure period A2, the predetermined number of rounds of the projection and exposure are also repeated, so that charge is accumulated in the charge accumulators 124.

When the charge accumulation is completed in all the exposure periods A0, A1, and A2, the processing circuit 130 causes the light-receiving device 120 to close the shutter (step S1170). The processing circuit 130 then reads out the charge corresponding to each exposure period, the charge being accumulated in the charge accumulators 124 in the pixels. Based on the read out charge, the processing circuit 130 generates luminance image data for each exposure period and outputs the luminance image data.

[Example of Data Format]

Next, a description will be given of an example of the format of the data output by the distance measurement apparatus 100 in the present embodiment.

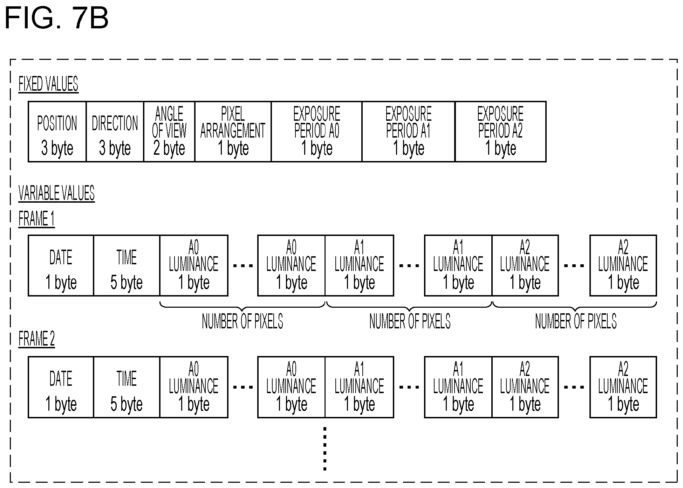

Figs. 7A and 7B illustrate an example of an output format of image data for respective exposure periods, the image data being output from the interface 150 in the distance measurement apparatus 100. The output data in this example includes data of fixed values that are common to a plurality of frames and data that differs from one frame to another frame. The fixed values are, for example, output once with respect to a front-end of the output data or once with respect to each predetermined number of frames as the data common to a plurality of frames.

The fixed values include, for example, data of a position, a direction, an angle of view, a pixel arrangement, the exposure period A0, the exposure period A1, and the exposure period A2. The "position" indicates an in-vehicle position of the image sensor 121. The position may be 3-byte data represented by, for example, three-dimensional coordinates whose origin is the center of the vehicle. The "direction" indicates a direction in which the light-receiving plane of a surface of the image sensor 121 faces. The direction may be, for example, 3-byte data representing a normal vector of the light-receiving plane represented by three-dimensional coordinates whose origin is the center of the vehicle. The "angle of view" indicates an angle of view of the image sensor 121 and may be represented by, for example, 2 bytes. The "pixel arrangement" indicates the numbers of pixels in the image sensor 121 in an x direction and a y direction and may be, for example, 1-byte data. "The exposure period A0", "the exposure period A1", and "the exposure period A2" indicate time ranges of the respective exposure periods. These time ranges may each be represented by, for example, 1-byte data in which the amount of time that has elapsed from the starting time of the corresponding projection is stated in nanosecond units. The number of exposure periods per frame may be a number other than three. Also, the number of exposure periods may change during operation. For example, the number of exposure periods may be additionally defined as a fixed value, and data of times of the respective exposure periods may be output.

The output data for each frame includes, for example, data of date, time, a luminance image for the exposure period A0, a luminance image for the exposure period A1, and a luminance image for the exposure period A2. The date is, for example, data indicating year, month, and day and may be represented by 1 byte. The time is, for example, data indicating time, minute, second, millisecond, and microsecond and may be represented by 5 bytes. The luminance image for the exposure period A0 is a collection of pixel values converted from the charge in the pixels which is accumulated in the exposure period A0, and may be represented as, for example, 1-byte data for each pixel. Each of the luminance image for the exposure period A1 and the luminance image for the exposure period A2 may be similarly be represented as, for example, 1-byte data for each pixel.

[Operation of Control Apparatus]

Next, a description will be given of an example of operations of the control apparatus 200.

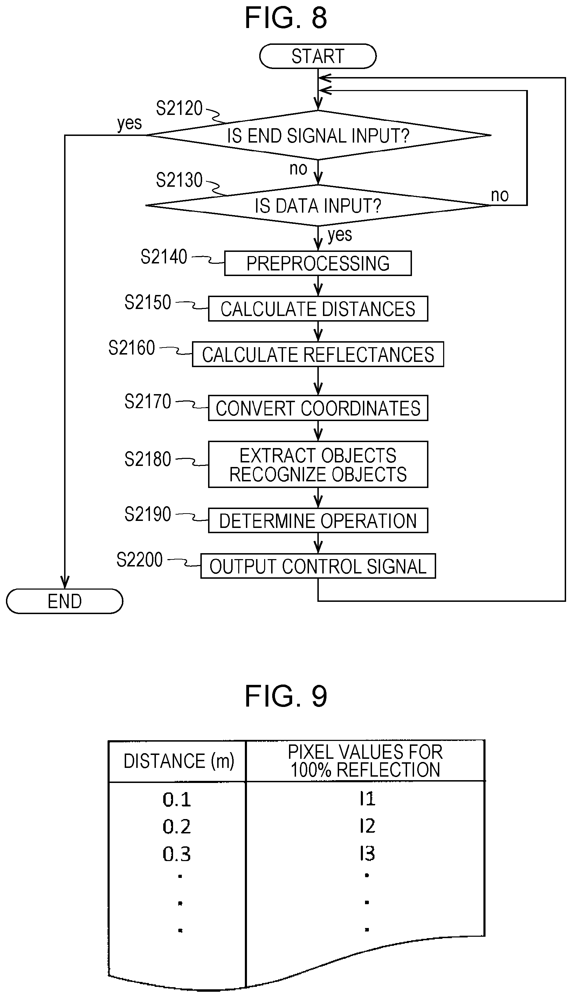

Fig. 8 is a flowchart illustrating operations of the control apparatus 200 in the present embodiment. The processing circuit 230 in the control apparatus 200 executes operations in steps S2120 to S2200 illustrated in Fig. 8. The operations in the steps will be described below.

(Step S2120)

The processing circuit 230 determines whether or not an operation end signal is input from an external apparatus, which is not illustrated. When the operation end signal is input, the operation ends. When the operation end signal is not input, the process proceeds to step S2130.

(Step S2130)

The processing circuit 230 determines whether or not data is input from the distance measurement apparatus 100. When data is input from the distance measurement apparatus 100, the process proceeds to step S2140. When data is not input from the distance measurement apparatus 100, the process returns to step S2120.

(Step S2140)

The processing circuit 230 performs preprocessing on the data obtained from the distance measurement apparatus 100, the preprocessing being performed in order to improve the accuracy of the distance calculation. The preprocessing includes, for example, noise removal processing. In this case, the distance measurement apparatus 100 is assumed to output the data in the format illustrated in Figs. 7A and 7B. **In** this case, the preprocessing is performed on the image data corresponding to the exposure period A0, the image data corresponding to the exposure period A1, and the image data corresponding to the exposure period A2. The processing circuit 230 individually performs noise removal processing on the image data corresponding to the respective exposure periods. For example, adaptive filter processing using a Wiener filter may be performed as a method for the noise removal processing.
By performing the filter processing, the processing circuit 230 removes high-spatial-frequency components in the pieces of image data to thereby remove noise. The filter may be a filter other than a Wiener filter and may be, for example, a Gaussian filter. For example, smoothing processing involving a convolution operation using a predetermined filter, such as a Laplacian filter, may be performed in order to remove high-spatial-frequency components in the pieces of image data. Noise removal processing other than processing with an adaptive filter may be performed as the preprocessing. Also, signal processing, such as contrast enhancement or edge extraction, other than noise removal processing may be performed.

(Step S2150)

The processing circuit 230 calculates distances for the respective pixels by using the image data for the respective exposure periods, the noise removal processing being performed on the image data in step S2140. The processing circuit 230 extracts pixel values of the same pixels from the image data for the respective exposure periods, calculates flight time, based on calculation expressions (4) and (5) noted above, and further calculates distances.

(Step S2160)

By using the distances for the respective pixels, the distances being calculated in step S2150, and the image data for the respective exposure periods, the noise removal processing being performed on the image data in step S2140, the processing circuit 230 further calculates the reflectances of the pixels for which the distances are calculated. The reflectances are ratios of total values of the pixel values in the exposure periods, background noise being removed from the pixel values, to the predetermined values for the respective distances for a reflectance of 100%. The values for the reflectance of 100% are, for example, obtained by pre-measuring pixel values of reflected light from a white board, the pixel values serving as a reference, for respective distances from the light-receiving device 120. The values for the respective distances for the reflectance of 100% may be pre-recorded to the recording medium 270 in the form of a table or the like.
Fig. 9 illustrates an example of a table recorded to the recording medium 270. The table in this example specifies correspondence relationships between distances from the light-receiving plane of the light-receiving device 120 and the pixel values when reflected light from a virtual white board located at the distances and having a reflectance of 100% is detected. The values for the reflectance of 100% may be recorded as a function for the distances. The table or the function that specifies the correspondence relationships between the distances and the values for the reflectance of 100% may be transmitted from the distance measurement apparatus 100 to the control apparatus 200.

(Step S2170)

The processing circuit 230 converts pieces of data of the distances for the respective pixels, the distances being calculated in step S2150, that is, distance image data, into three-dimensional point cloud data. Of the pixels in the distance image data, pixels for which the values of the distances are 0 or infinite are not regarded as points in the point cloud data, and no conversion is performed with respect to the pixels. Of the pixels in the distance image data, the conversion is performed with respect to only pixels for which effective distances are calculated. The conversion is performed, for example, as described below. First, the distance between the origin of a coordinate system for the distance measurement apparatus 100 and the origin of a coordinate system, set for the control apparatus 200, for data unification, is calculated by referring to the data of the position of the distance measurement apparatus 100, the data being illustrated in Figs. 7A and 7B. In addition, the amount of rotation of a coordinate axis of the distance measurement apparatus 100 relative to a coordinate axis of a unified coordinate system of the control apparatus 200 is calculated by referring to the data of the direction of the distance measurement apparatus 100, the data being illustrated in Figs. 7A and 7B. Based on the calculated distances and amount of rotation, coordinate conversion is performed on pixels having the values of the effective distances in the distance image, the distances being generated in step S2150.

(Step S2180)

The processing circuit 230 recognizes a surrounding environment of the distance measurement apparatus 100, based on the point cloud data generated in step S2170 and map data obtained externally. The recognition of the environment is performed by performing matching between the map data and the point cloud data. For example, the processing circuit 230 identifies a fixed object that matches a fixed object included in the map, by using the point cloud data, and identifies a positional relationship between the identified fixed object and the distance measurement apparatus 100. **In** addition, the processing circuit 230 groups the point cloud data for each object by utilizing information of the reflectances of the respective points, the reflectances being calculated in step S2160. This makes it possible to extract a moving body that is located in the surroundings of the distance measurement apparatus 100 and that is not included in the map. For example, the moving body is a person, an animal, a bicycle, an automobile, or the like.

The matching between the map data and the point cloud data may be performed, for example, as described below. First, a landmark to be detected is selected by referring to a landmark map, and information of the position coordinates or the like of the landmark is read. Then, based on the output data of the distance measurement apparatus 100, a distance to the landmark is calculated. The matching can be performed based on the coordinates of the landmark and the calculated distance to the landmark.

Since the luminance image data and the point cloud data on which the preprocessing is performed are generated based on the data output from the same distance measurement apparatus 100, the pieces of data do not have orientation displacement. Accordingly, it is possible to superimpose the image data and the point cloud data without performing distortion correction. The processing circuit 230 may identify a target object from the luminance image data by extracting a target object that overlaps a target object determined by grouping point clouds. Even when it is difficult to clarify a boundary of a target object by only grouping point clouds, performing verification against a result of pixel grouping using luminance images in which there is no position displacement makes it possible to more clarify the boundary of the target object. Thus, by merging information obtained from both the luminance image data and the point cloud data, it is possible to accurately reproduce a scene as a three-dimensional space. For extracting a target object from the luminance image data, it is possible to use known image recognition processing, such as object recognition, using AI. Also, image processing, such as edge extraction and contrast enhancement, may be performed as preprocessing on the luminance image data.

(Step S2190)

Based on the arrangement of structures, such as a building, and moving bodies in a three-dimensional space, the structures and the moving bodies being extracted in step S2180, the processing circuit 230 determines an operation of the actuator 240, such as a brake, an accelerator, or steering.

(Step S2200)

Based on the operation of the actuator 240, the operation being determined in step S2190, the processing circuit 230 generates a control signal for controlling the actuator 240 and outputs the control signal.

[Advantages]

As described above, by performing projection and exposure in each of a plurality of exposure periods, the distance measurement apparatus 100 in the present embodiment generates luminance image data for the respective exposure periods. The control apparatus 200 calculates the distances for the respective pixels, based on the luminance image data for the respective exposure periods and further converts the distance data into three-dimensional point cloud data. Before performing the distance calculation, the control apparatus 200 performs preprocessing, such as noise removal, on the luminance image data for the respective exposure periods. This makes it possible to more accurately calculate distances. In addition, by calculating the reflectances, which are lost through the distance calculation, it is possible to improve the accuracy of the target-object extraction or recognition based on the point cloud data.

The configuration in the present embodiment is merely one example, and various modifications are envisaged for the present embodiment. Some modifications of the present embodiment will be described below.

<First Modification of First Embodiment, which is not according to the invention>

Although the light source 110 in the first embodiment emits flash light for scattering laser light to a wide range, the light source 110 may be configured so as to emit a light beam having a smaller divergence than the flash light. Use of the light beam of laser light or the like makes it possible to enhance the energy density of the light, compared with a case in which the flash light is used. Thus, it is possible to detect reflected light from a more distant object. In order to project light to a wide range, the light source 110 is controlled so as to perform light projection a plurality of times while changing the direction of the light.

[Configuration of Distance Measurement Apparatus]

The configuration of the distance measurement apparatus 100 in this modification is the same as the configuration illustrated in Fig. 4B. However, the function and the operation of the light source 110 are different. The configuration and the operation in this modification, mainly, points that differ from the first embodiment, will be described below.

The light source 110 in this modification is a beam scanner that can change the emission direction of the light beam. In response to a command from the processing circuit 130, the light source 110 sequentially illuminates a partial region in a scene with the light beam. In order to realize the function, the light source 110 comprises a mechanism for changing the emission direction of the light beam.

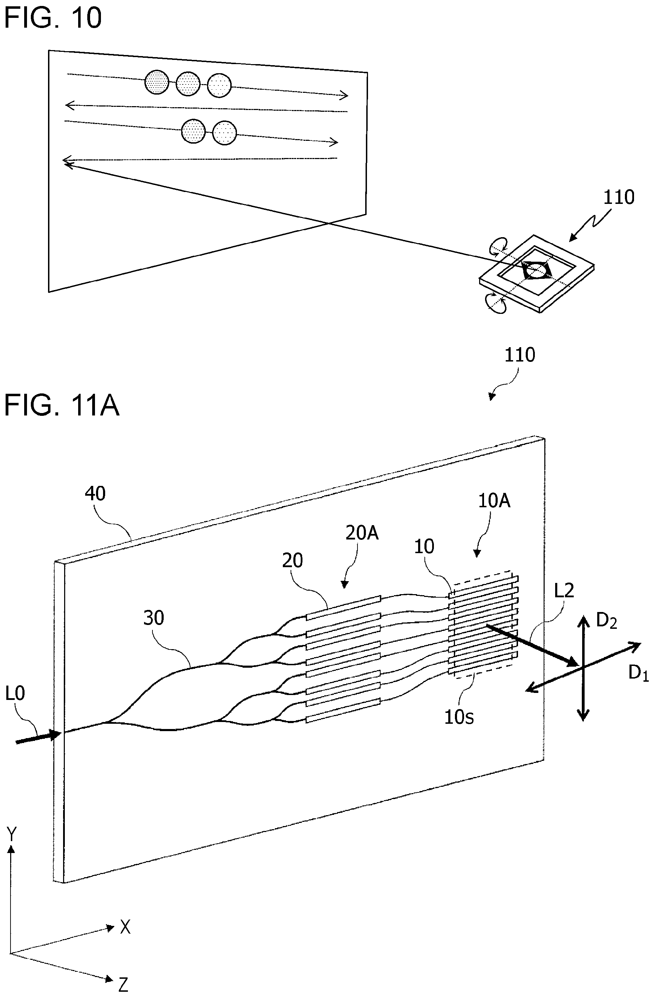

Fig. 10 is a view illustrating one example of the light source 110. The light source 110 in this example comprises a light-emitting element, such as a laser, and at least one movable mirror, for example, a MEMS mirror. The light emitted from the light-emitting element is reflected by the movable mirror and heads to a predetermined region in a scene. By driving the movable mirror, the processing circuit 130 can change the emission direction of the light beam. This allows, for example, the scene to be scanned with the light beam one dimensionally or two-dimensionally.

A light source that can change the emission direction of light by using a structure different from the structure having the movable mirror may be used. For example, a light source utilizing a reflective waveguide, like that disclosed in PTL 4, may also be used.

Fig. 11A is a perspective view schematically illustrating an example of the light source 110 utilizing a reflective waveguide. An X-axis, a Y-axis, and a Z-axis that are orthogonal to each other are schematically illustrated for reference. The light source 110 comprises an optical waveguide array 10A, a phase shifter array 20A, an optical divider 30, and a substrate 40 at which they are integrated. The optical waveguide array 10A includes a plurality of optical waveguide elements 10 arrayed in a Y direction. Each optical waveguide element 10 extends in an X direction. The phase shifter array 20A includes a plurality of phase shifters 20 arrayed in the Y direction. Each phase shifter 20 comprises an optical waveguide extending in the X direction. The optical waveguide elements 10 in the optical waveguide array 10A are respectively connected to the phase shifters 20 in the phase shifter array 20A. The optical divider 30 is connected to the phase shifter array 20A.

Light L0 emitted from a light-emitting element, not illustrated, is input to the plurality of phase shifters 20 in the phase shifter array 20A via the optical divider 30. Light rays transmitted through the phase shifters 20 are respectively input to the optical waveguide elements 10 in a state in which the phases of the light rays are shifted by a certain amount in the Y direction. The light rays respectively input to the optical waveguide elements 10 are emitted as a light beam L2 in a direction that crosses the light emission surface 10s from a light emission surface 10s parallel to an XY plane.

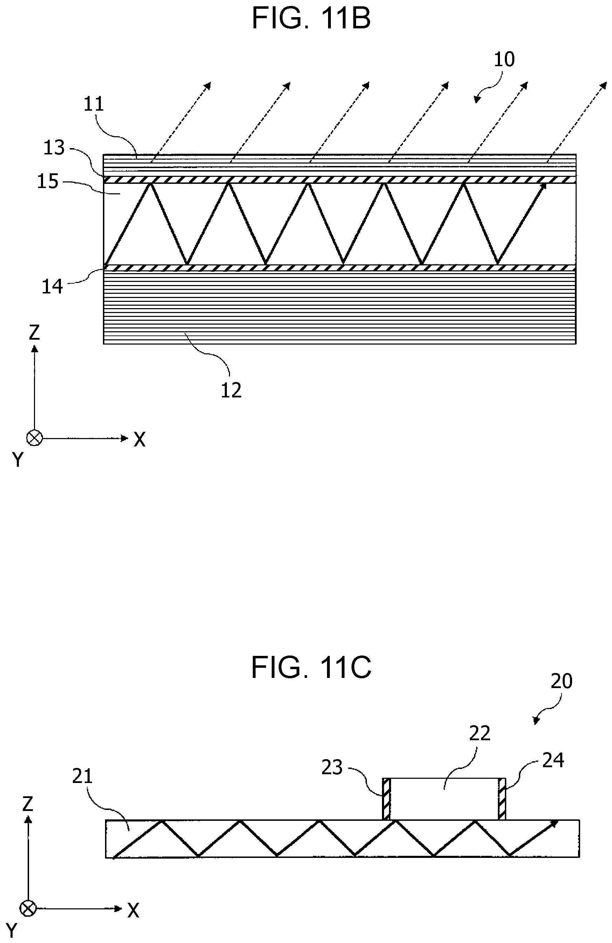

Fig. 11B is a view schematically illustrating an example of the structure of each optical waveguide element 10. The optical waveguide element 10 includes an optical waveguide layer 15 located between a first mirror 11 and a second mirror 12 that oppose each other and a pair of electrodes 13 and 14 for applying a drive voltage to the optical waveguide layer 15. The optical waveguide layer 15 may be composed of material having a refractive index that changes upon application of a voltage. The material is, for example, a liquid-crystal material or an electro-optic material. The transmittance of the first mirror 11 is higher than the transmittance of the second mirror 12. Each of the first mirror 11 and the second mirror 12 may be formed from, for example, a multilayer reflective film in which high-refractive-index layers and low-refractive-index layers are alternately stacked.

The light input to the optical waveguide layer 15 propagates in the optical waveguide layer 15 along the X direction while being reflected by the first mirror 11 and the second mirror 12. An arrow in Fig. 11B schematically represents a state in which the light propagates. Part of the light that propagates in the optical waveguide layer 15 is emitted to outside via the first mirror 11.

The drive voltage is applied to the electrodes 13 and 14 to thereby change the refractive index of the optical waveguide layer 15, so that the direction of the light that is emitted from the optical waveguide element 10 to outside changes. The direction of the light beam L2 emitted from the optical waveguide array 10A changes in response to a change in the drive voltage. Specifically, the emission direction of the light beam L2 illustrated in Fig. 11A can be changed along a first direction D1 that is parallel to the X-axis.

Fig. 11C is a diagram schematically illustrating an example of one phase shifter 20. The phase shifter 20 includes, for example, a total reflection waveguide 21 including a thermo-optic material whose refractive index changes with heat, a heater 22 that is in thermal contact with the total reflection waveguide 21, and a pair of electrodes 23 and 24 for applying a drive voltage to the heater 22. The refractive index of the total reflection waveguide 21 is higher than the refractive index of the heater 22, the substrate 40, and air. Owing to the difference between the refractive index, the light input to the total reflection waveguide 21 propagates in the total reflection waveguide 21 along the X direction while being totally reflected.

When the drive voltage is applied to the pair of electrodes 23 and 24, the total reflection waveguide 21 is heated by the heater 22. As a result, the refractive index of the total reflection waveguide 21 changes, so that the phase of the light output from an end of the total reflection waveguide 21 is shifted. Changing the phase difference of the light output from two adjacent phase shifters 20 of the plurality of phase shifters 20 illustrated in Fig. 11A allows the emission direction of the light beam L2 to change along a second direction D2 that is parallel to the Y-axis.

In the above-described configuration, the light source 110 allows the emission direction of the light beam L2 to change two-dimensionally.

Details of an operation principle, an operation method, and so on of the light source 110 as described above are disclosed, for example, in PTL 4. The entire content disclosed in PTL 4 is incorporated herein.

In this modification, each time the light beam is projected, the processing circuit 130 records charge, accumulated when the light-receiving elements in a partial region of the image sensor 121 receives the light, to the recording medium 170 in association with the time of the projection of the light beam.

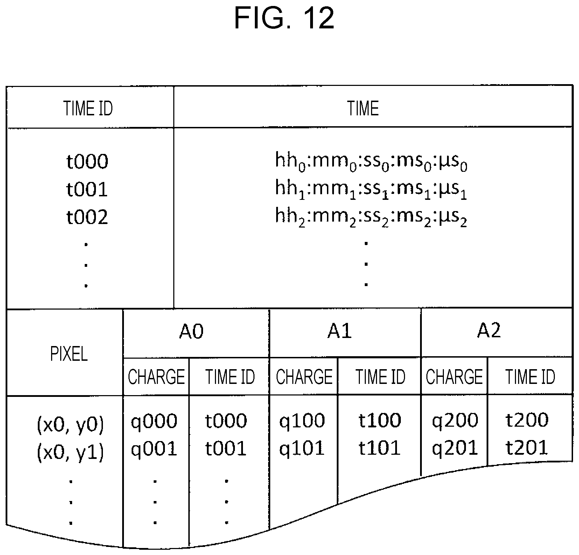

Fig. 12 is a table illustrating an example of data that may be recorded to the recording medium 170. Each time a light beam is projected a specified number of times, a representative value of the times of the projection and a time ID indicating the representative value of the projection times are recorded to the recording medium 170 in association with each other. Also, the charge accumulated in the charge accumulator 124 upon projection of the light beam and the time ID corresponding to the projection are stored for each light-receiving element 122, that is, for each pixel. Since the projection of the light beam is performed for each round of exposure, the charge and the time ID are recorded for each round of exposure.

[Operation of Distance Measurement Apparatus]

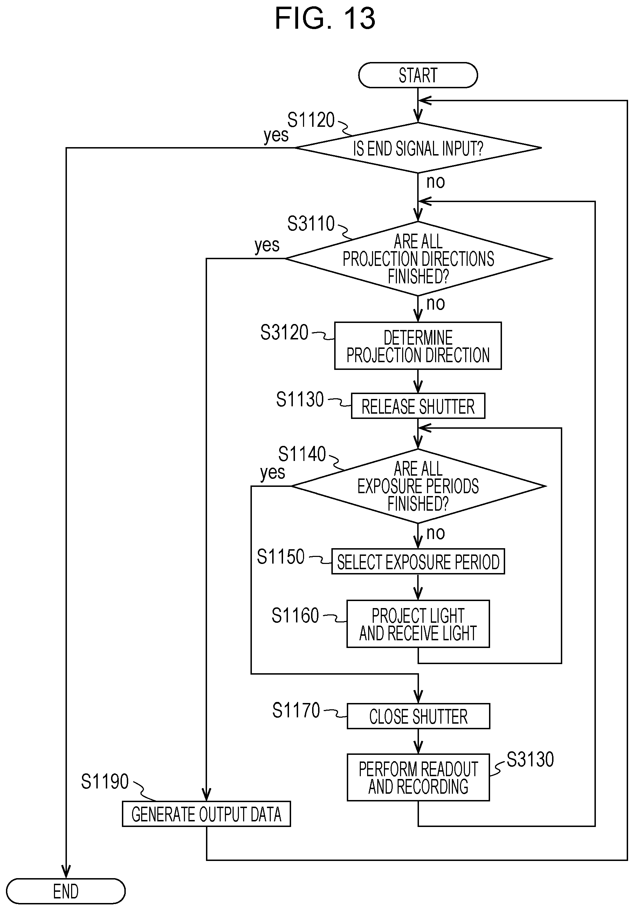

Next, a description will be given of operations of the distance measurement apparatus 100 in this modification. Fig. 13 is a flowchart illustrating operations of the distance measurement apparatus 100 in this modification. In the flowchart illustrated in Fig. 13, steps S3110 and S3120 are added to the flowchart illustrated in Fig. 5, and step S1180 is changed to step S3130. Operations in the steps are described below.

(Step S1120)

The processing circuit 130 first determines the presence/absence of input of an operation end signal from an external apparatus, which is not illustrated. In the presence of the operation end signal in step S1120, the processing circuit 130 ends the operation. In the absence of the operation end signal in step S1120, the process proceeds to step S3110.

(Step S3110)

The processing circuit 130 determines whether or not the operation is finished on all projection directions of one or more predetermined projection directions specified by an external apparatus that is predetermined or not illustrated. When it is determined that the operation is finished on all the projection directions, the process proceeds to step S1190. When it is determined that the operation is not finished on all the projection directions, the process proceeds to step S3120.

(Step S3120)

The processing circuit 130 selects one of the directions in which the projection has not been performed, the directions being included in one or more projection directions specified by the external apparatus that is predetermined or not illustrated.

(Step S1130)

The processing circuit 130 outputs a control signal to the light-receiving device 120, and the light-receiving device 120 releases the electronic shutter in accordance with the control signal output from the processing circuit 130. In response, a light detection operation is started on a projection direction.

(Step S1140)

The processing circuit 130 determines whether or not all predetermined exposure periods needed for generating distance data are finished. When the charge accumulation is finished in all the exposure periods in step S1140, the process proceeds to step S1170. When the charge accumulation is not finished in all the exposure periods in step S1140, the process proceeds to step S1150.

(Step S1150)

The processing circuit 130 selects, of the predetermined exposure periods, one of the exposure periods in which the projection and the exposure have not been finished yet and the charge accumulation has not been performed, and outputs a switching signal to the switch 123.

(Step S1160)

By referring to the time data from the clock 160, the processing circuit 130 generates, with respect to the selected exposure period, a signal for controlling the projection timing of the light source 110 and the exposure timing of the light-receiving device 120 in accordance with the predetermined exposure starting time and exposure ending time. In accordance with the control signal output by the processing circuit 130, the light source 110 emits a predetermined-duration pulsed light beam in the direction determined in step S3120. The light-receiving device 120 performs exposure in accordance with the starting time and the ending time of the predetermined exposure period, based on the projection starting time of the light source 110, and accumulates charge, generated by photoelectric conversion during the exposure period, in the charge accumulator 124 selected in step S1150.

(Step S1170)

Upon determining in step S1140 that the light projection and the light reception are completed in all the exposure periods, the processing circuit 130 closes the shutter in the light-receiving device 120.

(Step S3130)

The processing circuit 130 reads out the charge in the exposure periods, the charge being accumulated in the series of operations in steps S1130 to S1160, converts the charge in the pixels that are included in all the pixels and that received the reflected light into pixel values, and records the pixel values to the recording medium 170 for the respective pixels.

(Step S1190)

Based on the data recorded in step S3130, the processing circuit 130 generates luminance image data for the respective exposure periods. In addition, the processing circuit 130 generates data of projection times of the light beam in addition to the luminance image data for the respective exposure periods. The processing circuit 130 adds, for example, timing data for identifying each exposure period to each predetermined number of frames or to a front-end of each frame, in addition to the luminance image data for the respective exposure periods. The timing data may include, for example, information of the starting time and the ending time of each exposure period. The processing circuit 130 outputs, via the interface 150, output data including the luminance image data for the respective exposure periods, the timing data for identifying each exposure period, and the time data for the pixels. After the outputting, the process returns to step S1120.
The processing circuit 130 repeats the operations in steps S1120 to S1190. A unit of this repetition will be referred to as a "frame operation". As a result of repeating the frame operation, data needed for the distance calculation is output for each frame. The output data is sent to the control apparatus 200.

[Example of Data Format]

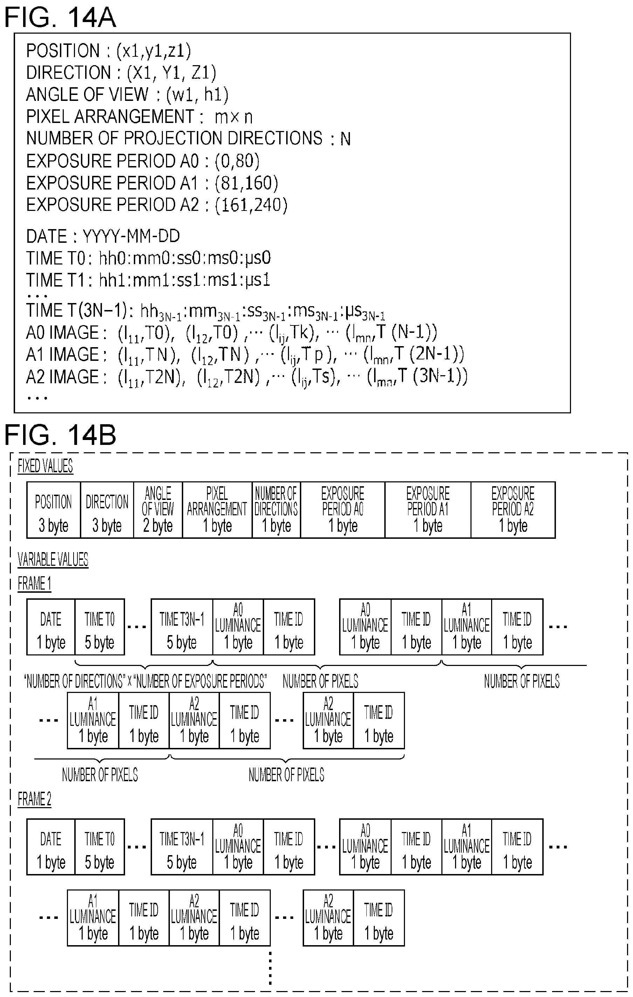

Figs. 14A and 14B are diagrams illustrating an example of an output format of the image data for the respective exposure periods, the image data being output from the distance measurement apparatus 100 in this modification. In this example, the number (e.g., 1 byte) of projection directions is added to the fixed values, compared with the example illustrated in Figs. 7A and 7B. Also, the data for each frame includes time data (e.g., 5 bytes) for each projection direction in each exposure period. Data (e.g., 1 byte) of a time ID for identifying a representative value of emission times of a light beam used to obtain luminance values for each exposure period is added to the data of the luminance value. The correspondence relationships between the time IDs and the actual times are recorded to the recording medium 170, as illustrated in Fig. 12. The data that specifies the correspondence relationships between the time IDs and the actual times is also pre-recorded to the recording medium 270 in the control apparatus 200.

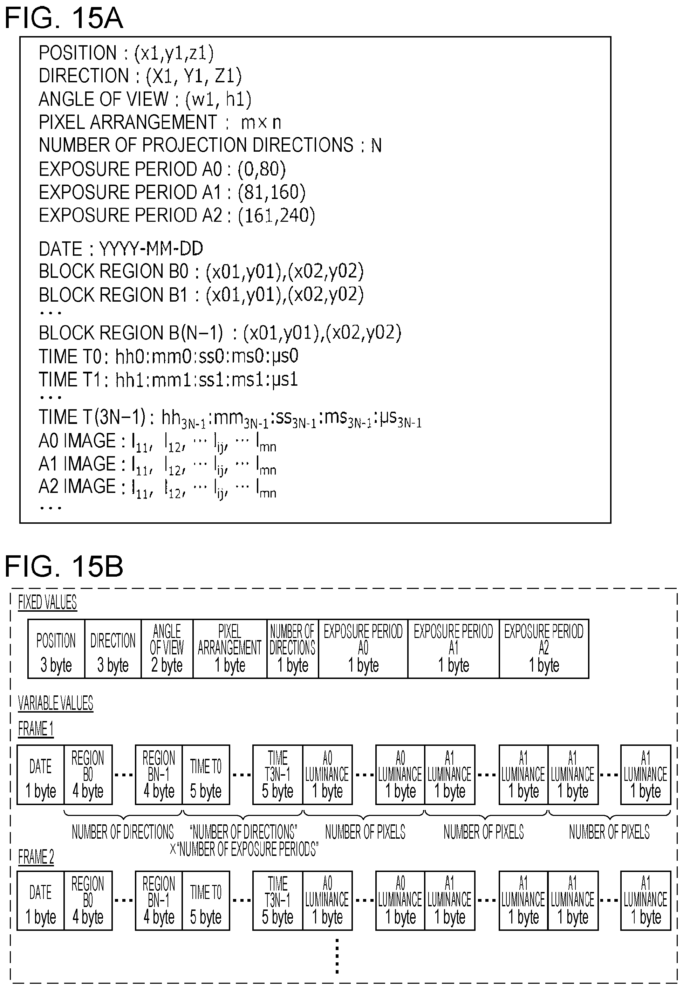

Figs. 15A and 15B are diagrams illustrating another example of the output format of the image data for the respective exposure periods, the image data being output from the distance measurement apparatus 100. In this example, data (e.g., 4 bytes) for identifying the pixel region in each block, which is a collection of pixels that receive reflected light of the light beam emitted in the same direction, is included in the output data for each frame. Each block is, for example, a rectangular pixel region and may be identified by the coordinates of the pixel located at the top left and the coordinates of the pixel located at the bottom right. The data of each block may include a block ID. In the example in Fig. 15B, subsequently to the data of the date, pieces of data of the pixel regions in the blocks are arranged according to the number of projection directions, and then pieces of data of times for the respective projection directions are arranged according to a number equal to the product of the number of directions and the number of exposure periods. Subsequently, image data obtained by converting the charge accumulated in the pixels in the exposure period A0 into pixel values, image data corresponding to the charge accumulated in the exposure period A1, and image data corresponding to the charge accumulated in the exposure period A2 follow. When information of the blocks is output, as in this example, data for identifying the pixel regions in the blocks may be recorded to the recording medium 170. Alternatively, data of luminance values or the like may be recorded to the recording medium 170 for each group of blocks. In the data format illustrated in Figs. 14B, 15A, and 15B, times at which the luminance data are obtained for respective pixels or for respective pixel blocks are added. That is, the luminance image data for one frame includes the luminance data at different times. The luminance image data, the distance image data, and the point cloud data generated from a data format as described above can be used through division into pixels or pixel blocks included in a predetermined time range, rather than being used for each frame. For example, for combining the data obtained from the distance measurement apparatus 100 with the data including the time information obtained from another measurement apparatus or the like, the control apparatus 200 can divide the data into pixels or pixel blocks and combine the pixels or pixel blocks, based on the time information.

<Second Modification of First Embodiment, which is not according to the invention>

Next, a description will be given of a second modification of the first embodiment, which is not according to the invention. In this modification, unlike the above-described examples, the light source 110 is configured so as to emit a low-divergence laser light beam a plurality of times while changing the direction thereof one-dimensionally. Unlike the examples described above, the light-receiving device 120 comprises one light-receiving element or a small number of light-receiving elements, not the image sensor. The orientation of the light-receiving device 120 is controlled according to a change in the projection direction of the light source 110 so that the normal vector of the light-receiving plane of the light-receiving device 120 matches the projection direction of the light source 110. Accordingly, the processing circuit 130 records the data obtained through light reception to the recording medium 170 for each projection direction of the beam, not for each light-receiving element (pixel). The projection direction of the beam is specified by, for example, an angle from a reference position.

Since the operation of the distance measurement apparatus 100 in this modification is similar to the operation of the distance measurement apparatus 100 in the first modification described above, a description thereof is omitted. The luminance data corresponding to the charge that the light-receiving device 120 accumulates in each exposure period each time the light is projected is output as a data string for each frame. One frame operation in this modification refers to a group of operations of a series of rounds of the projection and exposure in a plurality of directions with respect to a predetermined one axis. In one frame operation, for example, the light beam may be sequentially emitted in a total of 720 directions by changing the direction in increments of 0.5 degree in a horizontal 360-degree range.

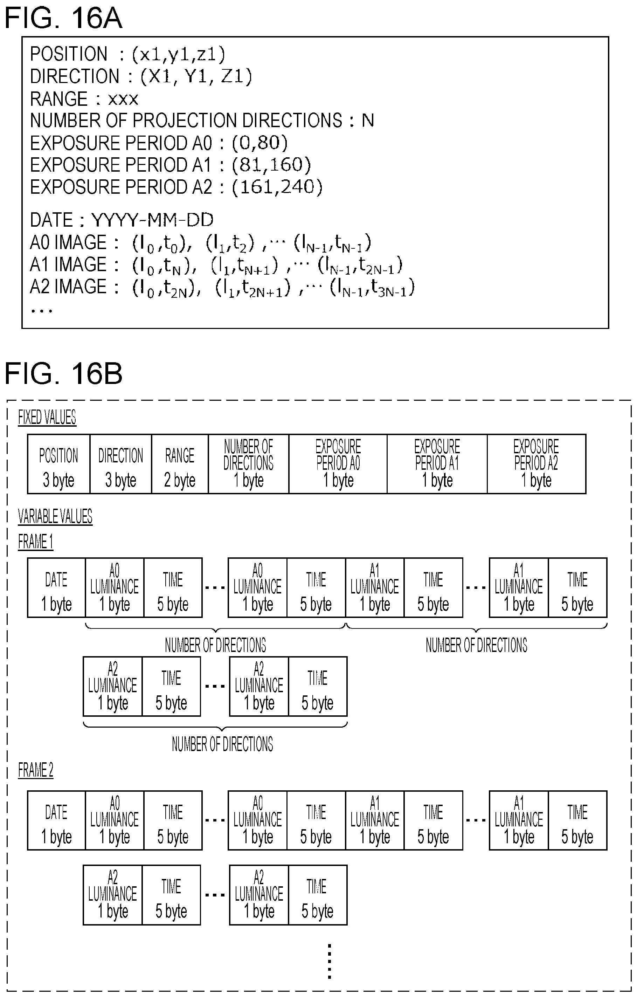

Figs. 16A and 16B are diagrams illustrating an example of the output format of the data output from the distance measurement apparatus 100 in this modification. With respect to the fixed values in this modification, the angular range of the directions in which the light beam is emitted in one frame operation, instead of the data of the angle of view and the pixel arrangement in the example illustrated in Figs. 14A and 14B, is output, for example, in 2 bytes. The "direction" in this modification is data in which a zero-degree direction pre-set for the distance measurement apparatus 100 is represented as a vector in a three-dimensional coordinate table having its origin at the center of the vehicle.

In this modification, with respect to the output data for each frame, first, the date (e.g., 1 byte) when the data for the frame is obtained is output. Subsequently, a luminance value (e.g., 1 byte) corresponding to the charge accumulated in the exposure period A0 and time (e.g., 5 bytes) are repeatedly output with respect to all the projection directions. With respect to each of the exposure periods A1 and A2, similarly, a luminance value corresponding to the accumulated charge and time are repeatedly output with respect to all the projection directions.

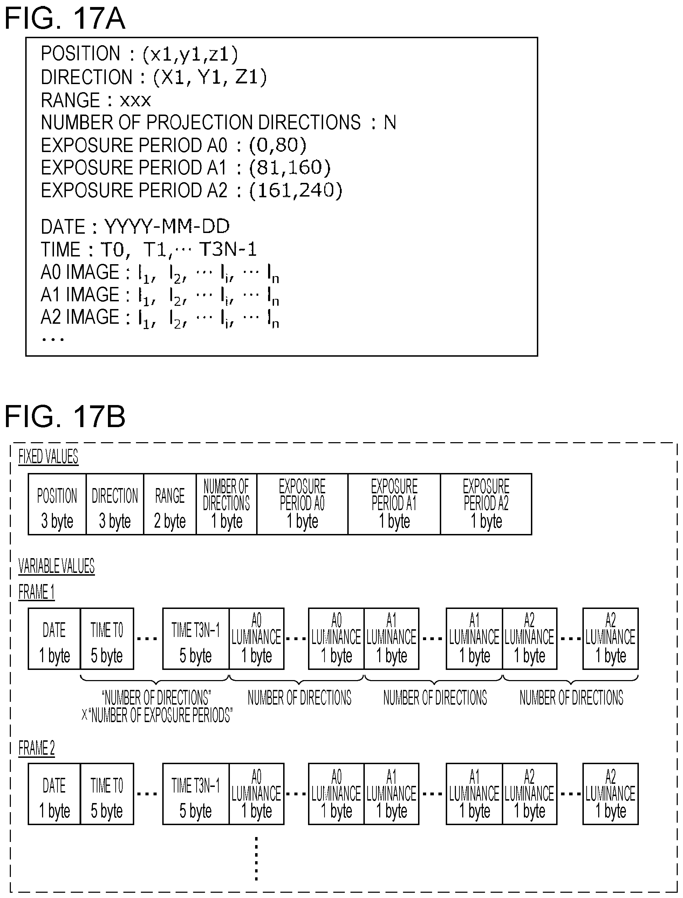

Figs. 17A and 17B are diagrams illustrating another example of the output format of the data output from the distance measurement apparatus 100. In this example, with respect to the output data for each frame, the date (e.g., 1 byte) is output first, and then time (e.g., 5 bytes) for each projection direction in each exposure period is output.

Subsequently, a luminance value (e.g., 1 byte) corresponding to the charge accumulated in the exposure period A0 is repeatedly output with respect to all the projection directions. With respect to each of the exposure periods A1 and A2, similarly, a luminance value corresponding to the accumulated charge is repeated with respect to all the projection direction.

<Second Embodiment, which is according to the invention>

Next, a description will be given of an exemplary second embodiment of the present disclosure, which is according to the invention.

In the first embodiment and the modifications thereof, without calculating distances, the distance measurement apparatus 100 outputs, at all times, the luminance data indicating charge accumulated through the light reception in each exposure period. In contrast, in the present embodiment, the distance measurement apparatus 100 calculates distances for the respective pixels, based on the luminance data, and can switch between the output of the distance data and the output of the luminance data, depending on the situation. This output switching may be performed in response to an instruction from outside or may be performed according to a determination based on internal data. After receiving the data from the distance measurement apparatus 100, the control apparatus 200 determines whether or not the received data is luminance data or distance data and performs processing corresponding to the type of data.

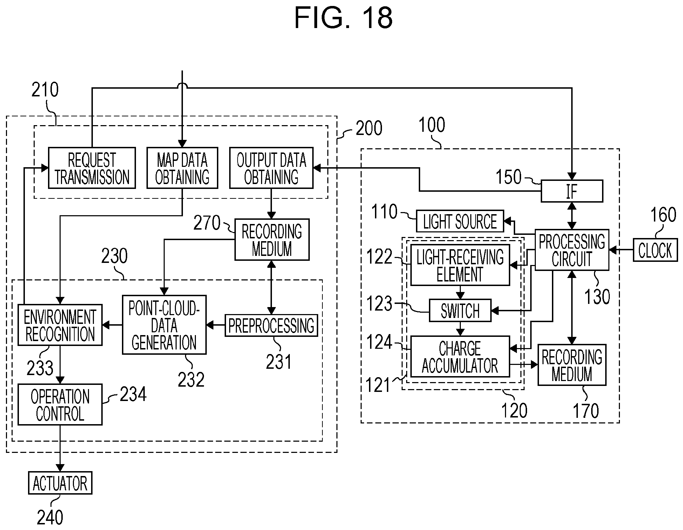

Fig. 18 is a diagram illustrating a functional configuration of the system in the present embodiment. Although a hardware configuration in the present embodiment is the same as the configuration illustrated in Fig. 4B, operations in the present disclosure are different from those in the first embodiment. The configuration and the operations in the present embodiment, mainly, points that differ from the first embodiment, will be described below. In the description below, the luminance data may be referred to as "raw (raw) data".

[Configuration of Distance Measurement Apparatus]

The processing circuit 130 in the present embodiment has a function for calculating distances for respective pixels, based on the raw data. In response to a request from the external control apparatus 200, the processing circuit 130 switches between the output of the distance data and the output of the raw data. In the system illustrated in Fig. 18, although the number of distance measurement apparatuses 100 is one, the system may include a plurality of distance measurement apparatuses 100, as in the example illustrated in Fig. 4B.

The light source 110 in the present embodiment outputs flash light for scattering laser light to a wide range, similarly to the light source 110 in the first embodiment.

The light-receiving device 120 includes the image sensor 121 and optical components, such as a lens. The image sensor 121 has a plurality of pixels arrayed two-dimensionally. Each pixel comprises a light-receiving elements 122, charge accumulators 124 respectively corresponding to exposure periods, a switch 123 that switches a connection between the light-receiving element 122 and each of the charge accumulators 124.

The processing circuit 130 determines timing of flash light projection performed by the light source 110 and timing of exposure in the light-receiving device 120. Then, in accordance with the determined timings, the processing circuit 130 sends a projection control signal to the light source 110 and sends an exposure control signal to the image sensor 121. The processing circuit 130 further calculates distances for the respective pixels, based on signals generated for the respective exposure periods by the charge accumulators 124. The processing circuit 130 outputs distance data indicating the calculated distances for the respective pixels, that is, distance image data, via the interface 150. Meanwhile, upon receiving, from the control apparatus 200, a signal for requesting output of the raw data, the processing circuit 130 outputs the raw data instead of the distance data.

[Configuration of Control Apparatus]

The control apparatus 200 has a hardware configuration that is the same as that of the control apparatus 200 illustrated in Fig. 4B. However, the present embodiment differs from the first embodiment in that the processing circuit 230 transmits, via the interface 210, a signal for requesting transmission of the raw data to the distance measurement apparatus 100, depending on the situation. For example, when more accurate data is needed, as in a case in which the distance image data transmitted from the distance measurement apparatus 100 contains a large amount of noise, the processing circuit 230 sends a signal for requesting the raw data to the distance measurement apparatus 100.

In the configuration in Fig. 18, signals are directly transmitted/received between the interface 150 in the distance measurement apparatus 100 and the interface 210 in the control apparatus 200. The communication between the distance measurement apparatus 100 and the control apparatus 200 is not limited to a configuration as described above and may be performed over a network, such as the Internet. Another apparatus on a network may intervene between the distance measurement apparatus 100 and the control apparatus 200. The distance measurement apparatus 100 or the control apparatus 200 may communicate with, for example, a cloud server or a storage device, such as a storage, over a network. For example, communication protocols, such as http, ftp, TCP or UDP, and IP, may be used for the communication. A pull-type communication system may be used, or a push-type communication system may be used. For example, Ethernet, USB, RS-232C, HDMI (registered trademark), a coaxial cable, or the like can be used for wired transmission. Alternatively, for example, an arbitrary wireless communication system, such as 3G/4G/5G, wireless LAN, Wi-Fi, Bluetooth (registered trademark), or a millimeter wave specified by 3GPP or IEEE, can be used for wireless transmission.

[Operation of Distance Measurement Apparatus]

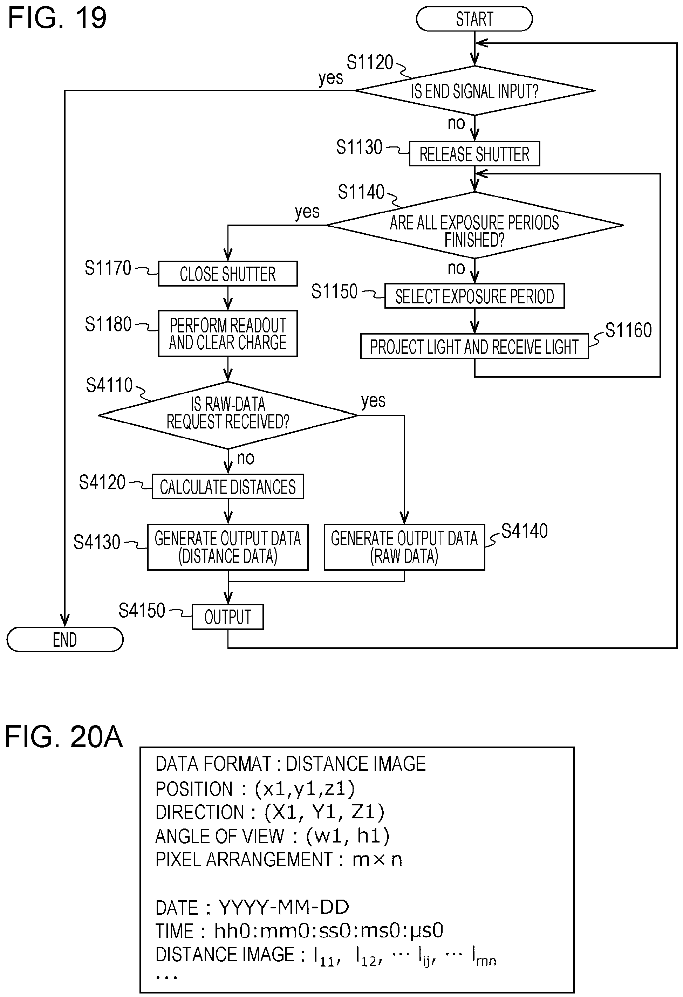

Fig. 19 is a flowchart illustrating operations of the processing circuit 130 in the distance measurement apparatus 100 in the present embodiment. The flowchart illustrated in Fig. 19 is a flowchart in which step S1190 in the flowchart illustrated in Fig. 5 is replaced with steps S4110 to S4150. Operations in steps S1120 to S1170 are the same as the operations illustrated in Fig. 5. Points that differ from the operations illustrated in Fig. 5 will be described below.

(Step S4110)

When step S1180 is completed, the processing circuit 130 determines whether or not a signal for requesting output of the raw data is received from the control apparatus 200. When the signal is received, the process proceeds to step S4140. When the signal is not received, the process proceeds to step S4120.

(Step S4120)

The processing circuit 130 calculates distances for the respective pixels, based on the values of charge in the pixels for the respective exposure periods, the values being recorded in the recording medium 170. The distance calculation method is similar to the calculation method in step S2150 illustrated in Fig. 8.

(Step S4130)

The processing circuit 130 generates distance image data by converting the distances for the respective pixels, the distances being calculated in step S4120, into pixel values. The processing circuit 130 generates output data in which an identifier indicating that this data is distance image data is added to the distance image data. A specific example of the output data is described later.

(Step S4140)

Upon determining that a request for outputting the raw data is received in step S4110, the processing circuit 130 generates luminance image data for the respective exposure periods by converting the values of the charge for each exposure period, the values being recorded in the recording medium 170, into pixel values. In this case, the processing circuit 130 generates output data in which timing data indicating the timing of each exposure period is added to the luminance image data for the respective exposure periods. The format of the output data is similar to, for example, the format illustrated in Figs. 7A and 7B. An identifier indicating that the data is raw data, that is, luminance image data, is added to the front-end of the output data.

(Step S4150)

The processing circuit 130 outputs the output data, generated in step S4130 or S4140, via the interface 150.
The processing circuit 130 repeatedly executes the operations in steps S1120 to S4150. As a result, the output of the distance image data and the output of the luminance image data for the respective exposure periods are switched therebetween in response to the request from the external control apparatus 200. The output of the distance image data and the output of the luminance image data for the respective exposure periods may be switched in an arbitrary frame. Alternatively, the processing circuit 130 may switch the output format every predetermined number of frames which is one or more. In this case, the processing circuit 130 switches between the output of the distance image data and the output of the luminance image data every predetermined number of frames, regardless of the request from the control apparatus 200.

[Example of Data Format]

Next, a description will be given of an example of the format of the data output by the distance measurement apparatus 100 in the present embodiment.

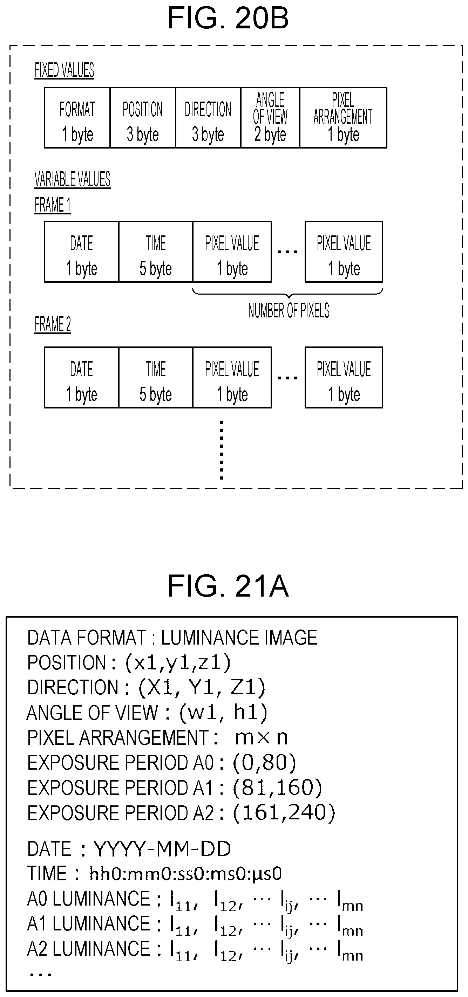

Figs. 20A and 20B illustrate an example of the format of the distance image data output from the interface 150 in the distance measurement apparatus 100. In this example, a data format, that is, an identifier indicating which of the distance data and the luminance data is included, is added to the front-end of fixed values that are common to a plurality of frames. When the data format is distance data, the fixed values do not include the data for the exposure periods A0 to A2 illustrated in Fig. 7B. The fixed values can be, for example, output once with respect to a front-end of the output data, as in each example described above, or may be output prior to the front-end frame during switching of the output data.

The output data for each frame includes data of date (e.g., 1 byte) and time (e.g., 5 bytes) at which the data for the frame is generated and data of values (e.g., 1 byte) obtained by converting the distances for the respective pixels into pixel values. The distance image is constructed from the data of the pixel values of the pixels.

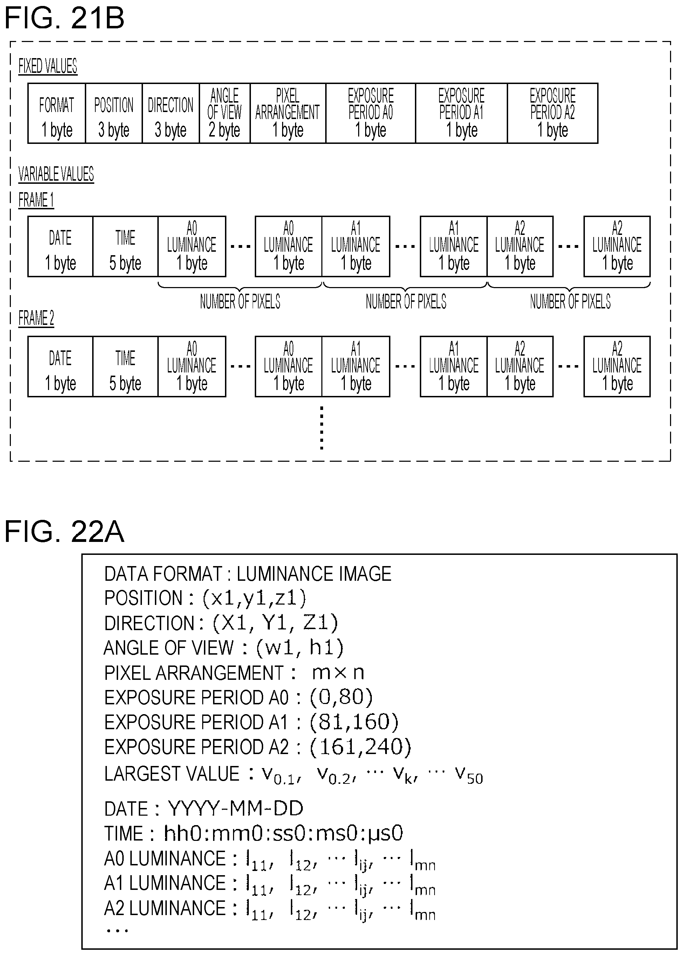

Figs. 21A and 21B are diagrams illustrating an example of the format of the luminance image data output from the distance measurement apparatus 100. The format of the luminance image data in this example is a format in which an identifier (e.g., 1 byte) indicating that the data format is luminance image data is added to the front-end of the fixed values in the example illustrated in Figs. 7A and 7B. Other points are the same as those in the example illustrated in Figs. 7A and 7B.

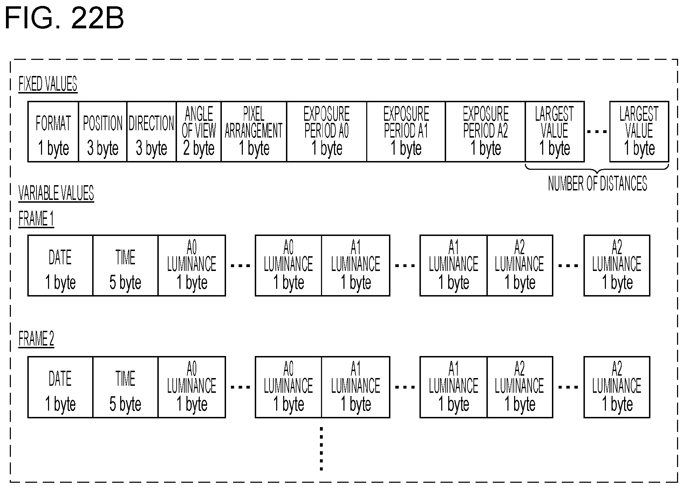

Figs. 22A and 22B are diagrams illustrating another example of the format of the luminance image data output from the distance measurement apparatus 100. In this example, data indicating largest values (e.g., 1 byte) of pixel values pre-measured for the respective distances are added, as fixed values, to the format illustrated in Figs. 22A and 22B. The largest values of the pixel values indicate, with respect to a plurality of pre-set distances, a total of pixel values measured at one pixel during the exposure periods A0 and A2 when it is assumed that light is reflected from an object (e.g., a white board) having a reflectance of 100%. This largest value of the pixel values may be recorded so that, with respect to distances within a specific distance range (e.g., 0.1 m to 50 m or the like), for example, the increment increases as the distance increase. The increment may be determined, for example, so as to be proportional to the base 2 logarithm of the distance. Data of the largest values of the pixel values is pre-measured for respective distances and is recorded to the recording medium 270, for example, in the form of a table or the like, as illustrated in Fig. 9. The data of the largest values of the pixel values may be used when the processing circuit 230 in the control apparatus 200 calculates reflectances for the respective pixels. In the first embodiment and the modifications thereof, data of such largest values of the pixel values may be included in the output data.

[Operation of Control Apparatus]

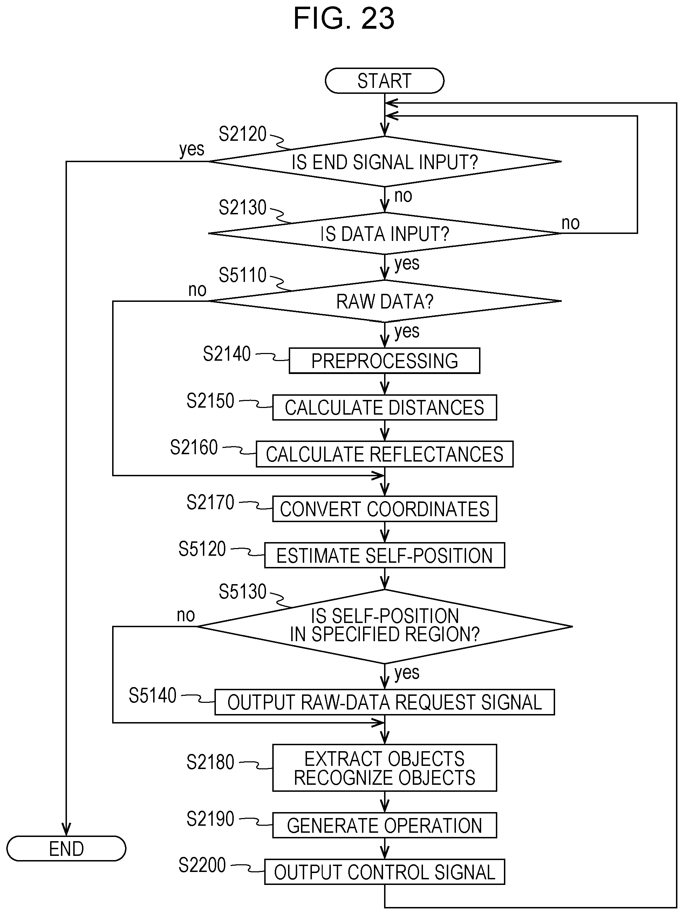

Fig. 23 is a flowchart illustrating an example of operations of the processing circuit 230 in the control apparatus 200 in the present embodiment. In the operations illustrated in Fig. 23, step S5110 is added between step S2130 and step S2140 in the flowchart illustrated in Fig. 8, and steps S5120 to S5140 are added between step S2170 and step S2180. Other points are the same as the operations illustrated in Fig. 8. Points that differ from the operations illustrated in Fig. 8 will be mainly described below.

(Step S5110)

Upon receiving the data from the distance measurement apparatus 100 in step S2130, the processing circuit 230 determines whether or not the data is raw data, that is, luminance image data. This determination is made based on the value of the data format, the value being included in the fixed values in the input data. When the input data is raw data, the process proceeds to step S2140. When the input data is not raw data, that is, is distance image data, the process proceeds to step S2170.

(Steps S2140 to S2160)

Processes in steps S2140, S2150, and S2160 are the same as the processes in the corresponding steps in Fig. 8. In step S2140, the processing circuit 230 performs, on the raw data, preprocessing for improving the accuracy of the distance calculation. The preprocessing is, for example, noise removal processing. In step S2150, by using the image data for the respective exposure periods, the noise removal processing being performed on the image data in step S2140, the processing circuit 230 calculates distances for the respective pixels to thereby generate distance image data. In step S2160, by using the distances for the respective pixels, the distances being calculated in step S2150, and the image data for the respective exposure periods, the noise removal processing being performed on the image data in step S2140, the processing circuit 230 calculates reflectances of the pixels for which the distances are calculated. The values for the distances for the reflectance of 100%, the values being used for the reflectance calculation, may be pre-recorded to the recording medium 170, as in the first embodiment, or may be included in the input data as fixed values, as illustrated in Figs. 22A and 22B.

(Step S2170)

The processing circuit 230 converts the distance image data, generated in step S2150, or the distance image data, input from the distance measurement apparatus 100, into point cloud data. The process in this conversion is the same as the process in step S2170 in Fig. 8.

(Step S5120)

The processing circuit 230 estimates the self-position, based on the point cloud data generated in step S2170 and map data obtained externally. The self-position may be estimated, for example, by performing matching between the map data and the point cloud data. For example, by using the point cloud data, the processing circuit 230 performs matching to identify a fixed object that matches a fixed object included in the map. Then, the self-position can be estimated based on the value of the distance to the fixed object and the distance to the fixed object which is obtained from the map.

(Step S5130)

The processing circuit 230 determines whether or not the position of the control apparatus 200, the position being estimated in step S5120, is located in a region that matches a predetermined condition. The condition may be, for example, a condition that the position is located within 10 m around an intersection. When the position of the control apparatus 200 matches the condition, the process proceeds to step S5140. When the position of the control apparatus 200 does not match the condition, the process proceeds to step S2190.

(Step S5140)

The processing circuit 230 transmits, via the interface 150 to the distance measurement apparatus 100, a signal for requesting output of the raw data. In step S5130, examples of a case in which the estimated position of the control apparatus 200 does not match the condition include a case in which the reliability of the distance image data input from the distance measurement apparatus 100 is low. In such a case, the processing circuit 230 issues a request for outputting the raw data, not the distance data, to the distance measurement apparatus 100. As a result, in a next frame, the raw data, instead of the distance data, is input to the control apparatus 200 from the distance measurement apparatus 100.

Operations in subsequent steps S2180 to S2200 are the same as the corresponding operations in Fig. 8.

In the present embodiment, the distance measurement apparatus 100 outputs one of the distance image data and the luminance image data for the respective exposure periods. Instead of such an operation, the distance measurement apparatus 100 may also output the luminance image data for the respective exposure periods, in addition to the distance image data, upon receiving a signal for requesting the luminance image data. Also, in the present embodiment, upon receiving the luminance image data for the respective exposure periods, the control apparatus 200 inevitably performs the preprocessing and the distance calculation. Instead of such an operation, the control apparatus 200 may perform the preprocessing and the distance calculation, only when necessary. The control apparatus 200 may record the luminance image data for the respective exposure periods to the recording medium 270 and accumulate the luminance image data therein. Alternatively, the luminance image data for the respective exposure periods may be accumulated through transmission to an apparatus, such as an external server or storage, over a network.

In the present embodiment, in step S5130, the control apparatus 200 determines whether or not output of a signal for requesting the raw data is needed, based on the self-position. Instead of such an operation, the control apparatus 200 may determine whether or not the output of the signal for requesting the raw data is needed, based on the state of the data obtained from the distance measurement apparatus 100. For example, the signal for requesting the raw data may be output, when the values of components in which spatial frequencies are high in the obtained distance image data or the rate of high-frequency components that occupy in entire components exceeds a predetermined threshold. Also, when the data obtained from the plurality of distance measurement apparatuses 100 is contradictory, the signal for requesting the raw data may be output. Alternatively, the signal for requesting the raw data may be output when the distance image data obtained from the distance measurement apparatus 100 and the map data are contradictory to each other, as in a case in which a point cloud is located inside a building indicated by the map data. For example, the signal for requesting the raw data may be output, when the number of points located at a position that contradicts the map data, the points being included in a point cloud corresponding to the pixels in the distance image data obtained from the distance measurement apparatus 100, is larger than or equal to a predetermined number. Alternatively, when the control apparatus 200 separately obtains image data, and the number of points that cannot be matched between the image data and the distance image data is larger than a predetermined number, the control apparatus 200 may output the signal for requesting the raw data.

Also, the control apparatus 200 may obtain a measurement result obtained by a measurement apparatus other than the distance measurement apparatus 100 and may determine whether or not the output of the signal for requesting the raw data is needed, based on the measurement result obtained by the other measurement apparatus. The other measurement apparatus may be a gyro-sensor. For example, when a measurement result of the gyro-sensor indicates a sharp change in the time direction, that is, when a strong shake or impact occurs, the signal for requesting the raw data may be output to the distance measurement apparatus 100. Alternatively, when the measurement result of the gyro-sensor indicates an angle larger than or equal to a predetermined threshold or smaller than or equal to the predetermined threshold, that is, when the entire system is tilted, as in a case in which the vehicle is traveling on a steep slope, the signal for requesting the raw data may be output to the distance measurement apparatus 100. Also, the other measurement apparatus may be a camera for shooting luminance images or moving images. For example, signals from the camera are obtained, and when a pixel indicating a luminance that exceeds a predetermined value exists in a frame of an acquired image or moving image, the signal for requesting the raw data may be output to the distance measurement apparatus 100. A case in which strong sunlight is incident or light of a headlight of an oncoming vehicle is incident is conceivable as a cause for a pixel with a high luminance, as described above, to appear. Alternatively, based on an analysis result of motion vectors obtained from the moving image, the signal for requesting the raw data may be output to the distance measurement apparatus 100. For example, when a motion vector angle is unstable, it is estimated that an impact or vibration is applied to the system, and thus the signal for requesting the raw data may be output.

When the system is a moving body, the control apparatus 200 may determine whether or not the output of the signal for requesting the raw data is needed, based on an operation plan of the moving body. When the operation plan is a specific operation, such as acceleration/deceleration, route change, or backup, the signal for requesting the raw data may be output to the distance measurement apparatus 100. Also, when a signal indicating a malfunction, such as an abnormality in brake locking or traction, is obtained from a sensor in various types of actuator in the moving body, the signal for requesting the raw data may be output to the distance measurement apparatus 100.

Based on the state of communication between the distance measurement apparatus 100 and the control apparatus 200, the processing circuit 230 in the control apparatus 200 may determine whether or not the signal for requesting the raw data is to be output. For example, when data that exceeds a predetermined amount of data is accumulated in a memory, not illustrated, comprised by the interface 210, a signal for requesting the distance image data may be output to the processing circuit 230. In one example, when the amount of data that the interface 210 receives for one second exceeds or is expected to exceed a predetermined amount of data, the processing circuit 230 may output a request signal for the distance image data.

[Advantages]

As described above, according to the present embodiment, the processing circuit 130 in the distance measurement apparatus 100 generates distance data for the respective pixels in addition to the luminance data for the respective pixels for each exposure period. Then, in accordance with a request from the external control apparatus 200, the distance data and the luminance data for the respective exposure periods are output through switching therebetween. The processing circuit 130 determines, for each frame, which of the distance data and a pair of the luminance data for the respective exposure periods and the timing data indicating the timing of each exposure period is to be output. Also, when the data sent from the distance measurement apparatus 100 does not satisfy the predetermined condition, the processing circuit 230 in the control apparatus 200 issues, to the distance measurement apparatus 100, a request for outputting the luminance data.

Such an operation makes it possible to realize a system in which the distance measurement apparatus 100 outputs the distance data in a normal time, and only when distance measurement with higher accuracy is needed, the distance measurement apparatus 100 outputs the luminance data for the respective exposure periods. The size of the luminance data for the respective exposure periods is larger than the size of the distance data. According to the operation in the present embodiment, the control apparatus 200 can obtain large-size luminance data for the pixels for the respective exposure periods, only when necessary. Thus, it is possible to reduce the amount of communication between the control apparatus 200 and the distance measurement apparatus 100.

In the operation in the present embodiment, in a normal time, the distance measurement apparatus 100 outputs the distance image data, and for example, at a place where a traffic situation is complicated, such as in the surroundings of an intersection or the like, the distance measurement apparatus 100 can output the luminance data for the respective exposure periods in accordance with an instruction from the control apparatus 200. The control apparatus 200 that has received the luminance data for the respective exposure periods from the distance measurement apparatus 100 can generate distance information with high accuracy by performing the preprocessing. Also, calculating the reflectances of the respective pixels can enhance the recognition performance and can improve the accuracy of environment recognition. In addition, directly transferring detailed luminance data for each exposure period to another apparatus, such as a server, through recording or over a network makes it possible to hold data indicating the state of a complicated traffic environment. This makes it possible to record data for verification which enables more detailed situation analysis, for example, when an accident occurs.

<First Modification of Second Embodiment, which is according to the invention>

Next, a description will be given of a first modification of the second embodiment, which is according to the invention. In this this modification, the light source 110 emits a lower-divergence light beam, not flash light. In order to project light to a wide range, the light source 110 is controlled so as to project the light a plurality of times while changing the direction of the light. The configuration of the light source 110 is similar to the configuration in the first modification of the first embodiment.

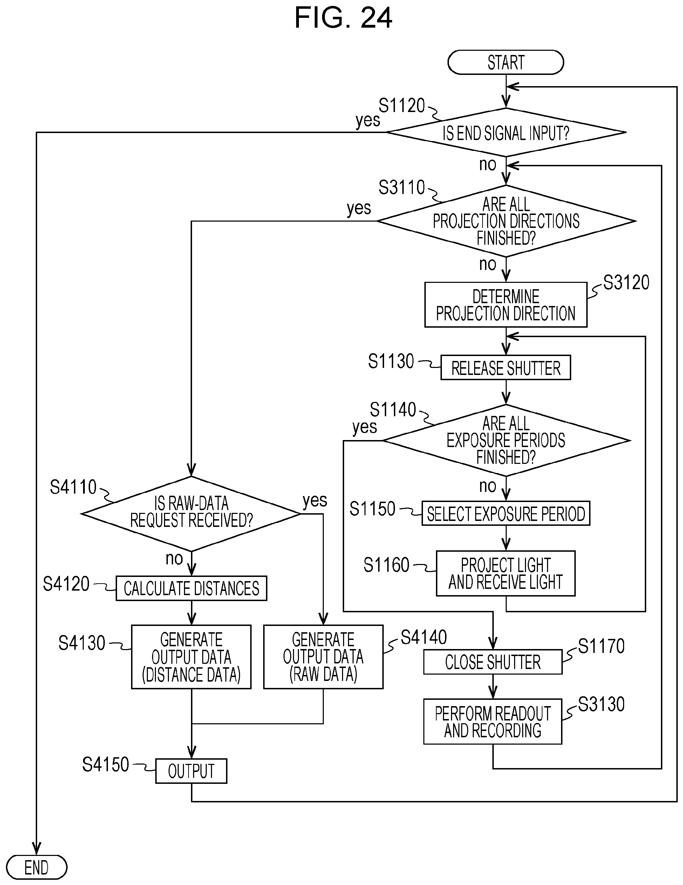

Fig. 24 is a flowchart illustrating operations of the distance measurement apparatus 100 in this modification. In the operations illustrated in Fig. 24, steps S3110 and S3120 are added to the operations illustrated in Fig. 19, and step S1180 is replaced with step S3130. Other points are the same as the operations illustrated in Fig. 19. Also, in the operations illustrated in Fig. 24, step S1190 in the operations illustrated in Fig. 13 is replaced with steps S4110 to S4150. Since the operations in the steps illustrated in Fig. 24 are similar to the operations in the corresponding steps in Fig. 13 or 19, descriptions thereof are omitted.

When a target scene is scanned with a light beam by using the light source 110 that can change the emission direction of the light beam, as in this modification, it is possible to obtain data needed to measure the distance to a more distant object than in a case in which the light source 110 that can emit flash light is used. Also, through the operations in steps S4110 to S4140 illustrated in Fig. 24, the output of the distance data and the output of the luminance data for the respective exposure periods can be switched in response to a request from an external apparatus.

A configuration that is similar to the second modification of the first embodiment may be employed as the configuration of the light source 110 and the light-receiving device 120. That is, a configuration may be employed in which the light source 110 that emits a light beam and the light-receiving device 120 comprising one light-receiving element or a small number of light-receiving elements are used to obtain received-light data needed to measure distances while changing the directions of the light source 110 and the light-receiving device 120. In such a configuration, the distance data and the luminance data for the respective exposure periods may also be output through switching therebetween.

<Second Modification of Second Embodiment, whose distance measurement apparatus 100 is according to the invention and whose control apparatus 200 is not according to the invention>

Next, a description will be given of a second modification of the second embodiment, whose distance measurement apparatus 100 is according to the invention and whose control apparatus 200 is not according to the invention. In this modification, the content of the output data is switched based on a processing result of the processing circuit 130 in the distance measurement apparatus 100, not in response to a request from an external apparatus, such as the control apparatus 200. The configuration in this modification is similar to the configuration in the second embodiment.

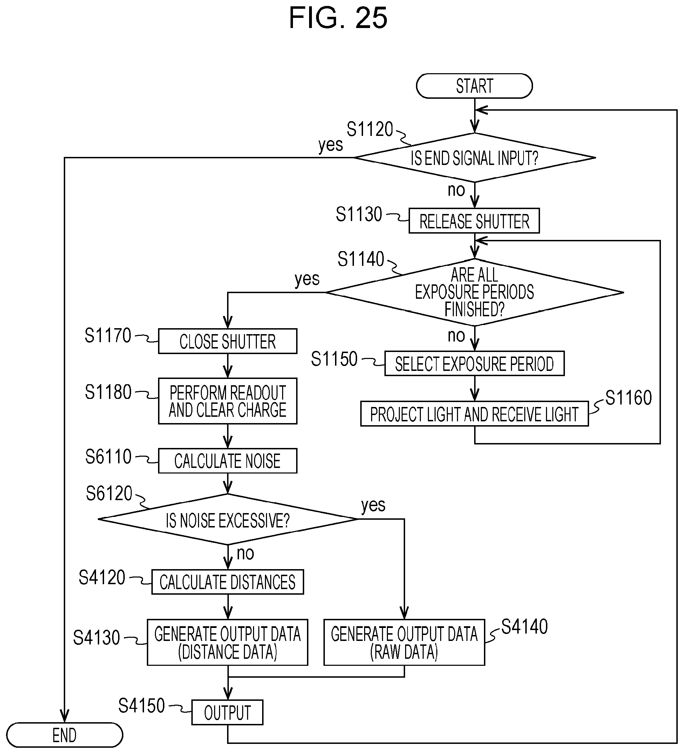

Fig. 25 is a flowchart illustrating operations of the processing circuit 130 in the distance measurement apparatus 100 in this modification. In the operations illustrated in Fig. 25, steps S6110 and S6120 are executed instead of step S4110 in the operations illustrated in Fig. 19. Steps other than steps S6110 and S6120 are the same as the corresponding steps illustrated in Fig. 19. Points that differ from the operations illustrated in Fig. 19 will be described below.

(Step S6110)

The processing circuit 130 processes the values of the charge for the respective pixels for each exposure period, the charge being read out from the charge accumulators 124, as two-dimensional array data according to the pixel array. Random noise can be extracted as high-frequency components of spatial frequencies in images. In this modification, the processing circuit 130 divides each of the luminance images in the exposure periods A0, A1, and A2 into a plurality of regions. For example, each luminance image may be divided into eight regions, with two regions in the y-axis direction and four regions in the x-axis direction. In this case, the luminance image for each of the exposure periods A0, A1, and A2 is also divided by a similar method. The processing circuit 130 performs spatial frequency analysis on two-dimensional data indicating each of the divided regions. For example, a two-dimensional Fourier transform may be used as a method for the frequency analysis. The processing circuit 130 extracts real parts of the frequency components, the real parts being obtained as a result of the Fourier transform. The processing circuit 130 calculates the integration of absolute values for components that are included in the extracted frequency components and that are higher than or equal to a predetermined frequency, and sets the calculated value as an amount of noise. The processing circuit 130 calculates the aforementioned amount of noise with respect to each of the divided regions of the three luminance images respectively corresponding to the exposure periods A0, A1, and A2.

(Step S6120)

The processing circuit 130 evaluates the magnitude of noise, based on the amount of noise in each divided region in each luminance image, the amount noise being calculated in step S6110. When the amount of noise exceeds a threshold in step S6120, the process proceeds to step S4140. When the amount of noise does not exceed the threshold in step S6120, the process proceeds to step S4120. In one example of an evaluation method for the magnitude of noise, when a total amount of noise in an entire image of any of the luminance images in the exposure periods A0, A1, and A2 is larger than a predetermined value, the processing circuit 130 may determine that the amount of noise is large. In another example of determining the magnitude of the amount of noise, when the amount of noise is larger than the predetermined value in any of the divided regions, the processing circuit 130 may determine that the amount of noise is large. For example, when the amount of noise is larger than the predetermined value in one of the eight divided regions, the processing circuit 130 may determine that the amount of noise is large. When the amount of noise is larger than the predetermined value in two or more regions, the processing circuit 130 may determine that the amount of noise is large. Dividing each luminance image into a plurality of regions and calculating and determining the amount of noise for each region makes it possible to perform detection without missing out even when the amount of noise in a partial region in the image is large.

In the method described above, upon determining that the amount of noise is large in the luminance image in any of the exposure periods A0, A1, and A2, the processing circuit 130 may determine that the "amount of noise exceeds the threshold". The method for determining the amount of noise is not limited to the above-described method and may be another method.

Upon determining that the amount of noise exceeds the threshold in step S6120, the processing circuit 130 outputs the luminance image data, that is, the raw data, via the interface 150 (S4140). On the other hand, upon determining that the noise does not exceed the threshold, the processing circuit 130 uses the above-described method to calculate distances for the respective pixels to thereby generate distance image data and outputs the generated distance image data (steps S4120 and S4130).

By repeating the operations in steps S1120 to S4150, the processing circuit 130 can switch between the output of the distance image data and the output of the luminance image data for the respective exposure periods, depending on the state of the obtained luminance data. Although, in this modification, the amount of noise that can be evaluated based on the magnitude of high-frequency components is used as the state of the luminance data, the evaluation may be performed based on another index related to the reliability of the luminance data. For example, a similar determination may be made based on reflectances for the respective pixels, the reflectances being calculated from the luminance data for the respective pixels and the data of the largest values of the pre-recorded luminance values for the respective distances for the reflectance of 100%. When a reflectance index value determined based on the reflectance(s) of one or more pixels in the three luminance images respectively corresponding to the exposure periods A0, A1, and A2 is lower than a predetermined value, the processing circuit 130 may output the luminance image data for the respective exposure periods, not the distance image data. Alternatively, when pixels whose luminance values exceed the predetermined threshold exist at a predetermined rate, the luminance image data for the respective exposure periods, not the distance image data, may be output.

In this modification, in steps S6110 and S6120, based on the state of the obtained luminance data, the processing circuit 130 determines whether or not the output of the luminance image data is needed. Instead of such an operation, the processing circuit 130 may output the luminance image data for the respective exposure periods, when the distance measurement apparatus 100 stops abnormally for some reason. An abnormality in the distance measurement apparatus 100 may be sensed by another measurement apparatus, such as a gyro-sensor.

Most-recent luminance image data for one or more frames, together with the time data, is stored in the recording medium 170 so that the luminance image data can be output when the distance measurement apparatus 100 stops abnormally. When the distance measurement apparatus 100 stops abnormally, the processing circuit 130 reads the luminance image data, accumulated in the recording medium 170, for each exposure period by tracing back from a point in time when the abnormal stop occurred, and outputs the luminance image data to the control apparatus 200. The luminance image data for the respective exposure periods may be transmitted not only to the control apparatus 200 but also to an external system, such as a traffic information center, as an output destination through communication.

Although the light source 110 that emits the flash light is used in this modification, a beam scanner that emits a low-divergence light beam may also be used as the light source 110, as in the first modification described above. Also, a light-receiving device comprising a light source that emits a low-divergence light beam and one light-receiving element or a small number of light-receiving elements may be used, as in the second modification of the first embodiment.

The data format in each example described above is exemplary, and the distance measurement apparatus 100 may output similar information in another data format. Also, the distance measurement apparatus 100 may reduce the amount of data by generating the luminance data or the distance image data in one of the formats described above and compressing the generated data by using a predetermined method.

When the plurality of distance measurement apparatuses 100 transmit data to one control apparatus 200, an identifier for identifying each distance measurement apparatus 100 may be added to the data included in the data format in each example described above.

When the plurality of distance measurement apparatuses 100 output the raw data to one control apparatus 200, the control apparatus 200 may merge and process the raw data from the plurality of distance measurement apparatuses 100. Such processing may include, for example, addition, averaging, filtering, or the like. Merging and processing the raw data output from the plurality of distance measurement apparatuses 100 makes it possible to improve the accuracy of the distance calculation.

<Third Modification of Second Embodiment, which is according to the invention>

Subsequently, a description will be given of a third modification of the second embodiment, which is according to the invention. In this modification, the processing circuit 130 in the distance measurement apparatus 100 determines which of the luminance data and the distance data is to be output for each region of an image, not for each frame. The processing circuit 130 in this modification divides a pixel group in the image sensor 121 into a plurality of regions and outputs, for each region, the distance data and the luminance data for the respective exposure periods through switching therebetween. Accordingly, the output data for each frame in this modification includes both the raw data and the distance data. The output data includes data for identifying each region and data indicating as which of the raw data and the distance data each region is output. After receiving the data from the distance measurement apparatus 100, the processing circuit 230 in the control apparatus 200 divides an image indicated by the data into a plurality of regions, determines which of the raw data and the distance data the data is with respect to each region, and performs processing according to a result of the determination.

The configuration of the system in this modification is the same as the configuration illustrated in Fig. 18. However, data recorded to the recording medium 270 and operations of the processing circuits 130 and 230 differ from those in the example in Fig. 18.

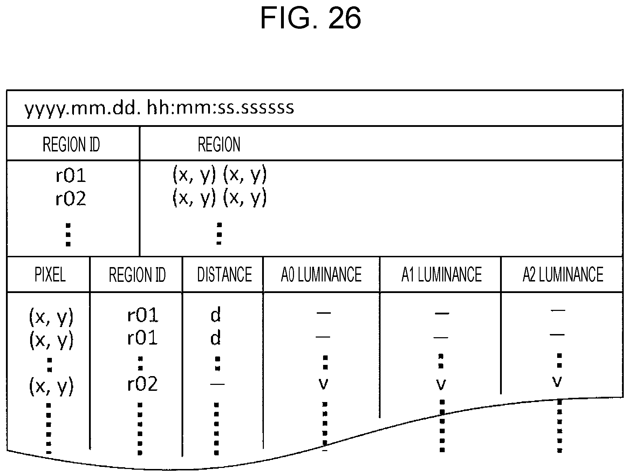

Fig. 26 is a table schematically illustrating one example of the data recorded to the recording medium 270. In this example, when the control apparatus 200 receives the image data from the distance measurement apparatus 100, data as illustrated in Fig. 26 is recorded to the recording medium 270. In the example illustrated in Fig. 26, date, a region ID, the range of a region, a region ID recorded for each pixel, a distance, a luminance in the exposure period A0, a luminance in the exposure period A1, and a luminance in the exposure period A3 are recorded. With respect to the pixels for which distance data is recorded, the luminance values in the exposure periods A0, A1, and A2 are not recorded and are left blank. Conversely, with respect to the pixels for which the luminance values in the exposure periods A0, A1, and A2 are recorded, distances are not recorded and are left blank. After obtaining the data transmitted from the distance measurement apparatus 100, the processing circuit 230 sequentially calculates distances for the pixels for which the values of the distances are not recorded, by using the data of the luminance values in the exposure periods A0, A1, and A2, and records the calculated distances. Thus, as the processing progresses, the blank distance data is sequentially replaced with calculated distance data.

[Operation of Distance Measurement Apparatus]

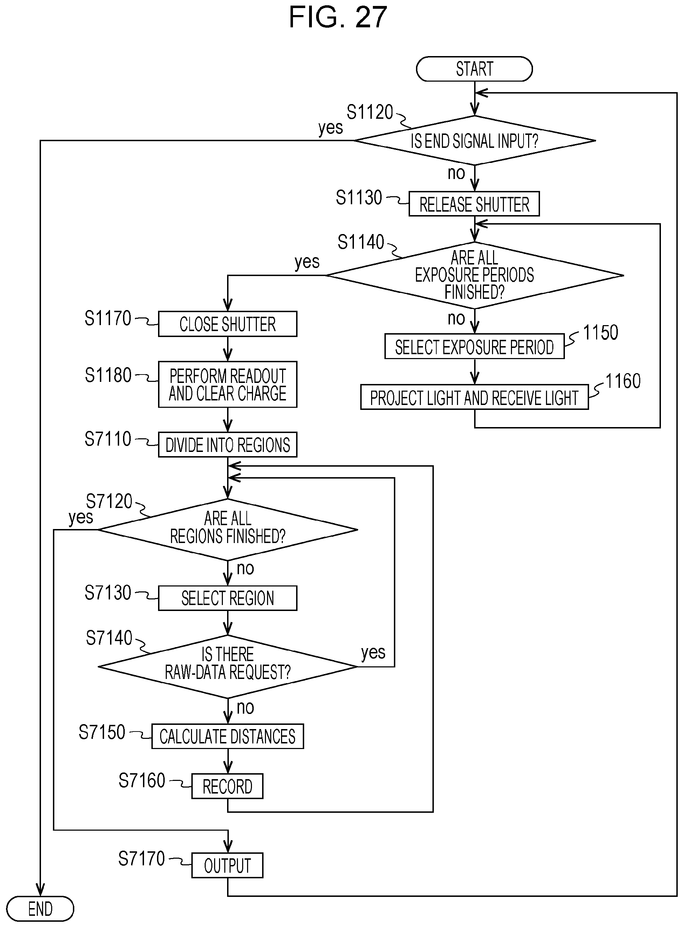

Fig. 27 is a flowchart illustrating operations of the distance measurement apparatus 100 in this modification. The operations illustrated in Fig. 27 are the same as the operations illustrated in Fig. 19, except that steps S4110 to S4150 in the operations illustrated in Fig. 19 are replaced with steps S7110 to S7170. Points that differ from the operations illustrated in Fig. 19 will be mainly described below.

(Step S7110)

When obtaining the luminance data for the respective exposure periods for one frame is completed in the operations in steps S1120 to S1180, the processing circuit 130 divides each image indicated by the data into a plurality of regions. At this point in time, the processing circuit 130 divides each image into regions in accordance with information of the region IDs and the region ranges that are stated in signals transmitted from the control apparatus 200.

(Step S7120)

The processing circuit 130 determines whether or not the generation of the output data is finished for all the regions divided in step S7110. When the generation of the output data is finished for all the regions, the process proceeds to step S7140. When a region for which the generation of the output data is not finished remains, the process proceeds to step S7130.

(Step S7130)

The processing circuit 130 selects one of the regions that are divided in step S7110 and for which the output data is not yet generated.

(Step S7140)

Based on the signals transmitted from the control apparatus 200, the processing circuit 130 determines whether or not the output of the raw data as the output data for the region selected in step S7130 is requested. When the output of the raw data is requested for the region, the process proceeds to step S7120. When the output of the raw data is not requested for the region, the process proceeds to step S7150.

(Step S7150)

With respect to the respective pixels in the region selected in step S7130, the processing circuit 130 calculates distances using the above-described method, based on the luminance values for the exposure periods.

(Step S7160)

The processing circuit 130 records the distances for the pixels, the distances being calculated in step S7150, to the recording medium 170.

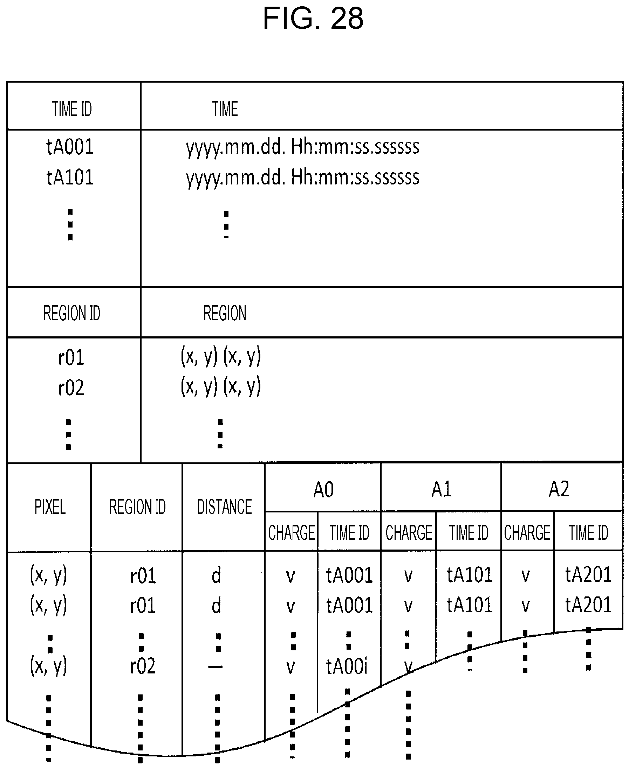

Fig. 28 is a table illustrating one example of the data recorded to the recording medium 170. A pair of the time ID and a detailed time and a pair of the region ID and the region range are recorded. Also, with respect to each pixel, an ID of a region in which the pixel is included, the value of charge in each exposure period which was read in step S1180, and a time ID for identifying each exposure period are recorded. With respect to the pixels in a region for which the output of the raw data is not requested, the distances calculated in step S7150 are also recorded. No distances are recorded with respect to the pixels in a region for which the output of the raw data is requested.

(Step S7170)

The processing circuit 130 converts the distances recorded for the respective pixels into pixel values to generate distance data. With respect to pixels for which there is no distance data, the values of charge for each exposure period are converted into luminance values to generate luminance data. The processing circuit 130 outputs the generated image data, together with detailed time data, via the interface 150.

[Example of Data Format]

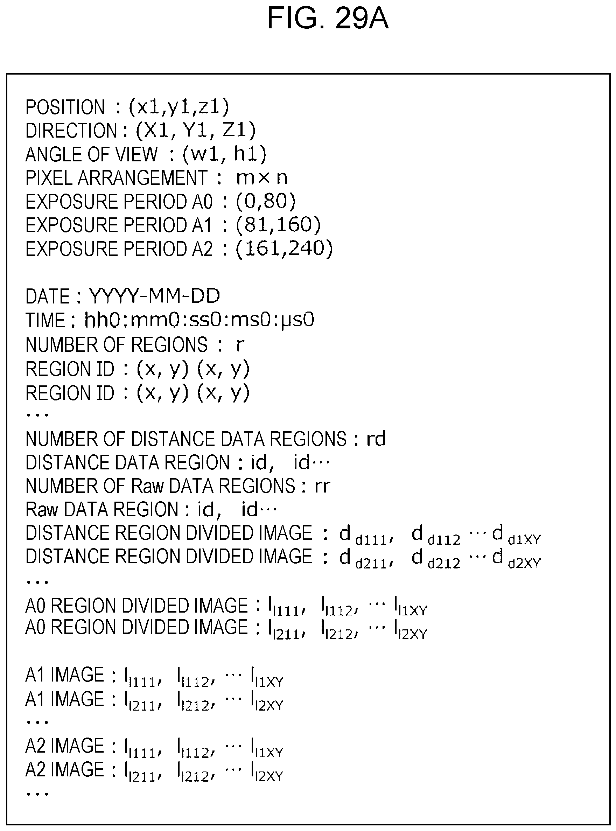

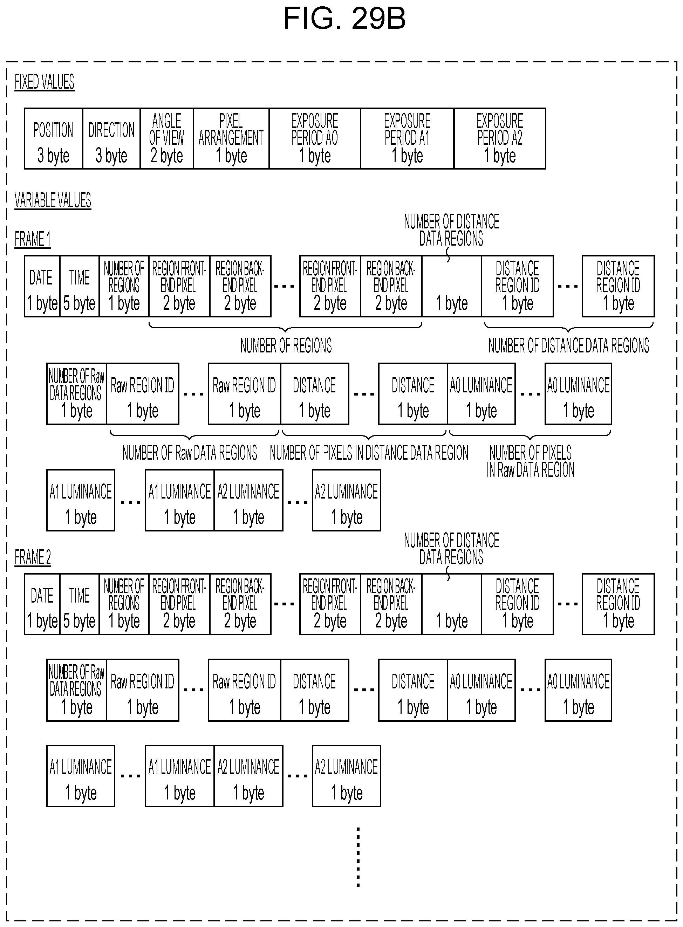

Figs. 29A and 29B are diagrams illustrating one example of the format of the output data. In this example, the position, the direction, the angle of view, the pixel arrangement, and the timing data of respective exposure periods of the distance measurement apparatus are output as fixed values that are common to a plurality of frames, as in the example in Figs. 7A and 7B.
In the example in Figs. 29A and 29B, data described below is sequentially output as values that vary for each frame. First, date and a detailed time when the data is obtained and the number of divided regions in the pixel array in the image sensor 121 are output. Subsequently, start pixel coordinates and back-end pixel coordinates representing the ranges of the respective regions are output according to the number of regions. In this modification, although the shape of each region is a rectangle, it may be another shape, such as an ellipse. In addition, the number of regions for which the distance data is output, IDs of the respective regions for which the distance data is output, the number of regions for which the raw data is output, and IDs of the respective regions for which the raw data is output follow. Subsequently to these pieces of information, distances for the respective pixels for which the output of the raw data is not requested are output. In addition, the luminance values of the respective pixels for which the output of the raw data is requested are sequentially output for each exposure period.

[Operation of Control Apparatus]

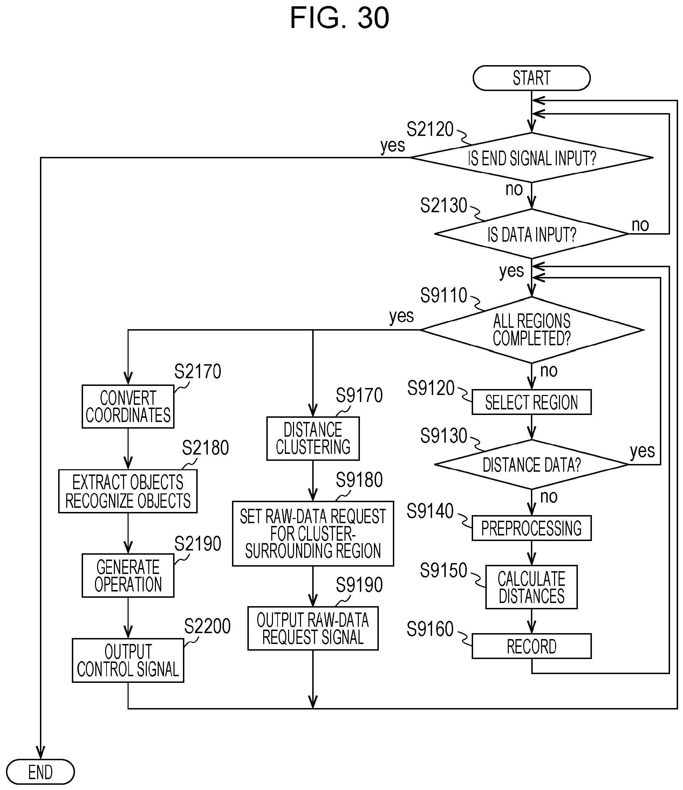

Fig. 30 is a flowchart illustrating an example of processing that is executed by the processing circuit 230 in the control apparatus 200 in this modification. Of steps illustrated in Fig. 30, steps S2120, S2130, and S2170 to S2200 are the same as the corresponding steps illustrated in Fig. 8. The operations in the steps will be described below.

(Step S2120)

The processing circuit 230 determines whether or not an operation end signal is input from an external apparatus, which is not illustrated. When the operation end signal is input, the operations end. When the operation end signal is not input, the process proceeds to step S2130.

(Step S2130)

The processing circuit 230 determines whether or not data from the distance measurement apparatus 100 is input. When data from the distance measurement apparatus 100 is input, the data is recorded to the recording medium 270, and the process proceeds to step S9110. When data from the distance measurement apparatus 100 is not input, the process proceeds to step S2120.

(Step S9110)

The processing circuit 230 obtains, from the input data for each frame which is recorded in the recording medium 270, data indicating the number of regions when an image indicated by the data is divided into a plurality of regions and the pixel range of each region. In addition, the processing circuit 230 determines whether or not the processing is finished on all the regions. When the processing is finished on all the regions, the process proceeds to steps S9170 and S2170. When there is any unprocessed region in the divided regions, the process proceeds to step S9120. Although, in this modification, the processes in steps S9170 to S9190 and the processes in steps S2170 to S2200 are performed in a parallel manner, they may be performed in a serial manner.

(Step S9120)

The processing circuit 230 selects one of the unprocessed regions of the divided regions.

(Step S9130)

By referring to the input data for each frame which is recorded in the recording medium 270, the processing circuit 230 determines whether or not the region ID of the region selected in step S9120 is included in distance region IDs. When the region ID of the region is included in the distance region IDs, the process returns to step S9110. When the region ID of the region is not included in the distance region IDs, that is, when the region ID of the region is included in raw region IDs, the process proceeds to step S9140.

(Step S9140)

The processing circuit 230 obtains, of the data input from the distance measurement apparatus 100 and recorded in the recording medium 270, raw data for the region, that is, luminance data for the respective exposure periods A0, A1, and A2 illustrated in Figs. 29A and 29B. The processing circuit 230 performs the preprocessing on the obtained raw data. For example, noise removal processing is performed as an example of the preprocessing. In the noise removal, noise removal processing using an adaptive filter is performed on the luminance image for the exposure period A0, the luminance image for the exposure period A1, and the luminance image for the exposure period A2, the luminance images being included in the pixel range extracted as the above-described region. Noise removal processing other than with an adaptive filter may be performed as the preprocessing. Also, signal processing, such as contrast enhancement or edge extraction, other than the noise removal processing may be performed.

(Step S9150)

With respect to the pixel range included in the region, the processing circuit 230 performs distance calculation for the individual pixels by using the image data for the respective exposure periods, the noise removal processing being performed on the image data in step S9140. The pixel values of the same pixels can be extracted from the image data in the region for the respective exposure periods, and distances can be determined based on the above-described calculation expression.

(Step S9160)

The processing circuit 230 stores distance data for the respective pixels in the region, the distance data being calculated in step S9150, in the recording medium 270. After step S9160 is executed, the process proceeds to step S9110.

(Step S9170)

When distance data is generated for all the regions, the processing circuit 230 generates distance image data by combining the distances for the pixels having distance values in the data input from the distance measurement apparatus 100 and the distances for the pixels for which the distances are calculated in step S9150. Then, the pixels in the distance image data are clustered according to the distances. As a result, each pixel in the distance image data is classified into any of a plurality of clusters respectively corresponding to distance ranges.

(Step S9180)

With respect to each of clusters except zero-distance and infinite-distance clusters of the clusters generated in step S9170, the processing circuit 230 extracts a surrounding region of the cluster in which a ratio N1/N2 of the number N1 of pixels inside the distance range that characterizes the cluster to the number N2 of pixels outside the distance range that characterizes the cluster is larger than or equal to a predetermined first threshold and is smaller than a second threshold, which is larger than the first threshold. The processing circuit 230 sets, as a raw-data request region, a rectangular region that is the closest to the extracted region.

(Step S9190)

The processing circuit 230 divides a region set in step S9180, the region not being the raw-data request region, into one or more rectangular regions and designates each of the rectangular region(s) as a non-raw-data request region, that is, as a distance-data request region. With respect to each of the raw-data request regions and the distance-data request regions, the processing circuit 230 transmits instruction signals including data indicating the range of the region and a data format specified for the region, that is, a data code indicating the raw data or the distance data, to the distance measurement apparatus 100.

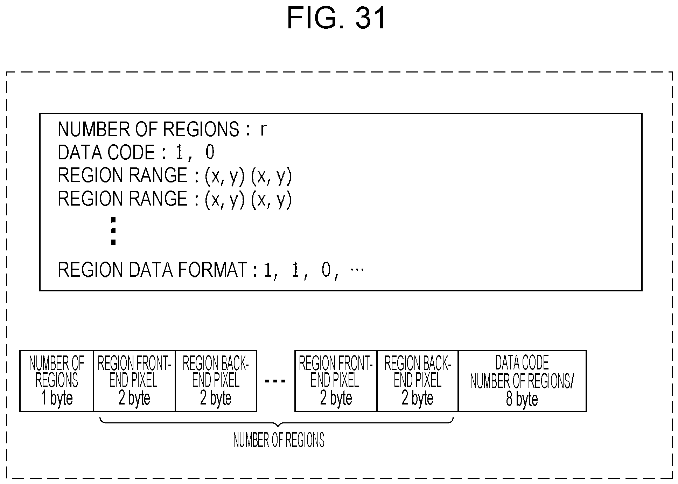

Fig. 31 is a diagram illustrating one example of the format of the instruction signals. In the example illustrated in Fig. 31, the instruction signals include the number of regions, a data code (i.e., a binary indicating raw data/distance data), the range of each region, and data indicating data codes stated in order of region IDs.
In operations in steps S9170 to S9190, the processing circuit 230 generates output signals for the distance measurement apparatus 100. In parallel, in operations in steps S2170 to S2200, the processing circuit 230 generates an autonomous-car control signal based on the outputs of the distance measurement apparatus 100. The operations in steps S2170 to S2200 are the same as the corresponding operations in Fig. 8. After steps S9190 and S2200, the process returns to step S2120, and similar operations are repeated.

[Advantages]

The processing circuit 230 in the control apparatus 200 in this modification divides a pixel group in the image sensor 121 in the distance measurement apparatus 100 into a plurality of regions, based on the distance image data generated based on the outputs of the distance measurement apparatus 100, as described above. Then, a request for outputting the raw data or outputting the distance data is issued to the distance measurement apparatus 100 for each region. In response to the request from the control apparatus 200, the processing circuit 130 in the distance measurement apparatus 100 makes a determination for each region as to whether the raw data is to be output or the distance data is to be output. This makes it possible to, for example, issue a request for outputting the raw data with respect to a region for which the accuracy of the distance data output from the distance measurement apparatus 100 is low, thereby allowing the processing circuit 230 in the control apparatus 200 to perform more detailed signal processing. As a result, the processing circuit 230 can generate high-accuracy distance data that is difficult for the processing circuit 130 in the distance measurement apparatus 100, which has relatively low performance, to generate in a short period of time.
In this modification, the control apparatus 200 requests the distance measurement apparatus 100 to output the raw data or the distance data for each region. Instead of such an operation, for example, the distance measurement apparatus 200 may be caused to output the distance data for all pixels and may be requested to output the raw data, in addition to the distance data, with respect to a specific region. When a request for additionally outputting the raw data for a specific region is issued, the instruction signals output from the control apparatus 200 may include, for example, data specifying the number of regions for which the raw data is to be additionally output and the ranges of the respective regions.

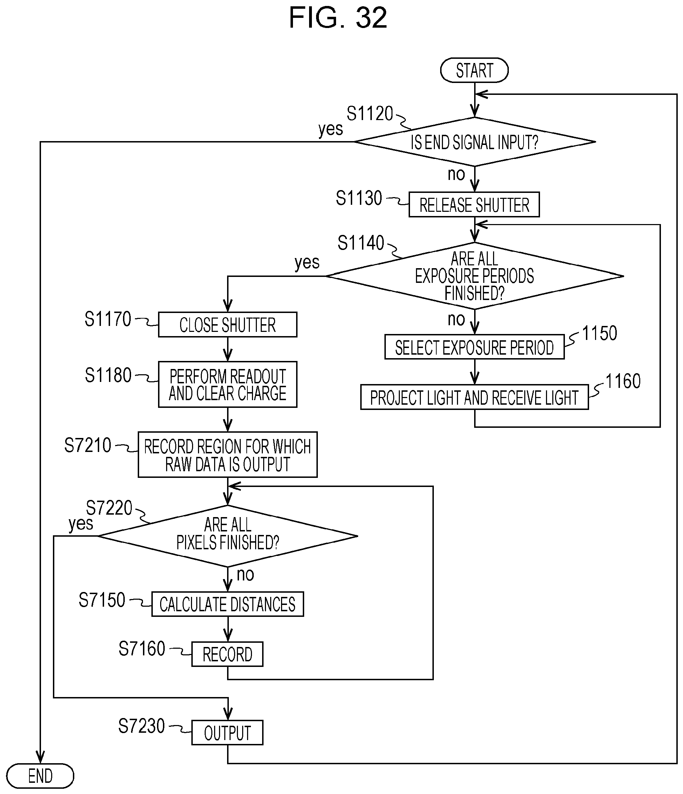

Fig. 32 is a flowchart illustrating one example of operations of the distance measurement apparatus 100 upon obtaining instruction signals for requesting additionally outputting the raw data with respect to a specific region. In operations illustrated in Fig. 32, steps S1110 to S1180, S7150, and S7160 are the same as the corresponding steps in Fig. 27. In the example illustrated in Fig. 32, steps S7210 and S7220 are executed instead of steps S7110, S7120, S7130, and S7240 in the example in Fig. 27. Also, step S7230 is executed instead of step S7170. These steps will be described below.

(Step S7210)

After the operation in step S1180, the processing circuit 130 records, to the recording medium 170, the region that is stated in the instruction signals transmitted from the control apparatus 200 and for which the raw data, in addition to the distance data, is output.

(Step S7220)

The processing circuit 130 determines whether or not the distance calculation is finished on all the pixels in the image sensor 121. When the distance calculation on all the pixels is finished, the process proceeds to step S7230. When there is a pixel on which the distance calculation is not finished, the operations in steps S7150 and S7160 are performed, and the process returns to step S7220.

(Step S7230)

The processing circuit 130 outputs the distance data for the pixels, the distance data being recorded in the recording medium 170, and the raw data for the pixels in the region specified by the instruction signals transmitted from the control apparatus 200.

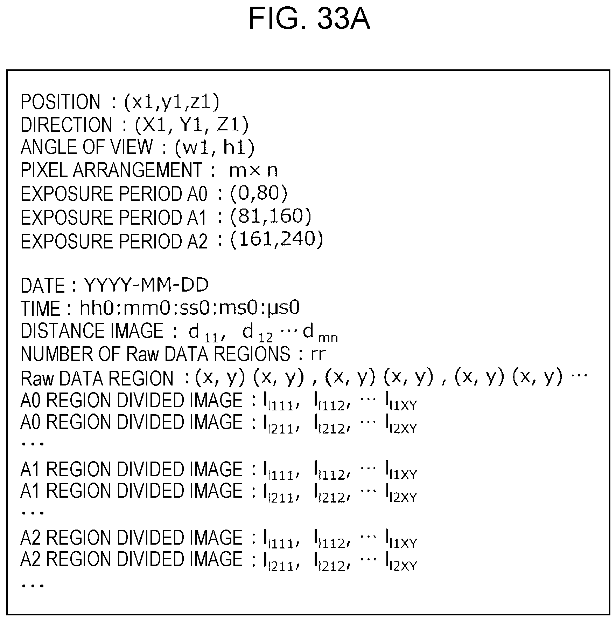

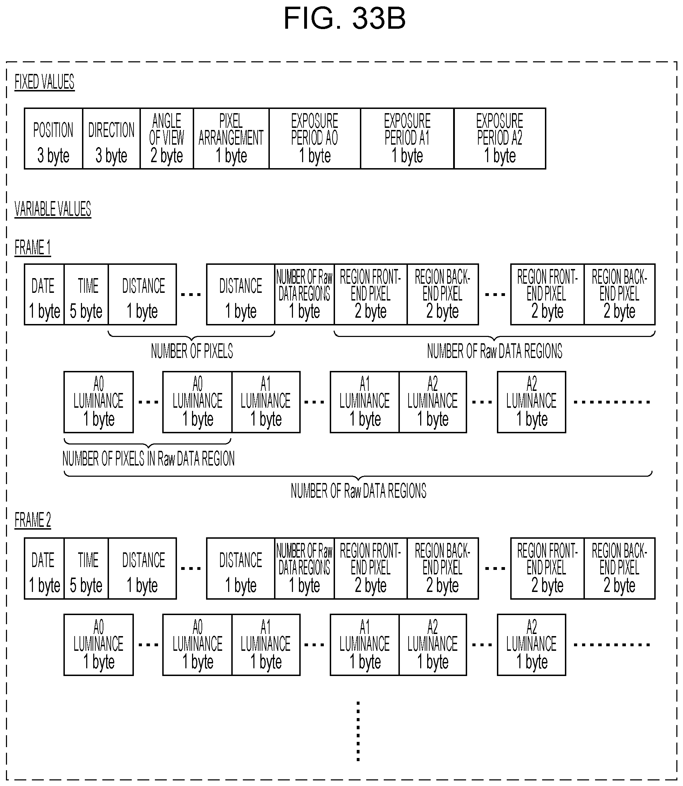

Figs. 33A and 33B are diagrams illustrating one example of an output format in this modification. In this example, subsequent to the fixed values, date and time, a time point, distances calculated for all pixels, the number of regions for which the raw data is output, the ranges of the respective regions for which the raw data is output, and luminances indicating charge respectively accumulated in the exposure periods A0, A1, and A2 with respect to the pixels in each region are output for each frame. When the distance measurement apparatus 100 further outputs, in addition to the distance information for all the pixels, the raw data with respect to the pixels in a specific region, data in the format as illustrated in Figs. 33A and 33B may be output.

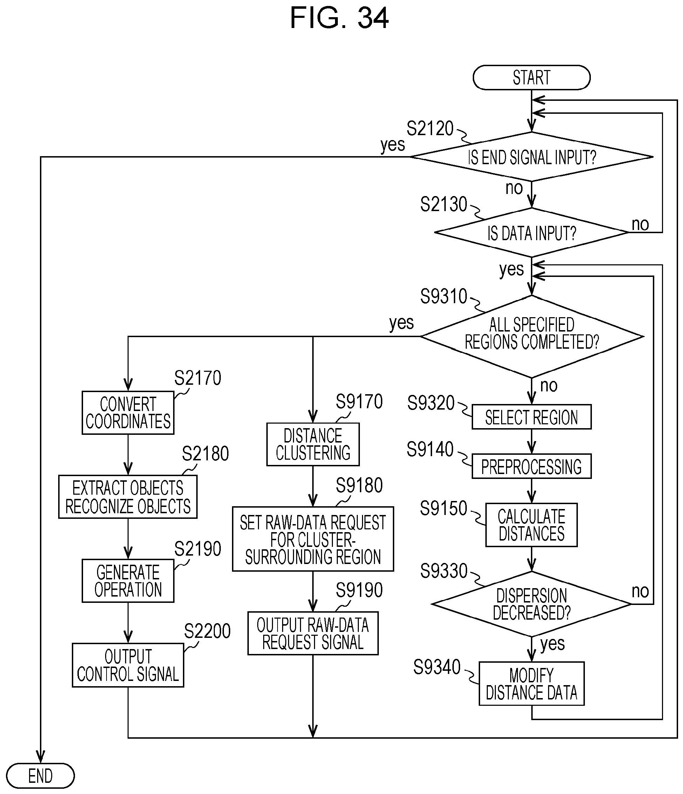

Fig. 34 is a flowchart illustrating one example of operations of the processing circuit 230 when the control apparatus 200 receives data output in the format illustrated in Figs. 33A and 33B. The operations illustrated in Fig. 34 are similar to the operations illustrated in Fig. 30, except that steps S9110 to S9160 in the operations illustrated in Fig. 30 are replaced with steps S9310 S9340. Operations that differ from the example in Fig. 30 are mainly described below.

(Step S9310)

The processing circuit 230 identifies a region for which the raw data is output and the pixel range thereof, by using the input data for each frame which is recorded in the recording medium 270, and determines whether or not the processing is completed on all the regions for which the raw data is output. When the processing on all the regions for which the raw data is output is finished, the process proceeds to steps S9170 and S2170. When there is any unprocessed region in the regions for which the raw data is output, the process proceeds to step S9320.

(Step S9320)

By referring to the input data for each frame which is recorded in the recording medium 270, the processing circuit 230 selects one of the unprocessed regions in the regions for which the raw data is output.

(Step S9140)

With respect to the pixels in the range of the region selected in step S9320, the processing circuit 230 obtains luminance values in the respective exposure periods A0, A1, and A2. The processing circuit 230 performs preprocessing on the obtained luminance values in the exposure periods. The preprocessing is, for example, the above-described noise removal processing.

(Step S9150)

With respect to the pixels included in the region, the processing circuit 230 calculates distances for the respective pixels by using the image data for the respective exposure periods, the noise removal processing being performed on the image data in step S9140.

(Step S9330)

With respect to the pixel range included in the region, the processing circuit 230 compares dispersion of the distance data for the respective pixels, the distance data being output from the distance measurement apparatus 100, with dispersion of the distance data on which the noise removal processing was performed in step S9140 and that was calculated in step S9150. When the dispersion of the distance data for the respective pixels, the distance data being calculated in step S9150, is smaller than the dispersion of the distance data output from the distance measurement apparatus, the process proceeds to step S9340. When the dispersion of the distance data for the respective pixels, the distance data being calculated in step S9150, is larger than or equal to the dispersion of the distance data output from the distance measurement apparatus, the process returns to step S9310.

(Step S9340)

The processing circuit 230 replaces the values of the distances for the respective pixels in the region, the values being recorded in the recording medium 170, with the values of the distances calculated in step S9150. This makes it possible to modify the distance data for the region to the distance data in which noise is reduced.

Although, in this modification, the control apparatus 200 clusters a distance image for each distance range and divides the image into a plurality of regions, based on the state of the distribution of the distance data for surrounding pixels of the clusters, the plurality of regions may be determined using another method. The range of each region may be fixed without being changed for each frame. Also, the regions may be set based on the distribution of the distance data or the magnitude of noise. Alternatively, the setting of the regions may also be changed according to the speed of a moving body on which the distance measurement apparatus 100 and the control apparatus 200 are mounted. **In** addition, the regions may be set using a method other than those described above.

When pieces of data whose data formats are different from each other are mixed in one frame, as in this modification, it is difficult to compress the data. Thus, when output data in which the distance data and the raw data are mixed in one frame is compressed, the distance data and the raw data may be divided and compressed. The control apparatus 200, which receives the data transmitted from the distance measurement apparatus 100, may process a data set in which the obtained distance data and raw data are mixed and may make the formats of the distance data for all pixels match each other for compression.

Although, in this modification, the light source 110 in the distance measurement apparatus 100 emits flash light, a beam scanner that emits a small-divergence-angle light beam may be used as the light source 110, as in the first modification of the first embodiment. When a beam scanner is used, the movement of the direction of the projection from the light source 110 can be performed using a method that is similar to the method in the first modification of the first embodiment. Operations that are similar to those in the first modification of the first embodiment can be applied to the timings of the light projection and the light reception and the repetition of exposure involved in a scan operation. With respect to the output data, in order to deal with a distance-measurement time mismatch that occurs when wide-range distance measurement is performed through scanning with a small-divergence-angle light beam, the output data may include detailed time data for respective directions of the light beam.

Although operations based on the indirect ToF method for obtaining respective pieces of received-light data in three exposure periods have been mainly described in the embodiments above, the present disclosure is not limited to the operations. For example, the number of exposure periods is not limited to three and may be two or may be four or more.

Industrial Applicability

The technology disclosed herein can be widely utilized for apparatuses or systems that perform distance measurement. For example, the technology disclosed herein can be used for constituent elements of LiDAR (Light Detection and Ranging) systems.

Reference Signs List

100 distance measurement apparatus
110 light source
120 light-receiving device
121 image sensor
122 light-receiving element
123 switch

124 charge accumulator
130 processing circuit
150 interface
160 clock
170 recording medium
200 vehicle control apparatus
210 interface
230 processing circuit
270 recording medium
240 actuator

**Claims**

1. A sensing device (100) comprising:

   a light source (110);
   a light-receiving device (120) comprising at least one light-receiving element that performs photoelectric conversion; and
   a processing circuit (130) that controls the light source (110) and the light-receiving device (120),
   wherein the processing circuit (130)
   causes the light source (110) to emit light to a scene at least once,
   causes the light-receiving device (120) to receive reflected light in each of a plurality of exposure periods, the reflected light being resulting from the emitted light,
   generates, based on received-light data from the light-receiving device (120), luminance data that indicates distributions of amounts of reflected light corresponding to the respective exposure periods and that are used for generating distance data for the scene, and
   outputs the luminance data and timing data indicating timings of the respective exposure periods; and
   **characterized in that**
   the processing circuit (130) further
   generates the distance data, and
   outputs the distance data and the luminance data through switching therebetween.

2. The sensing device (100) according to claim 1,
   wherein in accordance with a request from an external apparatus (200), the processing circuit (130) outputs the distance data and the luminance data through switching therebetween.

3. The sensing device (100) according to claim 1 or 2,
   wherein in accordance with a state of the received-light data, the processing circuit (130) outputs the distance data and the luminance data through switching therebetween.

4. The sensing device (100) according to one of claims 1 to 3,

   wherein the processing circuit (130)
   calculates an amount of noise in the received-light data with respect to at least one of the exposure periods,
   outputs the luminance data when the amount of noise exceeds a threshold, and
   outputs the distance data when the amount of noise does not exceed the threshold.

5. The sensing device (100) according to one of claims 1 to 3,

   wherein the processing circuit (130)
   calculates a reflectance, by using the received-light data with respect to at least one of the exposure periods,
   outputs the distance data when the reflectance exceeds a threshold, and
   outputs the luminance data when the reflectance does not exceed the threshold.

6. The sensing device (100) according to one of claims 1 to 5,

   wherein the processing circuit (130) repeats frame operations,

each of the frame operations includes

causing the light source (110) to emit the light to the scene,
causing the light-receiving device (120) to generate the received-light data for each of the exposure periods, and
outputting at least one selected from the group consisting of the distance data and a pair of the luminance data and the timing data; and

wherein the processing circuit (130) determines, for each frame operation, which of the distance data and the pair of the luminance data and the timing data is to be output.

7. The sensing device (100) according to claim 6,
wherein, when the luminance data or the distance data is to be output, the processing circuit adds an identifier indicating which data of the luminance data and the distance data is included and outputs the luminance data or the distance data.

8. The sensing device (100) according to one of claims 1 to 7,
wherein the processing circuit (130) outputs the distance data and the luminance data through switching therebetween for each of a plurality of regions included in the scene.

9. The sensing device (100) according to claim 6 or 7,
wherein, when the processing circuit (130) switches between the output of the distance data and the output of the pair of the luminance data and the timing data, the processing circuit outputs data of fixed values that are common to the frame operations.

10. An information processing apparatus (200) comprising:

a memory (270); and
a processing circuit (230),
wherein the processing circuit (230)
obtains, from a sensing device (100), luminance data indicating distributions of amounts of reflected light from a scene, the reflected light being received in respective exposure periods, and timing data indicating timings of the respective exposure periods,
records the luminance data and the timing data to the memory (270),
performs image processing on the luminance data, and
generates first distance data, based on the luminance data after the image processing and the timing data; and
**characterized in that**
the processing circuit (230) transmits, to the sensing device (100), a signal for requesting switching between output of second distance data and output of the luminance data, the second distance data being generated in the sensing device (100), based on the luminance data and the timing data.

11. The information processing apparatus (200) according to claim 10,

wherein the processing circuit (230)
further obtains, from the sensing device, identification data indicating which of the second distance data and the luminance data is output, and
switches processing on data output from the sensing device, based on the identification data.

12. The information processing apparatus (200) according to claim 10 or 11,

wherein the processing circuit (230)
identifies a self-position of the sensing device, and
transmits, to the sensing device (100), a signal for requesting output of the luminance data, when the self-position of the sensing device (100) satisfies a predetermined condition.

13. The information processing apparatus (200) according to claim 10 or 11,

wherein the processing circuit (230)

determines an amount of noise in the luminance data, and

transmits, to the sensing device (100), a signal for requesting output of the luminance data, when the amount of noise is larger than a reference value.

**14.** A computer program that causes a computer to execute:

causing a light source (110) to emit light to a scene at least once;

causing the light-receiving device (120) to receive reflected light in each of a plurality of exposure periods, the reflected light being resulting from the emitted light;

generating, based on received-light data from the light-receiving device (120), luminance data that indicates distributions of amounts of reflected light corresponding to the respective exposure periods and that are used for generating distance data for the scene; and

outputting the luminance data and timing data indicating timings of the respective exposure periods; and

**characterized in that**

the computer program further causes the computer to execute: generating the distance data, and outputting the distance data and the luminance data through switching therebetween.

**15.** A computer program that causes a computer to execute:

obtaining, from a sensing device (100), luminance data indicating distributions of amounts of reflected light from a scene, the reflected light being received in respective exposure periods, and timing data indicating timings of the respective exposure periods;

recording the luminance data and the timing data to a memory;

performing image processing on the luminance data; and

generating first distance data, based on the luminance data after the image processing and the timing data; and

**characterized in that**

the computer program further causes the computer to execute: transmitting, to the sensing device, a signal for requesting switching between output of second distance data and output of the luminance data, the second distance data being generated in the sensing device, based on the luminance data and the timing data.

**Patentansprüche**

**1.** Sensorvorrichtung (100), mit:

einer Lichtquelle (110);

einer Lichtempfangseinrichtung (120), die mindestens ein Lichtempfangselement aufweist, das eine photoelektrische Umwandlung durchführt; und

einer Verarbeitungsschaltung (130), die die Lichtquelle (110) und die Lichtempfangseinrichtung (120) steuert, wobei die Verarbeitungsschaltung (130)

bewirkt, dass die Lichtquelle (110) mindestens einmal Licht auf eine Szene strahlt,

bewirkt, dass die Lichtempfangseinrichtung (120) in jedem von mehreren Belichtungsperioden reflektiertes Licht empfängt, wobei das reflektierte Licht aus dem ausgestrahlten Licht resultiert,

auf der Grundlage von Empfangslichtdaten von der Lichtempfangseinrichtung (120) Luminanzdaten erzeugt, die Verteilungen von Mengen an reflektiertem Licht entsprechend den jeweiligen Belichtungsperioden angeben und die zum Erzeugen von Entfernungsdaten für die Szene verwendet werden, und

die Luminanzdaten und Zeitdaten ausgibt, die Zeitpunkte der jeweiligen Belichtungsperioden angeben; und

**dadurch gekennzeichnet, dass**

die Verarbeitungsschaltung (130) ferner

die Entfernungsdaten erzeugt und

die Entfernungsdaten und die Luminanzdaten durch Umschalten zwischen diesen ausgibt.

**2.** Sensorvorrichtung (100) gemäß Anspruch 1,

wobei die Verarbeitungsschaltung (130) gemäß einer Anforderung von einer externen Vorrichtung (200) die Entfernungsdaten und die Luminanzdaten durch Umschalten zwischen diesen ausgibt.

**3.** Sensorvorrichtung (100) gemäß Anspruch 1 oder 2,

wobei die Verarbeitungsschaltung (130) entsprechend einem Zustand der empfangenen Lichtdaten die Entfernungsdaten und die Luminanzdaten durch Umschalten zwischen diesen ausgibt.

4. Sensorvorrichtung (100) gemäß einem der Ansprüche 1 bis 3,

   wobei die Verarbeitungsschaltung (130)
   einen Rauschanteil in den empfangenen Lichtdaten in Bezug auf mindestens eine der Belichtungsperioden berechnet,
   die Luminanzdaten ausgibt, wenn der Rauschanteil einen Schwellenwert überschreitet, und die Entfernungsdaten ausgibt, wenn der Rauschanteil den Schwellenwert nicht überschreitet.

5. Sensorvorrichtung (100) gemäß einem der Ansprüche 1 bis 3,

   wobei die Verarbeitungsschaltung (130)
   eine Reflexion berechnet, indem sie die empfangenen Lichtdaten in Bezug auf mindestens eine der Belichtungsperioden verwendet,
   die Entfernungsdaten ausgibt, wenn die Reflexion einen Schwellenwert überschreitet, und
   die Luminanzdaten ausgibt, wenn die Reflexion den Schwellenwert nicht überschreitet.

6. Sensorvorrichtung (100) gemäß einem der Ansprüche 1 bis 5,

   wobei die Verarbeitungsschaltung (130) Blockoperationen wiederholt, wobei jede der Blockoperationen umfasst
   Bewirken, dass die Lichtquelle (110) das Licht auf die Szene ausstrahlt,
   Bewirken, dass die Lichtempfangseinrichtung (120) die empfangenen Lichtdaten für jede der Belichtungsperioden erzeugt, und
   Ausgeben der Entfernungsdaten und/oder eines Paar aus den Luminanzdaten und den Zeitdaten; und
   wobei die Verarbeitungsschaltung (130) für jede Blockoperation bestimmt, welche der Entfernungsdaten und welches Paar aus den Luminanzdaten und den Zeitdaten auszugeben sind.

7. Sensorvorrichtung (100) gemäß Anspruch 6,
   wobei, wenn die Luminanzdaten oder die Entfernungsdaten auszugeben sind, die Verarbeitungsschaltung eine Kennung hinzufügt, die angibt, welche Daten aus den Luminanzdaten und den Entfernungsdaten enthalten sind, und die Luminanzdaten oder die Entfernungsdaten ausgibt.

8. Sensorvorrichtung (100) gemäß einem der Ansprüche 1 bis 7,
   wobei die Verarbeitungsschaltung (130) die Entfernungsdaten und die Luminanzdaten durch Umschalten zwischen diesen für jedes von mehreren in der Szene enthaltenen Gebieten ausgibt.

9. Sensorvorrichtung (100) gemäß Anspruch 6 oder 7, wobei die Verarbeitungsschaltung (130), wenn sie zwischen der Ausgabe der Entfernungsdaten und der Ausgabe des Paares aus den Luminanzdaten und den Zeitdaten umschaltet, Daten mit festen Werten ausgibt, die für die Blockoperationen gemeinsam sind.

10. Informationsverarbeitungsvorrichtung (200), mit:

    einem Speicher (270); und
    einer Verarbeitungsschaltung (230),
    wobei die Verarbeitungsschaltung (230)
    von einer Sensorvorrichtung (100) Luminanzdaten, die Verteilungen von Mengen reflektierten Lichts aus einer Szene angeben, wobei das reflektierte Licht in jeweiligen Belichtungsperioden empfangen wird, und Zeitdaten erhält, die Zeitpunkte der jeweiligen Belichtungsperioden angeben,
    die Luminanzdaten und die Zeitdaten in dem Speicher (270) speichert,
    eine Bildverarbeitung an den Luminanzdaten durchführt und
    erste Entfernungsdaten auf der Grundlage der Luminanzdaten nach der Bildverarbeitung und auf der Grundlage der Zeitdaten erzeugt; und
    **dadurch gekennzeichnet, dass**
    die Verarbeitungsschaltung (230) an die Sensorvorrichtung (100) ein Signal sendet, um eine Umschaltung zwischen der Ausgabe der zweiten Entfernungsdaten und der Ausgabe der Luminanzdaten anzufordern, wobei die zweiten Entfernungsdaten in der Sensorvorrichtung (100) auf der Grundlage der Luminanzdaten und der Zeitdaten erzeugt werden.

**11.** Informationsverarbeitungsvorrichtung (200) gemäß Anspruch 10,

wobei die Verarbeitungsschaltung (230)
ferner von der Sensorvorrichtung Identifikationsdaten erhält, die angeben, welche der zweiten Entfernungsdaten und der Luminanzdaten ausgegeben werden, und
die Verarbeitung der von der Sensorvorrichtung ausgegebenen Daten auf der Grundlage der Identifikationsdaten umschaltet.

**12.** Informationsverarbeitungsvorrichtung (200) gemäß Anspruch 10 oder 11,

wobei die Verarbeitungsschaltung (230)
eine eigene Position der Sensorvorrichtung identifiziert und
ein Signal zum Anfordern der Ausgabe der Luminanzdaten an die Sensorvorrichtung (100) überträgt, wenn die eigene Position der Sensorvorrichtung (100) eine vorbestimmte Bedingung erfüllt.

**13.** Informationsverarbeitungsvorrichtung (200) nach Anspruch 10 oder 11,

wobei die Verarbeitungsschaltung (230)
einen Rauschanteil in den Luminanzdaten bestimmt und
ein Signal zur Anforderung der Ausgabe der Luminanzdaten an die Sensorvorrichtung (100) überträgt, wenn der Rauschanteil größer als ein Referenzwert ist.

**14.** Computerprogramm, das einen Computer veranlasst zum:

Bewirken, dass eine Lichtquelle (110) mindestens einmal Licht auf eine Szene einstrahlt;
Bewirken, dass die Lichtempfangseinrichtung (120) in jeder von mehreren Belichtungsperioden reflektiertes Licht empfängt, wobei das reflektierte Licht aus dem ausgestrahlten Licht resultiert;
Erzeugen, auf der Grundlage von Lichtempfangsdaten aus der Lichtempfangseinrichtung (120), von Luminanzdaten, die Verteilungen von Mengen an reflektiertem Licht entsprechend den jeweiligen Belichtungsperioden anzeigen und die zum Erzeugen von Entfernungsdaten für die Szene verwendet werden; und
Ausgeben der Luminanzdaten und von Zeitdaten, die Zeitpunkte der jeweiligen Belichtungsperioden angeben; und
**dadurch gekennzeichnet, dass**
das Computerprogramm den Computer ferner veranlasst zum:

Erzeugen der Entfernungsdaten und
Ausgeben der Entfernungsdaten und die Luminanzdaten durch Umschalten zwischen ihnen.

**15.** Computerprogramm, das einen Computer veranlasst zum:

Erfassen von Luminanzdaten aus einer Sensorvorrichtung (100), die die Verteilung der Mengen an reflektiertem Licht aus einer Szene anzeigen, wobei das reflektierte Licht in jeweiligen Belichtungszeiten empfangen wird, und von Zeitdaten, die die Zeitpunkte der jeweiligen Belichtungszeiten anzeigen;
Aufzeichnen der Luminanzdaten und der Zeitdaten in einem Speicher;
Durchführen einer Bildverarbeitung an den Luminanzdaten; und
Erzeugen erster Entfernungsdaten auf der Grundlage der Luminanzdaten nach der Bildverarbeitung und auf der Grundlage der Zeitdaten; und
**dadurch gekennzeichnet, dass**
das Computerprogramm den Computer ferner veranlasst zum:
Senden eines Signals an die Sensorvorrichtung, um zwischen der Ausgabe der zweiten Entfernungsdaten und der Ausgabe der Luminanzdaten umzuschalten, wobei die zweiten Entfernungsdaten in der Sensorvorrichtung auf der Grundlage der Luminanzdaten und der Zeitdaten erzeugt werden.

**Revendications**

**1.** Dispositif de détection (100) comprenant :

une source de lumière (110) ;

un dispositif de réception de lumière (120) comprenant au moins un élément de réception de lumière qui effectue une conversion photoélectrique ; et

un circuit de traitement (130) qui commande la source de lumière (110) et le dispositif de réception de lumière (120),

dans lequel le circuit de traitement (130)

amène la source de lumière (110) à émettre de la lumière vers une scène au moins une fois,

amène le dispositif de réception de lumière (120) à recevoir de la lumière réfléchie pendant chacune d'une pluralité de périodes d'exposition, la lumière réfléchie étant issue de la lumière émise,

génère, sur la base des données de lumière reçue par le dispositif de réception de lumière (120), des données de luminance qui indiquent des distributions de quantités de lumière réfléchie correspondant aux périodes d'exposition respectives et qui sont utilisées pour générer des données de distance pour la scène, et

délivre en sortie les données de luminance et des données de cadencement indiquant des cadencements des périodes d'exposition respectives ; et

**caractérisé en ce que**

le circuit de traitement (130) en outre

génère les données de distance, et

délivre en sortie les données de distance et les données de luminance par commutation entre elles.

2. Dispositif de détection (100) selon la revendication 1,

dans lequel, conformément à une demande provenant d'un appareil externe (200), le circuit de traitement (130) délivre en sortie les données de distance et les données de luminance par commutation entre elles.

3. Dispositif de détection (100) selon la revendication 1 ou 2,

dans lequel, conformément à un état des données de lumière reçue, le circuit de traitement (130) délivre en sortie les données de distance et les données de luminance par commutation entre elles.

4. Dispositif de détection (100) selon l'une des revendications 1 à 3,

dans lequel le circuit de traitement (130)

calcule une quantité de bruit dans les données de lumière reçue par rapport à au moins l'une des périodes d'exposition,

délivre en sortie les données de luminance lorsque la quantité de bruit dépasse un seuil, et

délivre en sortie les données de distance lorsque la quantité de bruit ne dépasse pas le seuil.

5. Dispositif de détection (100) selon l'une des revendications 1 à 3,

dans lequel le circuit de traitement (130)

calcule une réflectance, en utilisant les données de lumière reçue par rapport à au moins l'une des périodes d'exposition,

délivre en sortie les données de distance lorsque la réflectance dépasse un seuil, et délivre en sortie les données de luminance lorsque la réflectance ne dépasse pas le seuil.

6. Dispositif de détection (100) selon l'une des revendications 1 à 5,

dans lequel le circuit de traitement (130) répète des opérations de trame,

chacune des opérations sur trame comporte les étapes consistant à

amener la source de lumière (110) à émettre de la lumière vers la scène,

amener le dispositif de réception de lumière (120) à générer des données de lumière reçue pour chacune des périodes d'exposition, et

délivrer en sortie au moins l'une sélectionnée parmi le groupe constitué des données de distance et d'une paire des données de luminance et des données de cadencement ; et

dans lequel le circuit de traitement (130) détermine, pour chaque opération sur trame, lesquelles des données de distance et de la paire des données de luminance et des données de cadencement doivent être délivrées en sortie.

7. Dispositif de détection (100) selon la revendication 6,
dans lequel, lorsque les données de luminance ou les données de distance doivent être délivrées en sortie, le circuit de traitement ajoute un identifiant indiquant quelles données parmi les données de luminance et les données de distance sont incorporées et délivre en sortie les données de luminance ou les données de distance.

8. Dispositif de détection (100) selon l'une des revendications 1 à 7,
dans lequel le circuit de traitement (130) délivre en sortie les données de distance et les données de luminance par commutation entre elles pour chacune d'une pluralité de régions incorporées dans la scène.

9. Dispositif de détection (100) selon la revendication 6 ou 7,
dans lequel, lorsque le circuit de traitement (130) commute entre la sortie des données de distance et la sortie de la paire des données de luminance et des données de cadencement, le circuit de traitement délivre en sortie des données de valeurs fixes qui sont communes aux opérations sur trame.

10. Appareil de traitement d'informations (200) comprenant :

une mémoire (270) ; et
un circuit de traitement (230),
dans lequel le circuit de traitement (230)
obtient, auprès d'un dispositif de détection (100), des données de luminance indiquant des distributions de quantités de lumière réfléchie d'une scène, la lumière réfléchie étant reçue durant les périodes d'exposition respectives, et des données de cadencement indiquant des cadencements des périodes d'exposition respectives,
enregistre les données de luminance et les données de cadencement dans la mémoire (270),
effectue un traitement d'image sur les données de luminance, et
génère des premières données de distance, sur la base des données de luminance après le traitement d'image et des données de cadencement ; et
**caractérisé en ce que**
le circuit de traitement (230) transmet, au dispositif de détection (100), un signal pour demander la commutation entre une sortie de secondes données de distance et une sortie des données de luminance, les secondes données de distance étant générées dans le dispositif de détection (100), sur la base des données de luminance et des données de cadencement.

11. Appareil de traitement d'informations (200) selon la revendication 10,

dans lequel le circuit de traitement (230)
obtient en outre, auprès du dispositif de détection, des données d'identification indiquant lesquelles des secondes données de distance et des données de luminance sont délivrées en sortie, et
commute le traitement sur les données délivrées en sortie par le dispositif de détection, sur la base des données d'identification.

12. Appareil de traitement d'informations (200) selon la revendication 10 ou 11, dans lequel le circuit de traitement (230)

identifie une position propre du dispositif de détection, et
transmet, au dispositif de détection (100), un signal pour demander la sortie des données de luminance, lorsque la position propre du dispositif de détection (100) satisfait à une condition prédéterminée.

13. Appareil de traitement d'informations (200) selon la revendication 10 ou 11, dans lequel le circuit de traitement (230)

détermine une quantité de bruit dans les données de luminance, et
transmet, au dispositif de détection (100), un signal pour demander la sortie des données de luminance, lorsque la quantité de bruit est supérieure à une valeur de référence.

14. Programme informatique qui amène un ordinateur à :

amener une source de lumière (110) à émettre de la lumière vers une scène au moins une fois ;
amener le dispositif de réception de lumière (120) à recevoir de la lumière réfléchie pendant chacune d'une pluralité de périodes d'exposition, la lumière réfléchie étant issue de la lumière émise ;

générer, sur la base de données de lumière reçue par le dispositif de réception de lumière (120), des données de luminance qui indiquent des distributions de quantités de lumière réfléchie correspondant aux périodes d'exposition respectives et qui sont utilisées pour générer des données de distance pour la scène ; et

délivrer en sortie les données de luminance et des données de cadencement indiquant des cadencements des périodes d'exposition respectives ; et

**caractérisé en ce que**

le programme informatique amène en outre l'ordinateur à :

générer les données de distance, et

délivrer en sortie les données de distance et les données de luminance par commutation entre elles.

**15.** Programme informatique qui amène un ordinateur à :

obtenir, auprès d'un dispositif de détection (100), des données de luminance indiquant des distributions de quantités de lumière réfléchie par une scène, la lumière réfléchie étant reçue pendant des périodes d'exposition respectives, et des données de cadencement indiquant des cadencements des périodes d'exposition respectives ;

enregistrer les données de luminance et les données de cadencement dans une mémoire ;

effectuer un traitement d'image sur les données de luminance ; et

générer des premières données de distance, sur la base des données de luminance après le traitement d'image et des données de cadencement ; et

**caractérisé en ce que**

le programme informatique amène en outre l'ordinateur à :

transmettre, au dispositif de détection, un signal pour demander la commutation entre une sortie de secondes données de distance et une sortie des données de luminance,

les secondes données de distance étant générées dans le dispositif de détection, sur la base des données de luminance et des données de cadencement.

# FIG. 1

(a) PROJECTION

(b) REFLECTED LIGHT

(c) EXPOSURE PERIOD 1

(d) EXPOSURE PERIOD 2

(e) EXPOSURE PERIOD 3

# FIG. 2

(a) PROJECTION

(b) REFLECTED LIGHT

(c) EXPOSURE PERIOD 1

(d) EXPOSURE PERIOD 2

(e) EXPOSURE PERIOD 3

# FIG. 3

A0

A1

A2

DISTANCE IMAGE

# FIG. 4A

# FIG. 4B

# FIG. 5

```
                        ( START )
                            │
                            ▼
S1120        yes    ◇ IS END SIGNAL INPUT? ◇◄─────────┐
          ┌─────────                                   │
          │                 │ no                        │
          │                 ▼                            │
          │   S1130   ┌─────────────────┐                │
          │           │ RELEASE SHUTTER │                │
          │           └─────────────────┘                │
          │                 │                            │
          │                 ▼◄──────────────────┐         │
S1140     │    yes    ◇   ARE ALL        ◇       │         │
          │  ┌───────  EXPOSURE PERIODS          │         │
          │  │            FINISHED?              │         │
          │  │              │ no                 │         │
          │  │              ▼                    │         │
          │  │  S1150 ┌──────────────────────┐   │         │
          │  │        │ SELECT EXPOSURE PERIOD│  │         │
          │  │        └──────────────────────┘   │         │
          │  │              │                     │         │
          │  │              ▼                     │         │
          │  │  S1160 ┌──────────────────┐        │         │
          │  │        │  PROJECT LIGHT   │────────┘         │
          │  │        │ AND RECEIVE LIGHT│                  │
          │  │        └──────────────────┘                  │
          │  │              │                                │
          │  └──────────────┤                                │
          │                 ▼                                │
          │     S1170 ┌───────────────┐                      │
          │           │ CLOSE SHUTTER │                      │
          │           └───────────────┘                      │
          │                 │                                │
          │                 ▼                                │
          │     S1180 ┌──────────────────┐                   │
          │           │ PERFORM READOUT  │                   │
          │           │ AND CLEAR CHARGE │                   │
          │           └──────────────────┘                   │
          │                 │                                │
          │                 ▼                                │
          │     S1190 ┌──────────────────────┐               │
          │           │ GENERATE OUTPUT DATA │               │
          │           └──────────────────────┘               │
          │                 │                                │
          │                 └────────────────────────────────┘
          ▼
      ( END )
```

# FIG. 6

PROJECTION

EXPOSURE

A0    A1    A2

SHUTTER
RELEASE

READOUT

CHARGE
ACCUMULATOR
SWITCHING

CHARGE
ACCUMULATOR
SWITCHING

CHARGE
ACCUMULATOR
SWITCHING

# FIG. 7A

POSITION : (x1,y1,z1)
DIRECTION : (X1, Y1, Z1)
ANGLE OF VIEW : (w1, h1)
PIXEL ARRANGEMENT : $m \times n$
EXPOSURE PERIOD A0 : (0,80)
EXPOSURE PERIOD A1 : (81,160)
EXPOSURE PERIOD A2 : (161,240)

DATE : YYYY-MM-DD
TIME : hh0:mm0:ss0:ms0:μs0
A0 IMAGE : $I_{11}$, $I_{12}$, $\cdots$ $I_{ij}$, $\cdots$ $I_{mn}$
A1 IMAGE : $I_{11}$, $I_{12}$, $\cdots$ $I_{ij}$, $\cdots$ $I_{mn}$
A2 IMAGE : $I_{11}$, $I_{12}$, $\cdots$ $I_{ij}$, $\cdots$ $I_{mn}$
. . .

# FIG. 7B

FIXED VALUES

| POSITION 3 byte | DIRECTION 3 byte | ANGLE OF VIEW 2 byte | PIXEL ARRANGEMENT 1 byte | EXPOSURE PERIOD A0 1 byte | EXPOSURE PERIOD A1 1 byte | EXPOSURE PERIOD A2 1 byte |
|---|---|---|---|---|---|---|

VARIABLE VALUES

FRAME 1

| DATE 1 byte | TIME 5 byte | A0 LUMINANCE 1 byte | • • • | A0 LUMINANCE 1 byte | A1 LUMINANCE 1 byte | • • • | A1 LUMINANCE 1 byte | A2 LUMINANCE 1 byte | • • • | A2 LUMINANCE 1 byte |
|---|---|---|---|---|---|---|---|---|---|---|

NUMBER OF PIXELS          NUMBER OF PIXELS          NUMBER OF PIXELS

FRAME 2

| DATE 1 byte | TIME 5 byte | A0 LUMINANCE 1 byte | • • • | A0 LUMINANCE 1 byte | A1 LUMINANCE 1 byte | • • • | A1 LUMINANCE 1 byte | A2 LUMINANCE 1 byte | • • • | A2 LUMINANCE 1 byte |
|---|---|---|---|---|---|---|---|---|---|---|

# FIG. 8

```
                    ( START )
                        │
                        ▼ ◄──────────┐
  S2120                                │
        yes  ◄──────◇ IS END SIGNAL INPUT? ◇──┘
                        │ no
  S2130                 ▼
             ◇ IS DATA INPUT? ◇──── no
                        │ yes
  S2140 ──── │ PREPROCESSING │
                        │
  S2150 ──── │ CALCULATE DISTANCES │
                        │
  S2160 ──── │ CALCULATE REFLECTANCES │
                        │
  S2170 ──── │ CONVERT COORDINATES │
                        │
  S2180 ──── │ EXTRACT OBJECTS
                RECOGNIZE OBJECTS │
                        │
  S2190 ──── │ DETERMINE OPERATION │
                        │
  S2200 ──── │ OUTPUT CONTROL SIGNAL │

  ( END )
```

# FIG. 9

| DISTANCE (m) | PIXEL VALUES FOR 100% REFLECTION |
|---|---|
| 0.1 | I1 |
| 0.2 | I2 |
| 0.3 | I3 |
| . | . |
| . | . |
| . | . |

## FIG. 10

## FIG. 11A

# FIG. 11B

# FIG. 11C

# FIG. 12

| TIME ID | TIME |
|---|---|
| t000<br>t001<br>t002<br>.<br>.<br>. | $hh_0{:}mm_0{:}ss_0{:}ms_0{:}\mu s_0$<br>$hh_1{:}mm_1{:}ss_1{:}ms_1{:}\mu s_1$<br>$hh_2{:}mm_2{:}ss_2{:}ms_2{:}\mu s_2$<br>.<br>.<br>. |

| PIXEL | A0 | | A1 | | A2 | |
|---|---|---|---|---|---|---|
| | CHARGE | TIME ID | CHARGE | TIME ID | CHARGE | TIME ID |
| (x0, y0)<br>(x0, y1)<br>.<br>.<br>. | q000<br>q001<br>.<br>.<br>. | t000<br>t001<br>.<br>.<br>. | q100<br>q101 | t100<br>t101 | q200<br>q201 | t200<br>t201 |

# FIG. 13

START

S1120 — IS END SIGNAL INPUT?
yes / no

S3110 — ARE ALL PROJECTION DIRECTIONS FINISHED?
yes / no

S3120 — DETERMINE PROJECTION DIRECTION

S1130 — RELEASE SHUTTER

S1140 — ARE ALL EXPOSURE PERIODS FINISHED?
yes / no

S1150 — SELECT EXPOSURE PERIOD

S1160 — PROJECT LIGHT AND RECEIVE LIGHT

S1170 — CLOSE SHUTTER

S3130 — PERFORM READOUT AND RECORDING

S1190 — GENERATE OUTPUT DATA

END

## FIG. 14A

POSITION : (x1,y1,z1)
DIRECTION : (X1, Y1, Z1)
ANGLE OF VIEW : (w1, h1)
PIXEL ARRANGEMENT : m × n
NUMBER OF PROJECTION DIRECTIONS : N
EXPOSURE PERIOD A0 : (0,80)
EXPOSURE PERIOD A1 : (81,160)
EXPOSURE PERIOD A2 : (161,240)

DATE : YYYY-MM-DD
TIME T0 : hh0:mm0:ss0:ms0:μs0
TIME T1 : hh1:mm1:ss1:ms1:μs1
...
TIME T(3N−1): $hh_{3N-1}:mm_{3N-1}:ss_{3N-1}:ms_{3N-1}:\mu s_{3N-1}$
A0 IMAGE : $(I_{11},T0)$, $(I_{12},T0)$ , $\cdots (I_{ij},Tk)$, $\cdots (I_{mn},T(N-1))$
A1 IMAGE : $(I_{11},TN)$, $(I_{12},TN)$ , $\cdots (I_{ij},Tp)$, $\cdots (I_{mn},T(2N-1))$
A2 IMAGE : $(I_{11},T2N)$, $(I_{12},T2N)$ , $\cdots (I_{ij},Ts)$, $\cdots (I_{mn},T(3N-1))$
...

## FIG. 14B

FIXED VALUES

| POSITION 3 byte | DIRECTION 3 byte | ANGLE OF VIEW 2 byte | PIXEL ARRANGEMENT 1 byte | NUMBER OF DIRECTIONS 1 byte | EXPOSURE PERIOD A0 1 byte | EXPOSURE PERIOD A1 1 byte | EXPOSURE PERIOD A2 1 byte |
|---|---|---|---|---|---|---|---|

VARIABLE VALUES

FRAME 1

| DATE 1 byte | TIME T0 5 byte | ... | TIME T3N-1 5 byte | A0 LUMINANCE 1 byte | TIME ID 1 byte | | A0 LUMINANCE 1 byte | TIME ID 1 byte | A1 LUMINANCE 1 byte | TIME ID 1 byte | ... |
|---|---|---|---|---|---|---|---|---|---|---|---|

"NUMBER OF DIRECTIONS" × "NUMBER OF EXPOSURE PERIODS"    NUMBER OF PIXELS    NUMBER OF PIXELS

| ... | A1 LUMINANCE 1 byte | TIME ID 1 byte | A2 LUMINANCE 1 byte | TIME ID 1 byte | ... | A2 LUMINANCE 1 byte | TIME ID 1 byte |
|---|---|---|---|---|---|---|---|

NUMBER OF PIXELS    NUMBER OF PIXELS

FRAME 2

| DATE 1 byte | TIME T0 5 byte | ... | TIME T3N-1 5 byte | A0 LUMINANCE 1 byte | TIME ID 1 byte | ... | A0 LUMINANCE 1 byte | TIME ID 1 byte | A1 LUMINANCE 1 byte | TIME ID 1 byte | ... |
|---|---|---|---|---|---|---|---|---|---|---|---|---|

| ... | A1 LUMINANCE 1 byte | TIME ID 1 byte | A2 LUMINANCE 1 byte | TIME ID 1 byte | ... | A2 LUMINANCE 1 byte | TIME ID 1 byte |
|---|---|---|---|---|---|---|---|

## FIG. 15A

POSITION : (x1,y1,z1)
DIRECTION : (X1, Y1, Z1)
ANGLE OF VIEW : (w1, h1)
PIXEL ARRANGEMENT : m × n
NUMBER OF PROJECTION DIRECTIONS : N
EXPOSURE PERIOD A0 : (0,80)
EXPOSURE PERIOD A1 : (81,160)
EXPOSURE PERIOD A2 : (161,240)

DATE : YYYY-MM-DD
BLOCK REGION B0 : (x01,y01),(x02,y02)
BLOCK REGION B1 : (x01,y01),(x02,y02)
...
BLOCK REGION B(N−1) : (x01,y01),(x02,y02)
TIME T0 : hh0:mm0:ss0:ms0:μs0
TIME T1 : hh1:mm1:ss1:ms1:μs1
...
TIME T(3N−1) : $hh_{3N-1}$:$mm_{3N-1}$:$ss_{3N-1}$:$ms_{3N-1}$:$\mu s_{3N-1}$
A0 IMAGE : $I_{11}$, $I_{12}$, ⋯ $I_{ij}$, ⋯ $I_{mn}$
A1 IMAGE : $I_{11}$, $I_{12}$, ⋯ $I_{ij}$, ⋯ $I_{mn}$
A2 IMAGE : $I_{11}$, $I_{12}$, ⋯ $I_{ij}$, ⋯ $I_{mn}$
...

## FIG. 15B

FIXED VALUES

| POSITION 3 byte | DIRECTION 3 byte | ANGLE OF VIEW 2 byte | PIXEL ARRANGEMENT 1 byte | NUMBER OF DIRECTIONS 1 byte | EXPOSURE PERIOD A0 1 byte | EXPOSURE PERIOD A1 1 byte | EXPOSURE PERIOD A2 1 byte |
|---|---|---|---|---|---|---|---|

VARIABLE VALUES

FRAME 1

| DATE 1 byte | REGION B0 4 byte | ⋯ | REGION BN−1 4 byte | TIME T0 5 byte | ⋯ | TIME T3N−1 5 byte | A0 LUMINANCE 1 byte | ⋯ | A0 LUMINANCE 1 byte | A1 LUMINANCE 1 byte | ⋯ | A1 LUMINANCE 1 byte | A1 LUMINANCE 1 byte | ⋯ | A1 LUMINANCE 1 byte |
|---|---|---|---|---|---|---|---|---|---|---|---|---|---|---|---|

NUMBER OF DIRECTIONS    "NUMBER OF DIRECTIONS" × "NUMBER OF EXPOSURE PERIODS"    NUMBER OF PIXELS    NUMBER OF PIXELS    NUMBER OF PIXELS

FRAME 2

| DATE 1 byte | REGION B0 4 byte | ⋯ | REGION BN−1 4 byte | TIME T0 5 byte | ⋯ | TIME T3N−1 5 byte | A0 LUMINANCE 1 byte | ⋯ | A0 LUMINANCE 1 byte | A1 LUMINANCE 1 byte | ⋯ | A1 LUMINANCE 1 byte | A1 LUMINANCE 1 byte | ⋯ | A1 LUMINANCE 1 byte |
|---|---|---|---|---|---|---|---|---|---|---|---|---|---|---|---|

## FIG. 16A

```
POSITION : (x1,y1,z1)
DIRECTION : (X1, Y1, Z1)
RANGE : xxx
NUMBER OF PROJECTION DIRECTIONS : N
EXPOSURE PERIOD A0 : (0,80)
EXPOSURE PERIOD A1 : (81,160)
EXPOSURE PERIOD A2 : (161,240)

DATE : YYYY-MM-DD
```

A0 IMAGE : $(I_0, t_0)$, $(I_1, t_2)$, $\cdots$ $(I_{N-1}, t_{N-1})$
A1 IMAGE : $(I_0, t_N)$, $(I_1, t_{N+1})$, $\cdots$ $(I_{N-1}, t_{2N-1})$
A2 IMAGE : $(I_0, t_{2N})$, $(I_1, t_{2N+1})$, $\cdots$ $(I_{N-1}, t_{3N-1})$
. . .

## FIG. 16B

# FIG. 17A

POSITION : (x1,y1,z1)
DIRECTION : (X1, Y1, Z1)
RANGE : xxx
NUMBER OF PROJECTION DIRECTIONS : N
EXPOSURE PERIOD A0 : (0,80)
EXPOSURE PERIOD A1 : (81,160)
EXPOSURE PERIOD A2 : (161,240)

DATE : YYYY-MM-DD
TIME : T0, T1,··· T3N-1
A0 IMAGE : $I_1$, $I_2$, ··· $I_i$, ··· $I_n$
A1 IMAGE : $I_1$, $I_2$, ··· $I_i$, ··· $I_n$
A2 IMAGE : $I_1$, $I_2$, ··· $I_i$, ··· $I_n$
...

# FIG. 17B

FIXED VALUES

| POSITION 3 byte | DIRECTION 3 byte | RANGE 2 byte | NUMBER OF DIRECTIONS 1 byte | EXPOSURE PERIOD A0 1 byte | EXPOSURE PERIOD A1 1 byte | EXPOSURE PERIOD A2 1 byte |
|---|---|---|---|---|---|---|

VARIABLE VALUES

FRAME 1

| DATE 1 byte | TIME T0 5 byte | ... | TIME T3N-1 5 byte | A0 LUMINANCE 1 byte | ... | A0 LUMINANCE 1 byte | A1 LUMINANCE 1 byte | ... | A1 LUMINANCE 1 byte | A2 LUMINANCE 1 byte | ... | A2 LUMINANCE 1 byte |
|---|---|---|---|---|---|---|---|---|---|---|---|---|

"NUMBER OF DIRECTIONS" X "NUMBER OF EXPOSURE PERIODS"    NUMBER OF DIRECTIONS    NUMBER OF DIRECTIONS    NUMBER OF DIRECTIONS

FRAME 2

| DATE 1 byte | TIME T0 5 byte | ... | TIME T3N-1 5 byte | A0 LUMINANCE 1 byte | ... | A0 LUMINANCE 1 byte | A1 LUMINANCE 1 byte | ... | A1 LUMINANCE 1 byte | A2 LUMINANCE 1 byte | ... | A2 LUMINANCE 1 byte |
|---|---|---|---|---|---|---|---|---|---|---|---|---|

# FIG. 18

## FIG. 19

START

S1120 — IS END SIGNAL INPUT?
yes
no

S1130 — RELEASE SHUTTER

S1140 — ARE ALL EXPOSURE PERIODS FINISHED?
yes
no

S1170 — CLOSE SHUTTER

S1150 — SELECT EXPOSURE PERIOD

S1180 — PERFORM READOUT AND CLEAR CHARGE

PROJECT LIGHT AND RECEIVE LIGHT — S1160

S4110 — IS RAW-DATA REQUEST RECEIVED?
yes
no

S4120 — CALCULATE DISTANCES

S4130 — GENERATE OUTPUT DATA (DISTANCE DATA)

GENERATE OUTPUT DATA (RAW DATA) — S4140

S4150 — OUTPUT

END

## FIG. 20A

DATA FORMAT : DISTANCE IMAGE
POSITION : (x1,y1,z1)
DIRECTION : (X1, Y1, Z1)
ANGLE OF VIEW : (w1, h1)
PIXEL ARRANGEMENT : m × n

DATE : YYYY-MM-DD
TIME : hh0:mm0:ss0:ms0:μs0
DISTANCE IMAGE : $I_{11}$, $I_{12}$, $\cdots I_{ij}$, $\cdots I_{mn}$
...

# FIG. 20B

FIXED VALUES

| FORMAT 1 byte | POSITION 3 byte | DIRECTION 3 byte | ANGLE OF VIEW 2 byte | PIXEL ARRANGEMENT 1 byte |
|---|---|---|---|---|

VARIABLE VALUES

FRAME 1

| DATE 1 byte | TIME 5 byte | PIXEL VALUE 1 byte | ... | PIXEL VALUE 1 byte |
|---|---|---|---|---|

NUMBER OF PIXELS

FRAME 2

| DATE 1 byte | TIME 5 byte | PIXEL VALUE 1 byte | ... | PIXEL VALUE 1 byte |
|---|---|---|---|---|

# FIG. 21A

DATA FORMAT : LUMINANCE IMAGE
POSITION : (x1,y1,z1)
DIRECTION : (X1, Y1, Z1)
ANGLE OF VIEW : (w1, h1)
PIXEL ARRANGEMENT : m × n
EXPOSURE PERIOD A0 : (0,80)
EXPOSURE PERIOD A1 : (81,160)
EXPOSURE PERIOD A2 : (161,240)

DATE : YYYY-MM-DD
TIME : hh0:mm0:ss0:ms0:μs0
A0 LUMINANCE : $I_{11}$, $I_{12}$, $\cdots$ $I_{ij}$, $\cdots$ $I_{mn}$
A1 LUMINANCE : $I_{11}$, $I_{12}$, $\cdots$ $I_{ij}$, $\cdots$ $I_{mn}$
A2 LUMINANCE : $I_{11}$, $I_{12}$, $\cdots$ $I_{ij}$, $\cdots$ $I_{mn}$
...

# FIG. 21B

# FIG. 22A

DATA FORMAT : LUMINANCE IMAGE
POSITION : $(x1, y1, z1)$
DIRECTION : $(X1, Y1, Z1)$
ANGLE OF VIEW : $(w1, h1)$
PIXEL ARRANGEMENT : $m \times n$
EXPOSURE PERIOD A0 : $(0, 80)$
EXPOSURE PERIOD A1 : $(81, 160)$
EXPOSURE PERIOD A2 : $(161, 240)$
LARGEST VALUE : $v_{0.1}, \ v_{0.2}, \ \cdots \ v_k, \ \cdots \ v_{50}$

DATE : YYYY-MM-DD
TIME : $hh0{:}mm0{:}ss0{:}ms0{:}\mu s0$
A0 LUMINANCE : $I_{11}, \ I_{12}, \ \cdots \ I_{ij}, \ \cdots \ I_{mn}$
A1 LUMINANCE : $I_{11}, \ I_{12}, \ \cdots \ I_{ij}, \ \cdots \ I_{mn}$
A2 LUMINANCE : $I_{11}, \ I_{12}, \ \cdots \ I_{ij}, \ \cdots \ I_{mn}$
· · ·

## FIG. 22B

FIXED VALUES

| FORMAT 1 byte | POSITION 3 byte | DIRECTION 3 byte | ANGLE OF VIEW 2 byte | PIXEL ARRANGEMENT 1 byte | EXPOSURE PERIOD A0 1 byte | EXPOSURE PERIOD A1 1 byte | EXPOSURE PERIOD A2 1 byte | LARGEST VALUE 1 byte | ··· | LARGEST VALUE 1 byte |

NUMBER OF DISTANCES

VARIABLE VALUES

FRAME 1

| DATE 1 byte | TIME 5 byte | A0 LUMINANCE 1 byte | ··· | A0 LUMINANCE 1 byte | A1 LUMINANCE 1 byte | ··· | A1 LUMINANCE 1 byte | A2 LUMINANCE 1 byte | ··· | A2 LUMINANCE 1 byte |

FRAME 2

| DATE 1 byte | TIME 5 byte | A0 LUMINANCE 1 byte | ··· | A0 LUMINANCE 1 byte | A1 LUMINANCE 1 byte | ··· | A1 LUMINANCE 1 byte | A2 LUMINANCE 1 byte | ··· | A2 LUMINANCE 1 byte |

# FIG. 23

START

S2120 — IS END SIGNAL INPUT? — yes

no

S2130 — IS DATA INPUT? — no

yes

S5110 — RAW DATA? — no

yes

S2140 — PREPROCESSING

S2150 — CALCULATE DISTANCES

S2160 — CALCULATE REFLECTANCES

S2170 — CONVERT COORDINATES

S5120 — ESTIMATE SELF-POSITION

S5130 — IS SELF-POSITION IN SPECIFIED REGION? — no

yes

S5140 — OUTPUT RAW-DATA REQUEST SIGNAL

S2180 — EXTRACT OBJECTS RECOGNIZE OBJECTS

S2190 — GENERATE OPERATION

S2200 — OUTPUT CONTROL SIGNAL

END

# FIG. 24

# FIG. 25

START

S1120 — yes IS END SIGNAL INPUT?

no

S1130 — RELEASE SHUTTER

S1140 — yes ARE ALL EXPOSURE PERIODS FINISHED?

no

S1150 — SELECT EXPOSURE PERIOD

PROJECT LIGHT AND RECEIVE LIGHT — S1160

S1170 — CLOSE SHUTTER

S1180 — PERFORM READOUT AND CLEAR CHARGE

S6110 — CALCULATE NOISE

S6120 — IS NOISE EXCESSIVE? — yes

no

S4120 — CALCULATE DISTANCES

S4130 — GENERATE OUTPUT DATA (DISTANCE DATA)

GENERATE OUTPUT DATA (RAW DATA) — S4140

S4150 — OUTPUT

END

# FIG. 26

| yyyy.mm.dd. hh:mm:ss.ssssss | | | | | |
|---|---|---|---|---|---|
| REGION ID | REGION | | | | |
| r01<br>r02<br>⋮ | (x, y) (x, y)<br>(x, y) (x, y)<br>⋮ | | | | |
| PIXEL | REGION ID | DISTANCE | A0 LUMINANCE | A1 LUMINANCE | A2 LUMINANCE |
| (x, y)<br>(x, y)<br>⋮<br>(x, y)<br>⋮ | r01<br>r01<br>⋮<br>r02<br>⋮ | d<br>d<br>⋮<br>—<br>⋮ | —<br>—<br>⋮<br>v<br>⋮ | —<br>—<br>⋮<br>v<br>⋮ | —<br>—<br>⋮<br>v<br>⋮ |

# FIG. 27

```
                              ( START )
                                  │
         S1120                    ▼
    yes ┌──────────────────────────────────┐
◄───────┤        IS END SIGNAL INPUT?       │
        └──────────────────────────────────┘
                                  │ no
         S1130                    ▼
                        ┌──────────────────┐
                        │  RELEASE SHUTTER │
                        └──────────────────┘
                                  │
         S1140                    ▼
        yes ┌──────────────────────────────────┐
    ◄───────┤          ARE ALL                 │
            │     EXPOSURE PERIODS             │
            │        FINISHED?                 │
            └──────────────────────────────────┘
                                  │ no
                                  ▼
                    ┌──────────────────────────┐  1150
                    │   SELECT EXPOSURE PERIOD │
                    └──────────────────────────┘
                                  │
                                  ▼
              ┌──────────────────────────────────┐  1160
              │  PROJECT LIGHT AND RECEIVE LIGHT │
              └──────────────────────────────────┘

S1170   ┌──────────────────┐
        │  CLOSE SHUTTER   │
        └──────────────────┘
                │
S1180   ┌──────────────────┐
        │ PERFORM READOUT  │
        │ AND CLEAR CHARGE │
        └──────────────────┘
                │
S7110   ┌──────────────────┐
        │ DIVIDE INTO REGIONS │
        └──────────────────┘
                │
S7120           ▼
   yes ┌──────────────────────────┐
◄──────┤        ARE ALL           │
       │   REGIONS FINISHED?      │
       └──────────────────────────┘
                │ no
S7130   ┌──────────────────┐
        │  SELECT REGION   │
        └──────────────────┘
                │
S7140           ▼
       ┌──────────────────────────┐  yes
       │      IS THERE            ├──────►
       │  RAW-DATA REQUEST?       │
       └──────────────────────────┘
                │ no
S7150   ┌──────────────────────┐
        │  CALCULATE DISTANCES │
        └──────────────────────┘
                │
S7160   ┌──────────────┐
        │    RECORD    │
        └──────────────┘

S7170   ┌──────────────┐
        │    OUTPUT    │
        └──────────────┘

( END )
```

# FIG. 28

| TIME ID | TIME |
|---|---|
| tA001<br>tA101<br>⋮ | yyyy.mm.dd. Hh:mm:ss.ssssss<br>yyyy.mm.dd. Hh:mm:ss.ssssss<br>⋮ |

| REGION ID | REGION |
|---|---|
| r01<br>r02<br>⋮ | (x, y) (x, y)<br>(x, y) (x, y)<br>⋮ |

| PIXEL | REGION ID | DISTANCE | A0 | | A1 | | A2 | |
|---|---|---|---|---|---|---|---|---|
| | | | CHARGE | TIME ID | CHARGE | TIME ID | CHARGE | TIME ID |
| (x, y) | r01 | d | v | tA001 | v | tA101 | v | tA201 |
| (x, y) | r01 | d | v | tA001 | v | tA101 | v | tA201 |
| ⋮ | ⋮ | ⋮ | ⋮ | ⋮ | ⋮ | | | |
| (x, y) | r02 | — | v | tA00i | v | | | |

# FIG. 29A

POSITION : (x1,y1,z1)
DIRECTION : (X1, Y1, Z1)
ANGLE OF VIEW : (w1, h1)
PIXEL ARRANGEMENT : m × n
EXPOSURE PERIOD A0 : (0,80)
EXPOSURE PERIOD A1 : (81,160)
EXPOSURE PERIOD A2 : (161,240)

DATE : YYYY-MM-DD
TIME : hh0:mm0:ss0:ms0:µs0
NUMBER OF REGIONS : r
REGION ID : (x, y) (x, y)
REGION ID : (x, y) (x, y)
. . .
NUMBER OF DISTANCE DATA REGIONS : rd
DISTANCE DATA REGION : id, id⋯
NUMBER OF Raw DATA REGIONS : rr
Raw DATA REGION : id, id⋯
DISTANCE REGION DIVIDED IMAGE : $d_{d111}$, $d_{d112}$ ⋯ $d_{d1XY}$
DISTANCE REGION DIVIDED IMAGE : $d_{d211}$, $d_{d212}$ ⋯ $d_{d2XY}$
. . .
A0 REGION DIVIDED IMAGE : $I_{l111}$, $I_{l112}$, ⋯ $I_{l1XY}$
A0 REGION DIVIDED IMAGE : $I_{l211}$, $I_{l212}$, ⋯ $I_{l2XY}$

A1 IMAGE : $I_{l111}$, $I_{l112}$, ⋯ $I_{l1XY}$
A1 IMAGE : $I_{l211}$, $I_{l212}$, ⋯ $I_{l2XY}$
. . .
A2 IMAGE : $I_{l111}$, $I_{l112}$, ⋯ $I_{l1XY}$
A2 IMAGE : $I_{l211}$, $I_{l212}$, ⋯ $I_{l2XY}$
. . .

# FIG. 29B

# FIG. 30

```
                                    ( START )

                        S2120 ⌇
              yes                    < IS END SIGNAL INPUT? >
                                             │ no

                        S2130 ⌇
                                     < IS DATA INPUT? >        no
                                             │ yes

                        S9110 ⌇
              yes                    < ALL REGIONS
                                       COMPLETED? >
                                             │ no

    S2170 ⌇                  S9170 ⌇   S9120 ⌇  [ SELECT REGION ]
   [ CONVERT          [ DISTANCE
     COORDINATES ]      CLUSTERING ]   S9130 ⌇
                                             < DISTANCE DATA? >   yes
    S2180 ⌇                  S9180 ⌇                │ no
   [ EXTRACT OBJECTS
     RECOGNIZE OBJECTS ]  [ SET RAW-DATA REQUEST   S9140 ⌇  [ PREPROCESSING ]
                            FOR CLUSTER-
    S2190 ⌇                 SURROUNDING REGION ]   S9150 ⌇
   [ GENERATE                                           [ CALCULATE
     OPERATION ]            S9190 ⌇                        DISTANCES ]

    S2200 ⌇              [ OUTPUT RAW-DATA         S9160 ⌇
   [ OUTPUT               REQUEST SIGNAL ]             [ RECORD ]
     CONTROL SIGNAL ]


   ( END )
```

# FIG. 31

NUMBER OF REGIONS : r
DATA CODE : 1, 0
REGION RANGE : (x, y) (x, y)
REGION RANGE : (x, y) (x, y)
  :
REGION DATA FORMAT : 1, 1, 0, ⋯

| NUMBER OF REGIONS 1 byte | REGION FRONT-END PIXEL 2 byte | REGION BACK-END PIXEL 2 byte | ⋯ | REGION FRONT-END PIXEL 2 byte | REGION BACK-END PIXEL 2 byte | DATA CODE NUMBER OF REGIONS/ 8 byte |
|---|---|---|---|---|---|---|

NUMBER OF REGIONS

# FIG. 32

# FIG. 33A

POSITION : (x1,y1,z1)
DIRECTION : (X1, Y1, Z1)
ANGLE OF VIEW : (w1, h1)
PIXEL ARRANGEMENT : $m \times n$
EXPOSURE PERIOD A0 : (0,80)
EXPOSURE PERIOD A1 : (81,160)
EXPOSURE PERIOD A2 : (161,240)

DATE : YYYY-MM-DD
TIME : hh0:mm0:ss0:ms0:μs0
DISTANCE IMAGE : $d_{11}$, $d_{12}$ ··· $d_{mn}$
NUMBER OF Raw DATA REGIONS : rr
Raw DATA REGION : (x, y) (x, y) , (x, y) (x, y) , (x, y) (x, y) ···
A0 REGION DIVIDED IMAGE : $I_{I111}$, $I_{I112}$, ··· $I_{I1XY}$
A0 REGION DIVIDED IMAGE : $I_{I211}$, $I_{I212}$, ··· $I_{I2XY}$
···

A1 REGION DIVIDED IMAGE : $I_{I111}$, $I_{I112}$, ··· $I_{I1XY}$
A1 REGION DIVIDED IMAGE : $I_{I211}$, $I_{I212}$, ··· $I_{I2XY}$
···

A2 REGION DIVIDED IMAGE : $I_{I111}$, $I_{I112}$, ··· $I_{I1XY}$
A2 REGION DIVIDED IMAGE : $I_{I211}$, $I_{I212}$, ··· $I_{I2XY}$
···

# FIG. 33B

FIXED VALUES

| POSITION 3 byte | DIRECTION 3 byte | ANGLE OF VIEW 2 byte | PIXEL ARRANGEMENT 1 byte | EXPOSURE PERIOD A0 1 byte | EXPOSURE PERIOD A1 1 byte | EXPOSURE PERIOD A2 1 byte |
|---|---|---|---|---|---|---|

VARIABLE VALUES

FRAME 1

| DATE 1 byte | TIME 5 byte | DISTANCE 1 byte | ... | DISTANCE 1 byte | NUMBER OF Raw DATA REGIONS 1 byte | REGION FRONT-END PIXEL 2 byte | REGION BACK-END PIXEL 2 byte | ... | REGION FRONT-END PIXEL 2 byte | REGION BACK-END PIXEL 2 byte |
|---|---|---|---|---|---|---|---|---|---|---|

NUMBER OF PIXELS

NUMBER OF Raw DATA REGIONS

| A0 LUMINANCE 1 byte | ... | A0 LUMINANCE 1 byte | A1 LUMINANCE 1 byte | ... | A1 LUMINANCE 1 byte | A2 LUMINANCE 1 byte | ... | A2 LUMINANCE 1 byte | ........ |
|---|---|---|---|---|---|---|---|---|---|

NUMBER OF PIXELS IN Raw DATA REGION

NUMBER OF Raw DATA REGIONS

FRAME 2

| DATE 1 byte | TIME 5 byte | DISTANCE 1 byte | ... | DISTANCE 1 byte | NUMBER OF Raw DATA REGIONS 1 byte | REGION FRONT-END PIXEL 2 byte | REGION BACK-END PIXEL 2 byte | ... | REGION FRONT-END PIXEL 2 byte | REGION BACK-END PIXEL 2 byte |
|---|---|---|---|---|---|---|---|---|---|---|

| A0 LUMINANCE 1 byte | ... | A0 LUMINANCE 1 byte | A1 LUMINANCE 1 byte | ... | A1 LUMINANCE 1 byte | A2 LUMINANCE 1 byte | ... | A2 LUMINANCE 1 byte | ........ |
|---|---|---|---|---|---|---|---|---|---|

# FIG. 34

START

S2120 — yes ← IS END SIGNAL INPUT? → no

no

S2130 — IS DATA INPUT? → no

yes

S9310 — yes ← ALL SPECIFIED REGIONS COMPLETED? → no

S2170 — CONVERT COORDINATES

S9170 — DISTANCE CLUSTERING

S9320 — SELECT REGION

S2180 — EXTRACT OBJECTS RECOGNIZE OBJECTS

S9180 — SET RAW-DATA REQUEST FOR CLUSTER-SURROUNDING REGION

S9140 — PREPROCESSING

S9150 — CALCULATE DISTANCES

S2190 — GENERATE OPERATION

S9190 — OUTPUT RAW-DATA REQUEST SIGNAL

S9330 — DISPERSION DECREASED? → no

yes

S2200 — OUTPUT CONTROL SIGNAL

S9340 — MODIFY DISTANCE DATA

END

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009294128 A
- JP 2018185228 A
- JP 2019095452 A
- US 20180217258
- US 2019129034 A1